# FASCICULE DE BREVET EUROPEEN

(11) **EP 3 487 931 B1**
(45) Date de publication et mention de la délivrance du brevet: **20.04.2022**
(21) Numéro de dépôt: 17751802.4
(22) Date de dépôt: 20.07.2017
(51) Int. Cl.: C08L 61/00, B60C 1/00, C08L 7/00, C08L 9/00, C08G 14/06, C08G 16/02

(54) **COMPOSITION DE CAOUTCHOUC À HAUTE RIGIDITÉ**
HOCHFESTE KAUTSCHUKZUSAMMENSETZUNG
HIGH-STRENGTH RUBBER COMPOSITION

(30) Priorité: 21.07.2016 FR 1656980
(43) Date de publication de la demande: 29.05.2019
(73) Titulaire: Compagnie Générale des Etablissements Michelin, 63000 Clermont-Ferrand (FR)
(72) Inventeur: THUILLIEZ, Anne-Lise, 63040 Clermont-Ferrand Cedex 9 (FR); DOISNEAU, David, 63040 Clermont-Ferrand Cedex 9 (FR); GAVARD-LONCHAY, Odile, 63040 Clermont-Ferrand Cedex 9 (FR)
(74) Mandataire: Desbordes, Guillaume
(86) Numéro de dépôt international: PCT/FR2017/051979
(87) Numéro de publication internationale: WO 2018/015668

(56) Documents cités:
- WO-A1-2015/007641
- US-A- 2 776 948
- US-A1- 2011 038 815

## Description

L'invention concerne des compositions de caoutchouc, un procédé de fabrication de ces compositions, des utilisations de composés dans ces compositions, un composite de caoutchouc et un pneumatique.

Il est connu d'utiliser dans certaines parties des pneumatiques, des compositions de caoutchouc présentant une forte rigidité lors de faibles déformations du pneumatique. La résistance aux faibles déformations est une des propriétés que doit présenter un pneumatique pour répondre aux sollicitations auxquelles il est soumis.

Une forte rigidité peut être obtenue en utilisant un système de vulcanisation dit concentré, c'est-à-dire comprenant notamment des taux de soufre et d'accélérateur de vulcanisation relativement élevés.

Toutefois, un tel système de vulcanisation concentré pénalise le vieillissement à cru de la composition. Ainsi, lorsque la composition est sous forme de produit semi-fini, par exemple de bande de gomme, le soufre peut migrer en surface du produit semi-fini. Ce phénomène, appelé effleurissement, entraine une pénalisation du collant à cru du produit semi-fini lors de son stockage prolongé, avec pour conséquence une dégradation de l'adhésion entre les produits semi-finis lors de la fabrication du pneumatique.

Par ailleurs, le stockage de la composition crue contenant un système de vulcanisation concentré est susceptible d'entrainer une diminution de la phase retard de la composition lors de sa vulcanisation, c'est-à-dire le temps précédant le début de la vulcanisation. En conséquence, la composition peut commencer à cuire prématurément dans certains outils de mise en forme et la cinétique de vulcanisation est susceptible d'être modifiée et le rendement de vulcanisation d'être dégradé.

Un tel système de vulcanisation concentré pénalise également le vieillissement à cuit. En effet, on observe une dégradation des propriétés mécaniques de la composition cuite, notamment aux limites, par exemple de l'allongement à rupture.

Une forte rigidité peut autrement être obtenue en augmentant le taux de charge renforçante.

Toutefois, de manière connue, l'augmentation de la rigidité d'une composition de caoutchouc en augmentant le taux de charge peut pénaliser les propriétés d'hystérèse et donc de résistance au roulement des pneumatiques. Or, on cherche toujours à baisser la résistance au roulement des pneumatiques pour diminuer la consommation en carburant et ainsi préserver l'environnement.

Enfin, une rigidité élevée peut être obtenue en incorporant certaines résines renforçantes comme divulgué dans WO 02/10269.

Classiquement l'augmentation de la rigidité est obtenue en incorporant des résines renforçantes à base d'un système accepteur/donneur de méthylène. Les termes « accepteur de méthylène » et « donneur de méthylène » sont bien connus de l'homme du métier et largement utilisés pour designer des composés aptes à réagir ensemble pour générer par condensation une résine renforçante tridimensionnelle qui vient se superposer et s'interpénétrer avec le réseau charge renforçante/élastomère d'une part et, avec le réseau élastomère/soufre d'autre part (si l'agent de réticulation est le soufre). A l'accepteur de méthylène est associé un agent durcisseur, apte à le réticuler ou le durcir, encore appelé communément donneur de méthylène. Des exemples de tels accepteur et donneur de méthylène sont décrits dans WO 02/10269.

Les donneurs de méthylène classiquement utilisés dans les compositions de caoutchouc pour pneumatiques sont l'hexa-méthylènetétramine (en abrégé HMT), ou l'hexamethoxyméthylmélamine (en abrégé HMMM ou H3M), ou l'hexaethoxyméthylmélamine.

Les accepteurs de méthylène classiquement utilisés dans les compositions de caoutchouc pour pneumatiques sont des résines phénoliques précondensées.

Toutefois, la combinaison de résine phénolique classiquement utilisée en tant qu'accepteur de méthylene avec l'HMT ou l'H3M en tant que donneur de méthylène, produit du formaldéhyde au cours de la vulcanisation de la composition de caoutchouc. Or, il est souhaitable de diminuer, voire de supprimer à terme le formaldéhyde des compositions de caoutchouc en raison de l'impact environnemental de ces composés et de l'évolution récente de la réglementation, notamment la réglementation européenne, sur ce type de composé.

On connait également des compositions de caoutchouc comprenant une résine phénol aldéhyde tel que décrit dans WO2015/118042.

L'invention a pour but de fournir une composition de caoutchouc rigidifiée au moyen de composés à faible impact environnemental.

A cet effet, l'invention a pour objet une composition de caoutchouc comprenant au moins une résine à base_:
A1) d'au moins un aldéhyde de formule W : 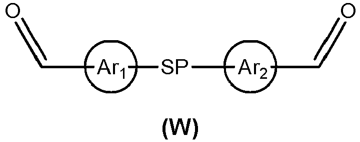 dans laquelle :
   - chaque groupe Ar₁ et Ar₂ représente, indépendamment l'un de l'autre, un noyau aromatique, éventuellement substitué,
   - SP est un groupe de liaison reliant au moins les groupes Ar₁ et Ar₂ entre eux, SP séparant les groupes Ar₁ et Ar₂ par au moins 2 liaisons covalentes ; et
A2) d'au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène.

La dénomination « dérivé de/du polyphénol aromatique» est utilisée en raison de la similitude structurelle existante entre le dérivé de polyphénol aromatique et le polyphénol aromatique correspondant. En effet, le dérivé de polyphénol aromatique présente une structure analogue à celle du polyphénol aromatique correspondant mais dans lequel l'hydrogène d'au moins deux fonctions hydroxyles est remplacé par le radical Z. Ainsi, le dérivé de polyphénol aromatique présente une formule générale (V1) ci-dessous : 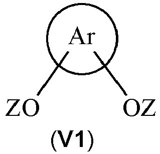 dans laquelle Ar est le noyau aromatique.

De manière inattendue, les Demanderesses ont découvert lors de leurs recherches que l'aldéhyde A1 de la composition selon l'invention permet d'éviter la production de formaldéhyde contrairement aux donneurs de méthylène classiques. Les Demanderesses ont découvert lors de leurs recherches qu'un aldéhyde conforme à la formule W pouvait, avec un polyphénol aromatique, former une résine alternative aux résines renforçantes à base d'un système accepteur/donneur de méthylène

En outre, la combinaison de l'aldéhyde A1 et du polyphénol aromatique A2 selon l'invention permet d'obtenir des compositions de caoutchouc présentant une rigidité à basse déformation équivalente voire supérieure par rapport aux compositions de caoutchouc classiques qui comprennent des donneurs de méthylène HMT ou H3M et par rapport aux compositions de caoutchouc dépourvues de résine renforçante.

Les dérivés des polyphénols aromatiques de la composition selon l'invention permettent également d'éviter une réticulation précoce de la résine. En effet, un problème lié à l'utilisation de certaines résines renforçantes, notamment celle à base du polyphénol aromatique et de l'aldéhyde correspondant comprenant un unique noyau aromatique porteur de deux fonctions aldéhydes, est leur capacité à réticuler de façon précoce. En effet, après l'étape de fabrication de la composition comprenant les constituants de ces résines renforçantes, la composition est mise en forme par exemple par calandrage, par exemple sous la forme d'une feuille, d'une plaque, ou encore extrudée, par exemple pour former un profilé de caoutchouc. Or, en raison de leur capacité à réticuler rapidement, ces résines renforçantes réticulent et rigidifient la composition, ce qui peut gêner la mise en forme de la composition de caoutchouc. Grâce à l'invention, la résine formée à partir de l'aldéhyde A1 et du dérivé de polyphénol aromatique A2 se forme moins rapidement qu'à partir de l'aldéhyde et du polyphénol aromatique correspondant. Cette vitesse de réaction peut être déterminée en mesurant l'évolution du couple rhéométrique en fonction du temps. Cette évolution décrit la rigidification de la composition par suite notamment de la réticulation de la résine. De la comparaison de l'évolution des couples rhéométriques d'une première composition comprenant le dérivé du polyphénol aromatique A2 et l'aldéhyde A1 et d'une deuxième composition comprenant le polyphénol aromatique et l'aldéhyde A1 correspondants, on voit que le dérivé de polyphénol aromatique A2 permet de retarder la réticulation de la résine par rapport à la réaction directe entre le polyphénol aromatique et l'aldéhyde A1.

Les inventeurs à l'origine de l'invention émettent l'hypothèse que le dérivé de polyphénol aromatique A2 est un précurseur du polyphénol aromatique et que ce dernier permet d'éviter une réticulation précoce de la résine en raison du radical Z de chaque groupe -O-Z qui est différent de l'hydrogène. En effet, le radical Z de chaque groupe -O-Z agirait comme un groupe protecteur temporaire permettant, selon l'hypothèse des inventeurs, la formation d'une fonction hydroxyle dans des conditions réactionnelles prédéterminées et donc la formation du polyphénol aromatique correspondant. Les conditions réactionnelles prédéterminées dans lesquelles cette formation est possible dépendent de plusieurs paramètres tels que la pression, la température ou encore les espèces chimiques présentes dans le milieu réactionnel. Ces conditions réactionnelles sont fonction du groupe -O-Z et sont facilement déterminables, voire connues de l'homme du métier. Par exemple, de telles conditions réactionnelles sont le chauffage de la composition de caoutchouc à une température supérieure ou égale à 80°C, de préférence à 100°C et plus préférentiellement à 120°C.

Le groupe -O-Z est tel que la réaction entre le dérivé du polyphénol aromatique A2 et l'aldéhyde A1 permet la réticulation de la résine. De préférence, le groupe -O-Z est tel que la réaction entre le dérivé du polyphénol aromatique et l'aldéhyde A1 permet la réticulation de la résine dans les mêmes conditions réactionnelles, de préférence les mêmes conditions réactionnelles de température, qu'une résine à base du polyphénol aromatique correspondant (comportant des groupes hydroxyles à la place des groupes - O-Z) et du même aldéhyde A1. De façon classique, la température est supérieure ou égale à 120°C, de préférence supérieure ou égale à 140°C.

De plus, la combinaison spécifique de l'aldéhyde A1 et du dérivé de polyphénol aromatique A2 selon l'invention permet d'obtenir des compositions de caoutchouc présentant un excellent maintien de rigidité avec l'augmentation de la température, ce maintien étant largement supérieur à celui de compositions de caoutchouc classiques qui comprennent des donneurs de méthylène HMT ou H3M et à celui des compositions de caoutchouc dépourvues de résine renforçante. Comme déjà expliqué ci-dessus, les inventeurs à l'origine de l'invention émettent l'hypothèse que le dérivé de polyphénol aromatique A2 est un précurseur du polyphénol aromatique correspondant. Comme déjà expliqué ci-dessus, cela permet d'éviter une réticulation immédiate de la résine en raison d'une réaction qui générerait, en différé, la fonction les fonctions hydroxyles à partir du dérivé de polyphénol aromatique A2. En effet, les groupes -O-Z agiraient comme des groupes protecteurs temporaires permettant, selon l'hypothèse des inventeurs, la formation de fonctions hydroxyles dans des conditions réactionnelles prédéterminées (en d'autres termes la régénération du polyphénol aromatique correspondant au dérivé). Le temps mis pour régénérer le polyphénol aromatique, même en étant très court, par exemple de l'ordre de la minute, permettrait une meilleure dispersion de l'aldéhyde A1 et du dérivé de polyphénol aromatique A2 dans le mélange réactionnel ce qui permettrait d'obtenir une résine présentant une réticulation plus homogène et donc une meilleure tenue en température de la résine.

Enfin, grâce à la structure particulière de l'aldéhyde A1, la fluidité de la composition de caoutchouc peut être modulée de façon à rendre cette dernière processable et à permettre sa mise en forme dans des conditions industrielles classiques. Les inventeurs à l'origine de l'invention émettent l'hypothèse que le groupe SP agit comme un groupe assouplissant structurellement l'aldéhyde et donc permettant d'augmenter la fluidité de la composition de caoutchouc. En outre, contrairement aux résines renforçantes de l'état de la technique, l'obtention de cette fluidité n'empêche pas d'obtenir des compositions de caoutchouc présentant une rigidité à basse déformation largement améliorée par rapport aux compositions de caoutchouc classiques. Ainsi, l'invention permet avantageusement d'augmenter la fluidité sans réduire la rigidité, voire même tout en l'augmentant.

Par l'expression « résine à base de », il faut bien entendu comprendre une résine comportant le mélange et/ou le produit de réaction des différents constituants de base utilisés pour la condensation finale de cette résine, certains d'entre eux pouvant être destinés à réagir ou susceptibles de réagir entre eux ou avec leur environnement chimique proche, au moins en partie, lors des différentes phases du procédé de fabrication de la composition, des composites ou du pneumatique, en particulier au cours d'une étape de cuisson. Ainsi les constituants de base sont les réactifs destinés à réagir ensemble lors de la condensation finale de la résine et ne sont pas des réactifs destinés à réagir ensemble pour former ces constituants de base.

Conformément à l'invention, les constituants de base comprennent donc au moins un aldéhyde A1 et au moins un dérivé de polyphénol aromatique A2. Dans un mode de réalisation, les constituants de base peuvent comprendre d'autres constituants additionnels différents de l'aldéhyde A1 et du dérivé de polyphénol aromatique A2. Dans un autre mode de réalisation, les constituants de base sont constitués d'au moins un aldéhyde A1 et d'au moins un dérivé de polyphénol aromatique A2.

De préférence, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexa-méthylènetétramine (HMT), l'hexamethoxyméthylmélamine (H3M), l'hexaethoxyméthylmélamine, le chlorure de lauryloxyméthylpyridinium, le chlorure d'éthoxyméthylpyridinium, des polymères d'hexaméthoxyméthylmélamine de trioxanne de formaldéhyde, l'hexakis(méthoxyméthyl)mélamine, la N,N',N"-triméthyl/-N,N',N"-triméthylolmélamine, l'hexaméthylolmélamine, la N-méthylolmélamine, la N,N'-diméthylolmélamine, la N,N',N"-tris(méthoxyméthyl)mélamine, la N,N',N"-tributyl-N,N',N"-triméthylolmélamine. Plus avantageusement, ces autres constituants additionnels sont dépourvus de formaldéhyde et dépourvus des donneurs de méthylène décrits dans ce paragraphe.

Plus préférentiellement, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexaméthylènetétramine, l'hexaéthoxyméthylmélamine, l'hexaméthoxyméthylmélamine, le chlorure de lauryloxyméthylpyridinium, le chlorure d'éthoxyméthylpyridinium, l'hexaméthoxyméthylmélamine de trioxanne et les oxyméthylmélamines N-substituées répondant à la formule générale: 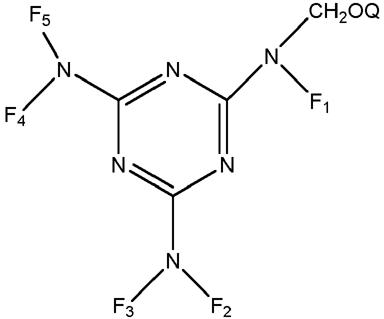 dans laquelle Q représente un groupe alkyle contenant de 1 à 8 atomes de carbone; F₁, F₂, F₃, F₄ et F₅ sont choisis, indépendamment l'un de l'autre, parmi le groupe constitué par un atome d'hydrogène, par un groupe alkyle contenant de 1 à 8 atomes de carbone, par le groupe -CH2OQ et leurs produits de condensation. Plus avantageusement, ces autres constituants additionnels sont dépourvus de formaldéhyde et dépourvus des donneurs de méthylène décrits dans ce paragraphe.

Encore plus préférentiellement, dans le mode de réalisation où les constituants de base comprennent d'autres constituants additionnels, ces autres constituants additionnels sont dépourvus de formaldéhyde et/ou dépourvus de donneur de méthylène. Plus avantageusement, ces autres constituants additionnels sont dépourvus de formaldéhyde et dépourvus des donneurs de méthylène.

Par dépourvu de formaldéhyde ou dépourvu de donneur de méthylène, on entend que le taux massique total du formaldéhyde ou du ou des donneurs de méthylène appartenant aux groupes décrits ci-dessus en poids total du ou des aldéhydes A1 dans les constituants de base est inférieur ou égal à 10%, de préférence à 5%, plus préférentiellement à 2% et encore plus préférentiellement à 1%.

Par dépourvu de formaldéhyde et dépourvu de donneur de méthylène, on entend que le taux massique total du formaldéhyde et du ou des donneurs de méthylène appartenant aux groupes décrits ci-dessus en poids total du ou des aldéhydes A1 dans les constituants de base est inférieur ou égal à 10%, de préférence à 5%, plus préférentiellement à 2% et encore plus préférentiellement à 1%.

Par "position méta l'un par rapport à l'autre", on entendra que les groupes visés, par exemple les groupes -O-Z dans le polyphénol aromatique, sont portés par des carbones du noyau aromatique séparés l'un de l'autre par un unique autre carbone du noyau aromatique.

Par "position para l'une par rapport à l'autre", on entendra que les groupes visés sont à l'opposé l'un de l'autre, c'est-à-dire en positions 1 et 4 du noyau aromatique à 6 chaînons. De façon analogue, "la position para" par rapport à un groupe est une position opposée au groupe sur le noyau aromatique à 6 chaînons portant le groupe.

Par "en position ortho d'un groupe", on entendra la position occupée par le carbone du noyau aromatique immédiatement adjacent au carbone du noyau aromatique portant le groupe. De façon analogue, "la position ortho" par rapport à un groupe est la position adjacente au groupe sur le noyau aromatique portant le groupe.

Par "chaînon" d'un noyau, on entendra un atome constitutif du squelette du noyau. Ainsi, par exemple, un noyau benzénique comprend six chaînons, chaque chaînon étant constitué par un atome de carbone. Dans un autre exemple, un noyau furanique comprend cinq chaînons, quatre chaînons étant chacun constitué par un atome de carbone et le chaînon restant étant constitué par un atome d'oxygène.

L' « aldéhyde A1 » désigne, dans le cadre de l'invention, l'aldéhyde défini au paragraphe I.1. Ce composé sera également désigné « aldéhyde A1 »

Le « dérivé de polyphénol aromatique A2 » désigne, dans le cadre de l'invention, le dérivé de polyphénol aromatique défini au paragraphe I.2. Ce composé sera également désigné « dérivé de polyphénol aromatique A2 ».

Conformément à la désignation « polyphénol aromatique », le noyau aromatique porteur d'au moins deux fonctions hydroxyle en position méta l'une par rapport à l'autre, les deux positions ortho d'au moins une des fonctions hydroxyle étant non substituées est un noyau benzénique.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

La composition de caoutchouc comprend donc au moins une (c'est-à-dire une ou plusieurs) résine; cette résine étant à base d'au moins un (c'est-à-dire un ou plusieurs) aldéhyde A1 et au moins un (c'est-à-dire un ou plusieurs) dérivé de polyphénol aromatique A2, constituants qui vont être décrits en détail ci-après.

De préférence, le dérivé du polyphénol aromatique est obtenu par un procédé de fabrication dans lequel on fait réagir :
- un polyphénol aromatique comprenant au moins un noyau aromatique porteur d'au moins deux fonctions hydroxyles -OH en position méta l'une par rapport à l'autre, les deux positions ortho d'au moins une des fonctions hydroxyles -OH étant non substituées, et
- un composé permettant de former le groupe -O-Z à partir de chaque fonction hydroxyle.

Dans certains modes de réalisation préférentiels, tous les groupes -O-Z sont identiques. Toutefois, dans d'autres modes de réalisation, au moins deux groupes - O-Z sont différents.

Dans la présente description, sauf indication expresse différente, tous les pourcentages (%) indiqués sont des pourcentages en poids. Le sigle « pce » signifie parties en poids pour cent parties d'élastomère.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

L'invention a également pour objet une composition de caoutchouc comprenant :
A1) au moins un aldéhyde de formule W : 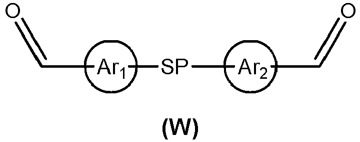 dans laquelle :
   - chaque groupe Ar₁ et Ar₂ représente, indépendamment l'un de l'autre, un noyau aromatique, éventuellement substitué,
   - SP est un groupe de liaison reliant au moins les groupes Ar₁ et Ar₂ entre eux, SP séparant les groupes Ar₁ et Ar₂ par au moins 2 liaisons covalentes ; et
A2) au moins un dérivé d'un polyphénol aromatique comprenant au moins un noyau aromatique porteur d'au moins deux groupes -O-Z en position méta l'une par rapport à l'autre, les deux positions ortho d'au moins un des groupes -O-Z étant non substituées, Z étant différent de l'hydrogène.

Un autre objet de l'invention est un procédé de fabrication d'une composition de caoutchouc à l'état cru, comprenant une étape de mélangeage:
A1) d'au moins un aldéhyde de formule W : 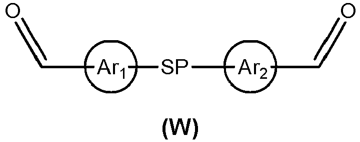 dans laquelle :
   - chaque groupe Ar₁ et Ar₂ représente, indépendamment l'un de l'autre, un noyau aromatique, éventuellement substitué,
   - SP est un groupe de liaison reliant au moins les groupes Ar₁ et Ar₂ entre eux, SP séparant les groupes Ar₁ et Ar₂ par au moins 2 liaisons covalentes ; et
A2) d'au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène.

De préférence, durant l'étape de mélangeage, on mélange également au moins un élastomère à la composition.

Un autre objet de l'invention est un procédé de fabrication d'une composition de caoutchouc à l'état cuit, comprenant :
- une étape de fabrication d'une composition de caoutchouc à l'état cru comprenant une étape de mélangeage:
   A1) d'au moins un aldéhyde de formule W : 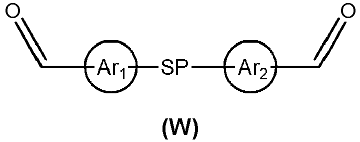 dans laquelle :
      - chaque groupe Ar₁ et Ar₂ représente, indépendamment l'un de l'autre, un noyau aromatique, éventuellement substitué; et
      - SP est un groupe de liaison reliant au moins les groupes Ar₁ et Ar₂ entre eux, SP séparant les groupes Ar₁ et Ar₂ par au moins 2 liaisons covalentes ; et
   A2) d'au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène,
- puis, une étape de mise en forme de la composition de caoutchouc à l'état cru,
- puis, une étape de réticulation, par exemple par vulcanisation ou cuisson, de la composition de caoutchouc durant laquelle on réticule une résine à base du dérivé de polyphénol aromatique A2 et de l'aldéhyde A1.

De préférence, durant l'étape de mélangeage, on mélange également au moins un élastomère à la composition.

Comme expliqué précédemment, les inventeurs émettent l'hypothèse selon laquelle durant l'étape de réticulation, par exemple par vulcanisation ou cuisson, on réalise, préalablement à la réticulation de la résine :
- une étape de formation du polyphénol aromatique à partir du dérivé ou précurseur du polyphénol aromatique par formation, sur le noyau aromatique, d'au moins deux fonctions hydroxyles en position méta l'une par rapport à l'autre, les deux positions ortho d'au moins une des fonctions hydroxyles étant non substituées, chaque fonction hydroxyle étant obtenue à partir de chaque groupe -O-Z, et
- une étape de réticulation d'une résine à partir du polyphénol aromatique A2 et de l'aldéhyde A1.

Encore un autre objet de l'invention est une composition de caoutchouc susceptible d'être obtenue par un procédé tel que décrit ci-dessus.

L'invention a encore pour objet l'utilisation d'un aldéhyde de formule W : 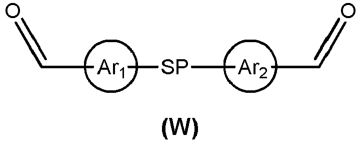 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes,
dans une composition de caoutchouc comprenant une résine phénol-aldéhyde à base d'au moins un polyphénol aromatique et d'au moins l'aldéhyde pour augmenter la rigidité de la composition de caoutchouc.

L'invention porte également sur l'utilisation de l'aldéhyde de formule W : 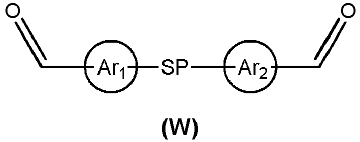 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes,
pour augmenter la fluidité à l'état cru d'une composition de caoutchouc comprenant une résine phénol-aldéhyde à base d'au moins un polyphénol aromatique et d'au moins l'aldéhyde.

L'invention a encore pour objet l'utilisation de l'aldéhyde de formule W : 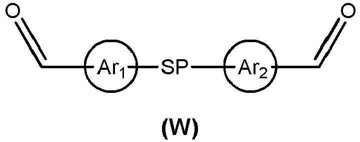 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes
pour maintenir la rigidité avec l'augmentation de la température d'une composition de caoutchouc comprenant une résine phénol-aldéhyde à base d'au moins un polyphénol aromatique et d'au moins l'aldéhyde.

L'invention a aussi pour objet un composite de caoutchouc renforcé d'au moins un élément de renfort noyé dans une composition de caoutchouc telle que décrite ci-dessus.

Un autre objet de l'invention est un pneumatique comprenant une composition de caoutchouc telle que décrite ci-dessus ou un composite de caoutchouc tel que décrit ci-dessus.

Par composition de caoutchouc, on entend que la composition comprend au moins un élastomère ou un caoutchouc (les deux termes étant synonymes) et au moins un autre composant. Une composition de caoutchouc comprend donc une matrice d'élastomère ou de caoutchouc dans laquelle est dispersée au moins l'autre composant. Une composition de caoutchouc est dans un état plastique à l'état cru (non-réticulé) et dans un état élastique à l'état cuit (réticulé) mais en aucun cas dans un état liquide. Une composition de caoutchouc ne doit pas être confondue avec un latex d'élastomère qui est une composition dans un état liquide comprenant un solvant liquide, généralement de l'eau, et au moins un élastomère ou un caoutchouc dispersé dans le solvant liquide de façon à former une émulsion. Ainsi, la composition de caoutchouc n'est pas une composition adhésive aqueuse.

### I.1 - Aldéhyde A1 de la composition de caoutchouc

Conformément à l'invention, le premier constituant essentiel de la résine et de la composition est un aldéhyde A1 de formule W.

Le groupe de liaison SP, par définition au moins divalent, sépare les groupes Ar₁ et Ar₂ par au moins 2 liaisons covalentes, c'est-à-dire que le chemin le plus court pour relier les groupes Ar₁ et Ar₂ entre eux comporte au moins 2 liaisons covalentes, chacune de ces liaisons covalentes pouvant être, indépendamment l'une de l'autre, une liaison simple, double ou triple. SP comprend donc implicitement au moins un atome relié d'une part à Ar₁ et d'autre part à Ar₂.

De préférence, SP représente un radical au moins divalent choisi dans le groupe constitué par un radical hydrocarboné et un radical hydrocarboné substitué. De tels radicaux peuvent éventuellement être interrompus par un ou plusieurs hétéroatomes, de préférence un ou plusieurs hétéroatomes sélectionnés dans le groupe constitué par O, S, Si et P.

Le groupe de liaison SP est préférentiellement dépourvu de fonction réactive vis-à-vis du polyphénol aromatique et de son dérivé.

Le groupe de liaison SP est préférentiellement dépourvu de fonction réactive vis-à-vis des autres constituants de la composition de caoutchouc.

Par fonction réactive, on entend ici une fonction qui réagirait dans des conditions réactionnelles nécessaires à la réticulation de la résine phénol-aldéhyde.

Dans un mode de réalisation, l'aldéhyde A1 est de formule W1 : 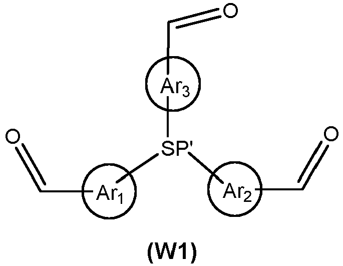 dans laquelle :
- Chaque groupe Ar₁, Ar₂, et Ar₃ représente un noyau aromatique, éventuellement substitué ;
- SP' relie les groupes Ar₁, Ar₂, et Ar₃ entre eux, SP' séparant deux à deux les groupes Ar₁, Ar₂, et Ar₃ par au moins 2 liaisons covalentes.

Un tel aldéhyde présente un groupe SP' ramifié permettant de créer un nœud de réticulation supplémentaire dans le réseau créé par la résine. Ainsi, on augmente la rigidité à cuit de la composition de caoutchouc.

De préférence, SP' représente un radical au moins trivalent choisi dans le groupe constitué par un radical hydrocarboné et un radical hydrocarboné substitué. De tels radicaux peuvent éventuellement être interrompus par un ou plusieurs hétéroatomes, de préférence un ou plusieurs hétéroatomes sélectionnés dans le groupe constitué par O, S, Si et P.

Avantageusement, dans ce mode de réalisation où l'aldéhyde A1 est de formule W1, le groupe SP' représente un groupe de formule SP1 : 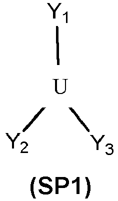 avec Y₁, Y₂, Y₃ représentant chacun, indépendamment l'un de l'autre, un groupe choisi dans le groupe constitué par l'oxygène, un groupe CH₂, un groupe C=O, un groupe S=O et un groupe SO2, de préférence, dans le groupe constitué par l'oxygène, un groupe S=O et un groupe SO2 et plus préférentiellement Y₁, Y₂, Y₃ représentant chacun l'oxygène. Dans ce mode de réalisation, Y₁, Y₂, Y₃ relient de préférence directement U et respectivement Ar₁, Ar₂, Ar₃.

Avantageusement, dans cet autre mode de réalisation où l'aldéhyde A1 est de formule W1, SP' représente un groupe de formule SP1 : 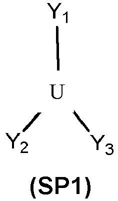 avec U représentant un radical trivalent choisi dans le groupe constitué par un radical hydrocarboné et un radical hydrocarboné substitué. Un tel radical trivalent peut éventuellement être interrompu par un ou plusieurs hétéroatomes, de préférence un ou plusieurs hétéroatomes sélectionnés dans le groupe constitué par O, S, Si et P.

Avantageusement, U représente un radical trivalent choisi dans le groupe constitué par :
- les radicaux alkyltriyl, aryltriyl, arylalkyltriyl, alkylaryltriyl, cycloalkyltriyl, alcényltriyl,
- les radicaux 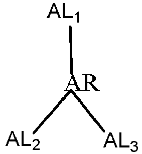 avec AL₁, AL₂, AL₃, représentant, indépendamment l'un de l'autre, un radical divalent alkylène et AR représentant un radical trivalent aryltriyl;
- les radicaux 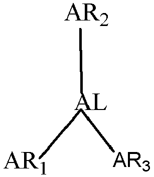 avec AR₁, AR₂, AR₃ représentant, indépendamment l'un de l'autre, un radical divalent arylène et AL représentant un radical trivalent alkyltriyl.

De préférence, U représente un radical trivalent choisi dans le groupe constitué par :
- les radicaux alkyltriyl,
- les radicaux 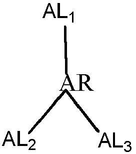 avec AL₁, AL₂, AL₃ représentant, indépendamment l'un de l'autre, un radical divalent alkylène et AR représentant un radical tétravalent aryltriyl
- les radicaux 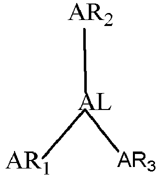 avec AR₁, AR₂, AR₃ représentant, indépendamment l'un de l'autre, un radical divalent arylène et AL représentant un radical trivalent alkyltriyl

Plus préférentiellement, U représente un radical trivalent alkyltriyl.

Encore plus avantageusement, U représente un radical trivalent alkyltriyl ramifié comprenant un nombre d'atomes de carbone allant de 1 à 15, de préférence de 2 à 12 et plus préférentiellement de 2 à 8.

Dans encore un autre mode de réalisation, l'aldéhyde A1 est de formule W2: 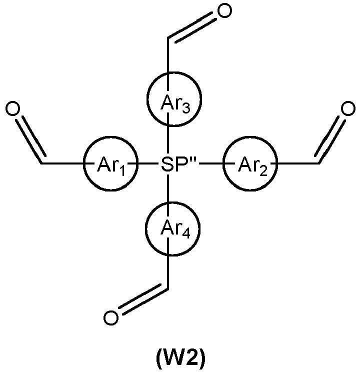 dans laquelle :
- chaque groupe Ar₁, Ar₂, Ar₃ et Ar₄ représente, indépendamment l'un de l'autre, un noyau aromatique, éventuellement substitué ;
- SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

Un tel aldéhyde présente un groupe SP" ramifié permettant de créer un nœud de réticulation supplémentaire dans le réseau créé par la résine. Ainsi, on augmente la rigidité à cuit de la composition de caoutchouc.

De préférence, SP" représente un radical au moins divalent choisi dans le groupe constitué par un radical hydrocarboné et un radical hydrocarboné substitué. De tels radicaux peuvent éventuellement être interrompus par un ou plusieurs hétéroatomes, de préférence un ou plusieurs hétéroatomes sélectionnés dans le groupe constitué par O, S, Si et P.

Avantageusement, dans cet autre mode de réalisation où l'aldéhyde A1 est de formule **W2,** le groupe SP" représente un groupe de formule **SP2** : 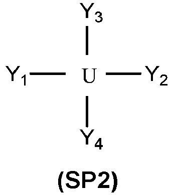 avec Y₁, Y₂, Y₃, Y₄ représentant chacun, indépendamment l'un de l'autre, un groupe choisi dans le groupe constitué par l'oxygène, un groupe CH₂, un groupe C=O, un groupe S=O et un groupe SO2, de préférence, dans le groupe constitué par l'oxygène, un groupe S=O et un groupe SO2 et plus préférentiellement Y₁, Y₂, Y₃, Y₄ représentant chacun l'oxygène. Dans ce mode de réalisation, Y₁, Y₂, Y₃ et Y₄ relient de préférence directement Z et respectivement Ar₁, Ar₂, Ar₃ et Ar₄.

Avantageusement, dans cet autre mode de réalisation où l'aldéhyde A1 est de formule **W2,** SP" représente un groupe de formule **SP2** : 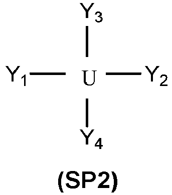 avec U représentant un radical tétravalent choisi dans le groupe constitué par un radical hydrocarboné et un radical hydrocarboné substitué. Un tel radical tétravalent peut éventuellement être interrompu par un ou plusieurs hétéroatomes, de préférence un ou plusieurs hétéroatomes sélectionnés dans le groupe constitué par O, S, Si et P.

Avantageusement, U représente un radical tétravalent choisi dans le groupe constitué par :
- les radicaux alkyltétrayl, aryltétrayl, arylalkyltétrayl, alkylaryltétrayl, cycloalkyltétrayl, alcényltétrayl,
- les radicaux 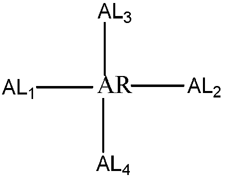 avec AL₁, AL₂, AL₃, AL₄ représentant, indépendamment l'un de l'autre, un radical divalent alkylène et AR représentant un radical tétravalent aryltétrayl et
- les radicaux 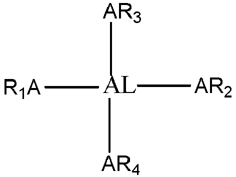 avec AR₁, AR₂, AR₃, AR₄ représentant, indépendamment l'un de l'autre, un radical divalent arylène et AL représentant un radical tétravalent alkyltétrayl,

De préférence, U représente un radical tétravalent choisi dans le groupe constitué par :
- les radicaux alkyltétrayl,
- les radicaux 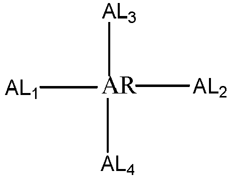 avec AL₁, AL₂, AL₃, AL₄ représentant, indépendamment l'un de l'autre, un radical divalent alkylène et AR représentant un radical tétravalent aryltétrayl et
- les radicaux 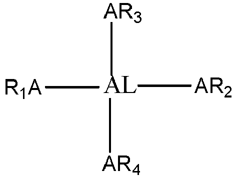 avec AR₁, AR₂, AR₃, AR₄ représentant, indépendamment l'un de l'autre, un radical divalent arylène et AL représentant un radical tétravalent alkyltétrayl.

Plus préférentiellement, U représente un radical tétravalent alkyltétrayl.

Encore plus avantageusement, U représente un radical tétravalent alkyltétrayl ramifié comprenant un nombre d'atomes de carbone allant de 1 à 15, de préférence de 2 à 12 et plus préférentiellement de 2 à 8.

Avantageusement, SP sépare les groupes Ar₁ et Ar₂ par un nombre de liaisons covalentes inférieur ou égal à 150, de préférence inférieur ou égal à 100 et plus préférentiellement inférieur ou égal à 75. Dans les modes de réalisation utilisant des aldéhydes de formule W1 et W2, chaque groupe SP' et SP" sépare deux à deux les groupes Ar₁, Ar₂ et Ar₃, et Ar₁, Ar₂, Ar₃ et Ar₄ respectivement par un nombre de liaisons covalentes inférieur ou égal à 150, de préférence inférieur ou égal à 100 et plus préférentiellement inférieur ou égal à 75. La tenue en température, c'est-à-dire le maintien de la rigidité avec l'augmentation de la température, de la composition de caoutchouc diminue lorsque la distance entre les deux noyaux aromatiques Ar₁ et Ar₂ devient trop élevée. Ainsi, en fonction de l'utilisation de la composition de caoutchouc, on pourra choisir une distance adaptée. Préférentiellement, pour certaines utilisations en pneumatique, on souhaite une tenue en température relativement élevée.

Avantageusement, SP sépare les groupes Ar₁ et Ar₂ par un nombre de liaisons covalentes supérieur ou égal à 3, de préférence supérieur ou égal à 4 et plus préférentiellement supérieur ou égal à 5. Dans les modes de réalisation utilisant des aldéhydes de formule **W1** et **W2,** chaque groupe SP' et SP " sépare deux à deux les groupes Ar₁, Ar₂ et Ar₃ et Ar₁, Ar₂, Ar₃ et Ar₄ respectivement par un nombre de liaisons covalentes supérieur ou égal à 3, de préférence supérieur ou égal à 4 et plus préférentiellement supérieur ou égal à 5. La fluidité de la composition de caoutchouc augmente lorsque la distance entre les noyaux aromatiques devient relativement grande. Ainsi, en fonction de l'utilisation de la composition de caoutchouc, on pourra choisir une distance adaptée.

Dans un mode de réalisation, SP sépare les groupes Ar₁ et Ar₂ par un nombre de liaisons covalentes inférieur ou égal à 20, de préférence inférieur ou égal à 15. Dans les modes de réalisation utilisant des aldéhydes de formule **W1** et **W2,** chaque groupe SP' et SP" sépare deux à deux les groupes Ar₁, Ar₂ et Ar₃ et Ar₁, Ar₂, Ar₃ et Ar₄ respectivement par un nombre de liaisons covalentes inférieur ou égal à 20, de préférence inférieur ou égal à 15. Dans ce mode de réalisation, on favorise le compromis entre la fluidité, la rigidité et la tenue en température de la composition.

Dans un autre mode de réalisation, SP sépare les groupes Ar₁ et Ar₂ par un nombre de liaisons covalentes strictement supérieur à 15. Dans les modes de réalisation utilisant des aldéhydes de formule **W1** et **W2,** chaque groupe SP' et SP" sépare deux à deux les groupes Ar₁, Ar₂ et Ar₃ et Ar₁, Ar₂, Ar₃ et Ar₄ respectivement par un nombre de liaisons covalentes strictement supérieur à 15. Dans ce mode de réalisation, on favorise le compromis entre la fluidité et la rigidité de la composition.

Avantageusement, SP comprend au moins 2 liaisons simples successives, de préférence au moins 5 liaisons simples successives, plus préférentiellement par au moins 10 liaisons simples successives. Dans les modes de réalisation utilisant des aldéhydes de formule **W1** et **W2**, chaque groupe SP' et SP " sépare deux à deux les groupes Ar₁, Ar₂ et Ar₃ et Ar₁, Ar₂, Ar₃ et Ar₄ respectivement par au moins 2 liaisons simples successives, de préférence au moins 5 liaisons simples successives, plus préférentiellement par au moins 10 liaisons simples successives. Pour un nombre de liaisons covalentes données, plus le nombre de liaisons simples est important, plus on augmente la fluidité, et ce, sans pour autant diminuer la rigidité, même voire en l'augmentant.

Dans un mode de réalisation, SP sépare les groupes Ar₁, Ar₂ par un nombre de liaisons simples successives inférieur ou égal à 20, de préférence inférieur ou égal à 15. Dans les modes de réalisation utilisant des aldéhydes de formule W1 et W2, chaque groupe SP' et SP " sépare deux à deux les groupes Ar₁, Ar₂ et Ar₃ et Ar₁, Ar₂, Ar₃ et Ar₄ respectivement par un nombre de liaisons simples successives inférieur ou égal à 20, de préférence inférieur ou égal à 15.

Dans un autre mode de réalisation, SP sépare les groupes Ar₁, Ar₂ par un nombre de liaisons simples successives strictement supérieur à 15. Dans les modes de réalisation utilisant des aldéhydes de formule **W1** et **W2**, chaque groupe SP' et SP " sépare deux à deux les groupes Ar₁, Ar₂ et Ar₃ et Ar₁, Ar₂, Ar₃ et Ar₄ respectivement par un nombre de liaisons simples successives strictement supérieur à 15.

Avantageusement, dans un mode de réalisation, la masse molaire de l'aldéhyde de formule **W** est inférieure ou égale à 500 g.mol⁻¹.

Avantageusement, la masse molaire de l'aldéhyde A1 de formule **W** est inférieure ou égale à 10000 g.mol⁻¹, de préférence inférieure ou égale à 5000 g.mol⁻¹, et plus préférentiellement inférieure ou égale à 2000 g.mol⁻¹.

De préférence, SP représente un radical au moins divalent choisi dans le groupe constitué par un radical hydrocarboné et un radical hydrocarboné substitué. Dans les modes de réalisation utilisant les aldéhydes de formule W1 et W2, chaque groupe SP' et SP" représente respectivement un radical au moins trivalent et au moins tétravalent choisi dans le groupe constitué par un radical hydrocarboné et un radical hydrocarboné substitué. De tels radicaux peuvent éventuellement être interrompus par un ou plusieurs hétéroatomes, de préférence un ou plusieurs hétéroatomes sélectionnés dans le groupe constitué par O, S, Si et P.

Avantageusement, l'aldéhyde A1 est de formule W3 : 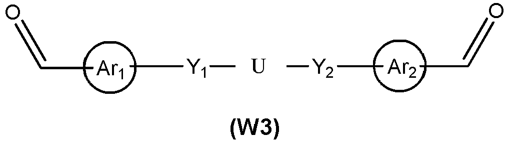 dans laquelle Y₁-U-Y₂ représente un radical divalent avec Y₁ et Y₂ représentant chacun, indépendamment l'un de l'autre, un groupe choisi dans le groupe constitué par l'oxygène, un groupe CH₂, un groupe C=O, un groupe S=O et un groupe SO2, de préférence, dans le groupe constitué par l'oxygène, un groupe S=O et un groupe SO2 et plus préférentiellement Y₁ et Y₂ représentant chacun l'oxygène.

Dans un mode de réalisation particulièrement préféré, Y₁ et Y₂ sont identiques.

Avantageusement, l'aldéhyde A1 est de formule W3 : 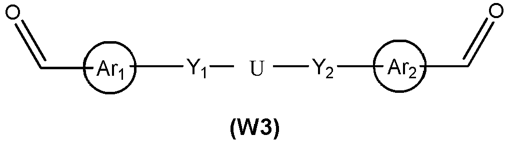 dans laquelle Y₁-U-Y₂ représente un radical divalent avec U représentant un radical divalent choisi dans le groupe constitué par un radical hydrocarboné et un radical hydrocarboné substitué. Un tel radical divalent peut éventuellement être interrompu par un ou plusieurs hétéroatomes, de préférence un ou plusieurs hétéroatomes sélectionnés dans le groupe constitué par O, S, Si et P.

Avantageusement, U représente un radical divalent choisi dans le groupe constitué par les radicaux alkylène, arylène, arylalkylène, alkylarylène, cycloalkylène, alcénylène, AL-AR-AL avec AL représentant des radicaux monovalents alkyl et AR représentant un groupe aryl, AR-AL-AR avec AR représentant des radicaux monovalents aryl et AL représentant un groupe alkyl.

De préférence, U représente un radical divalent choisi dans le groupe constitué par les radicaux alkylène, AL-AR-AL avec AL représentant des radicaux monovalents alkyl et AR représentant un groupe aryl, AR-AL-AR avec AR représentant des radicaux monovalents aryl et AL représentant un groupe alkyl.

Plus préférentiellement, U représente un radical divalent alkylène.

Encore plus avantageusement, U représente un radical divalent alkylène linéaire comprenant un nombre d'atomes de carbone allant de 1 à 15, de préférence de 2 à 12 et plus préférentiellement de 2 à 8.

Avantageusement, SP représente un radical choisi dans le groupe constitué par les radicaux polyester, polyéther, polydiène, polyalkylène et polysilicone et les associations de ces radicaux, de préférence dans le groupe constitué par les radicaux polyéther et polysilicone et les associations de ces radicaux. Ce radical peut être divalent, trivalent ou tétravalent.

Par radical polyester, on entend un radical comprenant un motif répétitif comprenant une chaine principale, la chaine principale de ce motif comprenant au moins une fonction ester. Par chaine principale, on entend la succession d'atomes la plus courte reliant les motifs deux à deux entre eux. Dans un mode de réalisation, le radical polyester est un radical d'un homopolyester aliphatique. De tels radicaux sont choisi dans le groupe constitué par les radicaux du polyglycolide (PGA), du poly(acide lactique) (PLA), du polycaprolactone (PCL).

Dans un autre mode de réalisation, le radical polyester est un radical d'un copolyester aliphatique. De tels radicaux sont choisis dans le groupe constitué par les radicaux du polyéthylène adipate (PEA) et du polybutylène succinate (PBS).

Dans encore un autre mode de réalisation, le radical polyester est un radical d'un copolyester semi-aromatique. De tels radicaux sont choisis dans le groupe constitué par les radicaux du polytéréphtalate d'éthylène (PET), du polytéréphtalate de butylène (PBT), du polytéréphtalate de triméthylène (PTT) et du polyéthylène naphtalate (PEN).

Dans encore un autre mode de réalisation, le radical polyester est un radical d'un homo-copolyester aromatique, tel que les radicaux des polyarylates.

Par radical polyéther, on entend un radical comprenant un motif répétitif comprenant une chaine principale, la chaine principale de ce motif comprenant au moins une fonction éther. Par chaine principale, on entend la succession d'atomes la plus courte reliant les motifs deux à deux entre eux.

De préférence, le radical polyéther est de formule O-[Z₄-O-]ₙ, dans lequel Z₄ est un radical divalent choisi dans le groupe constitué par un radical hydrocarboné et un radical hydrocarboné substitué. Un tel radical peut éventuellement être interrompu par un ou plusieurs hétéroatomes, de préférence un ou plusieurs hétéroatomes sélectionnés dans le groupe constitué par O, S, Si et P. L'aldéhyde A1 de formule W présente alors la formule W4 suivante : 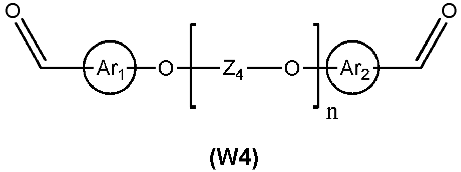 dans laquelle n est supérieur ou égal à 1 et de préférence, supérieur ou égal à 2.

De préférence Z₄ représente un radical divalent choisi dans le groupe constitué par les radicaux alkylène, arylène, arylalkylène, alkylarylène, cycloalkylène, alcénylène, AL-AR-AL avec AL représentant des radicaux monovalents alkyl et AR représentant un groupe aryl, AR-AL-AR avec AR représentant des radicaux monovalents aryl et AL représentant un groupe alkyl.

Plus préférentiellement, Z₄ représente un radical divalent alkylène.

Encore plus préférentiellement, Z₄ représente un radical divalent alkylène linéaire.

Par radical polydiène, on entend un radical comprenant un motif répétitif comprenant une chaine principale, la chaine principale de ce motif comprenant au moins une fonction alcène non aromatique. Par fonction alcène non aromatique, on entend que la fonction alcène n'appartient pas à un noyau aromatique. Par chaine principale, on entend la succession d'atomes la plus courte reliant les motifs deux à deux entre eux.

Par radical polyalkylène, on entend un radical comprenant un motif répétitif comprenant une chaine principale, la chaine principale de ce motif comprenant au moins un radical alkyl, linéaire ou ramifié, éventuellement substitué par un ou plusieurs cycles aromatiques. Par chaine principale, on entend la succession d'atomes la plus courte reliant les motifs deux à deux entre eux.

Par radical polysilicone, on entend un radical comprenant un motif répétitif comprenant une chaine principale, la chaine principale de ce motif comprenant au moins un radical siloxane. Par chaine principale, on entend la succession d'atomes la plus courte reliant les motifs deux à deux entre eux.

De préférence, le radical polysilicone est de formule **Z₅:**

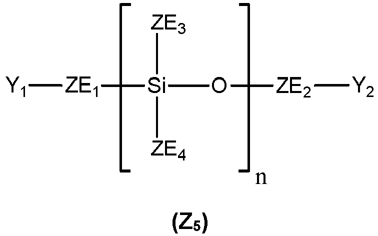

L'aldéhyde A1 de formule **W** présente alors la formule **W5** suivante : 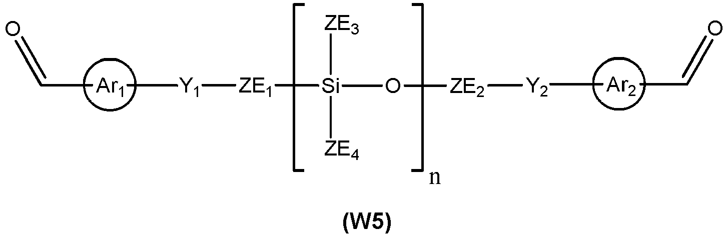 dans laquelle n est supérieur ou égal à 1 et de préférence, supérieur ou égal à 2.

Dans un mode de réalisation, le composé **W5** est un mélange de composés de formule **W5,** mélange dans lequel plusieurs composés de formule **W5** présentant respectivement des valeurs entières de n différentes peuvent être mélangés. L'homme du métier comprend que pour de tels mélanges, le composé de formule **W5** présente une valeur de n non entière égale à la moyenne molaire pondérée de l'ensemble des composés de formule **W5** dans le mélange de composés.

Y₁ et Y₂ représentent chacun, indépendamment l'un de l'autre, un groupe choisi dans le groupe constitué par l'oxygène, un groupe CH₂, un groupe C=O, un groupe S=O et un groupe SO2, de préférence, dans le groupe constitué par l'oxygène, un groupe S=O et un groupe SO2 et plus préférentiellement Y₁ représentent chacun l'oxygène.

Chaque radical ZE₁, ZE₂ représente, indépendamment l'un de l'autre un radical divalent choisi dans le groupe constitué par un radical hydrocarboné et un radical hydrocarboné substitué. Un tel radical peut éventuellement être interrompu par un ou plusieurs hétéroatomes, de préférence un ou plusieurs hétéroatomes sélectionnés dans le groupe constitué par O, S, Si et P. Optionnellement, chaque radical ZE₁, ZE₂ représente, indépendamment l'un de l'autre, un radical divalent choisi dans le groupe constitué par les radicaux alkylène, arylène, arylalkylène, alkylarylène, cycloalkylène, alcénylène, AL-AR-AL avec AL représentant des radicaux monovalents alkyl et AR représentant un groupe aryl, AR-AL-AR avec AR représentant des radicaux monovalents aryl et AL représentant un groupe alkyl.

De préférence, chaque radical ZE₁, ZE₂ représente, indépendamment l'un de l'autre un radical divalent choisi dans le groupe constitué par les radicaux alkylène, AL-AR-AL avec AL représentant des radicaux monovalents alkyl et AR représentant un groupe aryl, AR-AL-AR avec AR représentant des radicaux monovalents aryl et AL représentant un groupe alkyl.

Plus préférentiellement, chaque radical ZE₁, ZE₂ représente un radical divalent alkylène et encore plus préférentiellement chaque radical ZE₁, ZE₂ représente un radical divalentt alkylène linéaire.

Chaque radical ZE₃, ZE₄ représente, indépendamment l'un de l'autre, un radical monovalent choisi dans le groupe constitué par un radical hydrocarboné et un radical hydrocarboné substitué. Un tel radical peut éventuellement être interrompu par un ou plusieurs hétéroatomes, de préférence un ou plusieurs hétéroatomes sélectionnés dans le groupe constitué par O, S, Si et P. Optionnellement, chaque radical ZE₃, ZE₄ représente, indépendamment l'un de l'autre, un radical monovalent choisi dans le groupe constitué par les radicaux alkyle, aryle, arylalkyle, alkylaryle, cycloalkyle, alcényle, et plus préférentiellement chaque radical ZE₃, ZE₄, représente un radical monovalent alkyl. Par exemple, chaque radical ZE₃, ZE₄ représente, indépendamment l'un de l'autre, un radical choisi dans le groupe constitué par les radicaux méthyle, éthyle, propyle et butyle. Les radicaux propyle comprennent les radicaux de formule -C₃H₇. Ces radicaux sont le n-propyl et l'isopropyl. Les radicaux butyle comprennent les radicaux de formule -C₄H₉. Ces radicaux sont le n-butyl, isobutyl, le sec-butyl et le tert-butyl.

Chaque noyau aromatique Ar₁, Ar₂ est avantageusement un noyau à 5 ou 6 chaînons, comprenant, en tant que chaînon, des atomes de carbone et éventuellement un ou plusieurs hétéroatomes, en particulier des atomes d'azote, d'oxygène, de soufre, éventuellement oxydé sous forme de N-oxyde ou de S-oxyde. Dans une variante, le noyau aromatique comprend 0, 1 ou 2 hétéroatome(s). Le reste du noyau aromatique peut être substitué ou non.

Dans un mode de réalisation, le reste de chaque noyau aromatique Ar₁, Ar₂ est non substitué.

De préférence, dans ce mode de réalisation, lorsque chaque noyau aromatique Ar₁, Ar₂ est un noyau benzénique, l'aldéhyde A1 est de formule W6 :

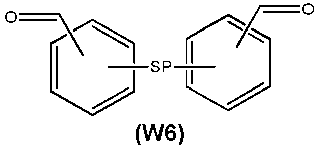

Dans un autre mode de réalisation, chaque noyau aromatique Ar₁, Ar₂ est substitué respectivement par au moins un groupe K₁, K₂ représentant, indépendamment l'un de l'autre, un radical monovalent choisi dans le groupe constitué par un radical hydrocarboné et un radical monovalent hydrocarboné substitué. Un tel radical monovalent peut éventuellement être interrompu par un ou plusieurs hétéroatomes, de préférence un ou plusieurs hétéroatomes sélectionnés dans le groupe constitué par O, S, Si et P. De préférence chaque groupe K₁, K₂ représente, indépendamment l'un de l'autre, un radical monovalent alkyle ou un radical monovalent O-alkyle.

De préférence, dans ce mode de réalisation, lorsque chaque noyau aromatique Ar₁, Ar₂ est un noyau benzénique, l'aldéhyde A1 est de formule **W7** :

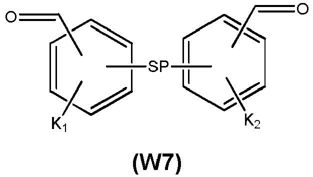

Dans un mode de réalisation, chaque groupe K₁, K₂ et le groupe SP sont situés en position ortho l'un par rapport l'autre sur chaque noyau aromatique benzénique Ar₁, Ar₂.

De façon préférée, qu'il soit ou non substitué, chaque noyau aromatique Ar₁, Ar₂ est un noyau benzénique. Dans un mode de réalisation, le groupe SP et le groupe CHO sont situés en position para l'un par rapport à l'autre sur chaque noyau aromatique Ar₁ et Ar₂. Dans un mode de réalisation préféré et afin d'augmenter la rigidité de la composition, le groupe SP et le groupe CHO sont situés en position ortho l'un par rapport à l'autre sur chaque noyau aromatique Ar₁ et Ar₂. Dans un mode de réalisation encore plus préféré et afin d'augmenter davantage la rigidité de la composition, le groupe SP et le groupe CHO sont situés en position méta l'un par rapport à l'autre sur chaque noyau aromatique Ar₁ et Ar₂.

Dans certains des modes de réalisation utilisant des aldéhydes de formule W1, le reste de chaque noyau aromatique Ar₁, Ar₂ et Ar₃ est non substitué. De préférence, dans ce mode de réalisation, lorsque chaque noyau aromatique Ar₁, Ar₂ et Ar₃ est un noyau benzénique, l'aldéhyde est de formule **W8** :

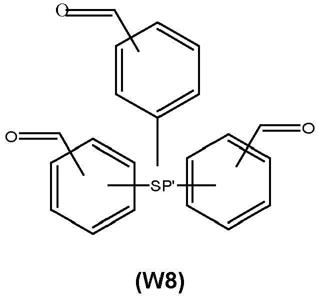

Dans un autre mode de réalisation, chaque noyau aromatique Ar₁, Ar₂ et Ar₃ est substitué respectivement par au moins un groupe K₁, K₂ et K₃ représentant, indépendamment l'un de l'autre, un radical monovalent choisi dans le groupe constitué par un radical hydrocarboné et un radical monovalent hydrocarboné substitué. Un tel radical monovalent peut éventuellement être interrompu par un ou plusieurs hétéroatomes, de préférence un ou plusieurs hétéroatomes sélectionnés dans le groupe constitué par O, S, Si et P. De préférence chaque groupe K₁, K₂ et K₃ représente, indépendamment l'un de l'autre, un radical monovalent alkyle ou un radical monovalent O-alkyle. De préférence, dans ce mode de réalisation, lorsque chaque noyau aromatique Ar₁, Ar₂ et Ar₃ est un noyau benzénique, l'aldéhyde est de formule **W9** :

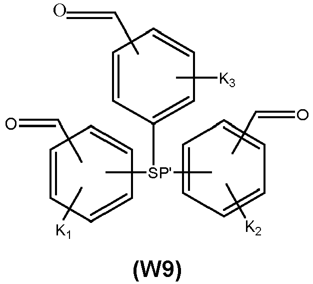

Dans un mode de réalisation, chaque groupe K₁, K₂ et K₃ et chaque groupe SP' sont situés en position ortho l'un par rapport l'autre sur chaque noyau aromatique benzénique Ar₁, Ar₂ et Ar₃.

De façon préférée, qu'il soit ou non substitué, chaque noyau aromatique Ar₁, Ar₂ et Ar₃ est un noyau benzénique. Dans un mode de réalisation, le groupe SP' et le groupe CHO sont situés en position para l'un par rapport à l'autre sur chaque noyau aromatique Ar₁, Ar₂, et Ar₃. Dans un mode de réalisation préféré et afin d'augmenter la rigidité de la composition, le groupe SP' et le groupe CHO sont situés en position ortho l'un par rapport à l'autre sur chaque noyau aromatique Ar₁, Ar₂ et Ar₃. Dans un mode de réalisation encore plus préféré et afin d'augmenter davantage la rigidité de la composition, le groupe SP' et le groupe CHO sont situés en position méta l'un par rapport à l'autre sur chaque noyau aromatique Ar₁, Ar₂, et Ar₃.

Dans certains des modes de réalisation utilisant des aldéhydes de formule **W2**, le reste de chaque noyau aromatique Ar₁, Ar₂, Ar₃ et Ar₄ est non substitué. De préférence, dans ce mode de réalisation, lorsque chaque noyau aromatique Ar₁, Ar₂, Ar₃ et Ar₄ est un noyau benzénique, l'aldéhyde est de formule **W10** :

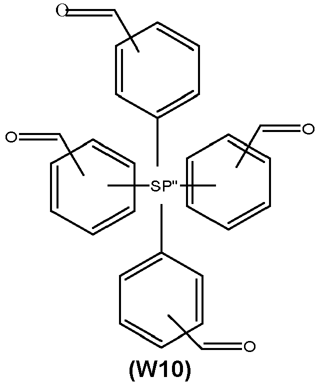

Dans un autre mode de réalisation, chaque noyau aromatique Ar₁, Ar₂, Ar₃ et Ar₄ est substitué respectivement par au moins un groupe K₁, K₂, K₃ et K₄ représentant, indépendamment l'un de l'autre, un radical monovalent choisi dans le groupe constitué par un radical hydrocarboné et un radical monovalent hydrocarboné substitué. Un tel radical monovalent peut éventuellement être interrompu par un ou plusieurs hétéroatomes, de préférence un ou plusieurs hétéroatomes sélectionnés dans le groupe constitué par O, S, Si et P. De préférence chaque groupe K₁, K₂, K₃ et K₄ représente, indépendamment l'un de l'autre, un radical monovalent alkyle ou un radical monovalent O-alkyle. De préférence, dans ce mode de réalisation, lorsque chaque noyau aromatique Ar₁, Ar₂, Ar₃ et Ar₄ est un noyau benzénique, l'aldéhyde est de formule **W11** :

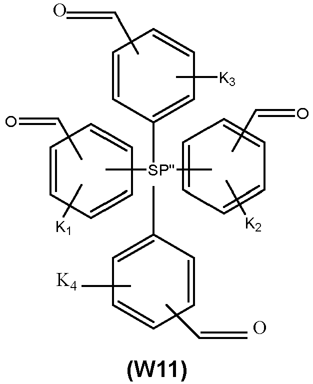

Dans un mode de réalisation, chaque groupe K₁, K₂, K₃ et K₄ et chaque groupe SP" sont situés en position ortho l'un par rapport l'autre sur chaque noyau aromatique benzénique Ar₁, Ar₂, Ar₃ et Ar₄.

De façon préférée, qu'il soit ou non substitué, chaque noyau aromatique Ar₁, Ar₂, Ar₃ et Ar₄ est un noyau benzénique. Dans un mode de réalisation, le groupe SP" et le groupe CHO sont situés en position para l'un par rapport à l'autre sur chaque noyau aromatique Ar₁, Ar₂, Ar₃ et Ar₄. Dans un mode de réalisation préféré et afin d'augmenter la rigidité de la composition, le groupe SP" et le groupe CHO sont situés en position ortho l'un par rapport à l'autre sur chaque noyau aromatique Ar₁, Ar₂, Ar₃ et Ar₄. Dans un mode de réalisation encore plus préféré et afin d'augmenter davantage la rigidité de la composition, le groupe SP" et le groupe CHO sont situés en position méta l'un par rapport à l'autre sur chaque noyau aromatique Ar₁, Ar₂, Ar₃ et Ar₄.

De préférence, la composition est dépourvue de formaldéhyde et/ou dépourvue de donneur de méthylène choisi dans le groupe constitué par l'hexaméthylènetétramine (HMT), l'hexamethoxyméthylmélamine (H3M), l'hexaethoxyméthylmélamine, le chlorure de lauryloxyméthylpyridinium, le chlorure d'éthoxyméthylpyridinium, des polymères d'hexaméthoxyméthylmélamine de trioxanne de formaldéhyde, l'hexakis(méthoxyméthyl)mélamine, la N,N',N"-triméthyl/-N,N',N"-triméthylolmélamine, l'hexaméthylolmélamine, la N-méthylolmélamine, la N,N'-diméthylolmélamine, la N,N',N"-tris(méthoxyméthyl)mélamine, la N,N',N"-tributyl-N,N',N"-triméthylolmélamine. Plus avantageusement, la composition est dépourvue de formaldéhyde et dépourvue des donneurs de méthylène décrits dans ce paragraphe.

Plus préférentiellement, la composition est dépourvue de formaldéhyde et/ou dépourvue de donneur de méthylène choisi dans le groupe constitué parl'hexaméthylènetétramine, l'hexaéthoxyméthylmélamine, l'hexaméthoxyméthylmélamine, le chlorure de lauryloxyméthylpyridinium, le chlorure d'éthoxyméthylpyridinium, l'hexaméthoxyméthylmélamine de trioxanne et les oxyméthylmélamines N-substituées répondant à la formule générale: 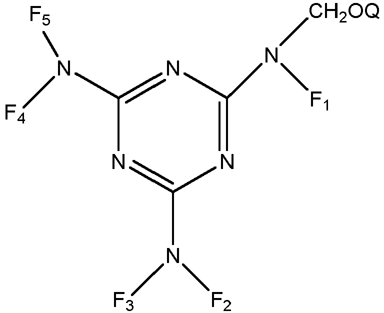 dans laquelle Q représente un groupe alkyle contenant de 1 à 8 atomes de carbone; F₁, F₂, F₃, F₄ et F₅ sont choisis, indépendamment l'un de l'autre, parmi le groupe constitué par un atome d'hydrogène, par un groupe alkyle contenant de 1 à 8 atomes de carbone, par le groupe -CH2OQ et leurs produits de condensation. Plus avantageusement, la composition est dépourvue de formaldéhyde et dépourvue des donneurs de méthylène décrits dans ce paragraphe.

Encore plus préférentiellement, la composition est dépourvue de formaldéhyde et/ou dépourvue de donneur de méthylène. Plus avantageusement, la composition est dépourvue de formaldéhyde et dépourvue des donneurs de méthylène.

Par dépourvue de formaldéhyde ou dépourvue de donneur de méthylène, on entend que le taux massique total du formaldéhyde ou du ou des donneurs de méthylène appartenant aux groupes décrits ci-dessus en poids total du ou des aldéhydes A1 dans la composition est inférieur ou égal à 10%, de préférence à 5%, plus préférentiellement à 2% et encore plus préférentiellement à 1%.

Par dépourvue de formaldéhyde et dépourvue de donneur de méthylène, on entend que le taux massique total du formaldéhyde et du ou des donneurs de méthylène appartenant aux groupes décrits ci-dessus en poids total du ou des aldéhydes A1 dans la composition est inférieur ou égal à 10%, de préférence à 5%, plus préférentiellement à 2% et encore plus préférentiellement à 1%.

### Procédé de fabrication de l'aldéhyde W3

Le procédé de fabrication de l'aldéhyde de formule **W3** : 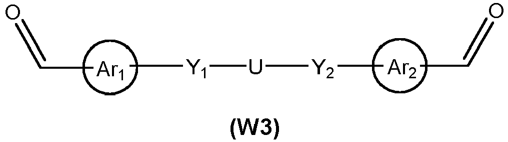 dans laquelle les noyaux Ar₁ et Ar₂ sont identiques, Y₁ représentent chacun l'oxygène, comprend une étape durant laquelle on fait réagir :
- un réactif de formule OHa- U- OHa dans laquelle Ha représente un halogène, et
- un réactif de formule

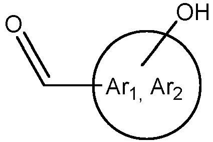

### Procédé de fabrication de l'aldéhyde W1

Le procédé de fabrication de l'aldéhyde de formule **W1** : 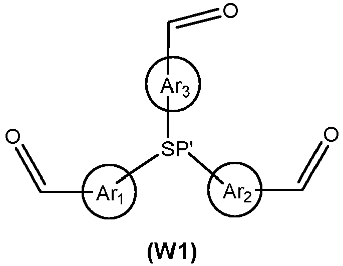 dans laquelle les noyaux Ar₁, Ar₂ et Ar₃ sont identiques, SP' représentant le groupe 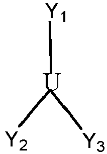 avec Y₁, Y₂, Y₃, représentant l'oxygène et reliant directement U et respectivement Ar₁, Ar₂ et Ar₃, comprend une étape durant laquelle on fait réagir :
- un réactif de formule 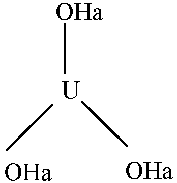 dans laquelle Ha représente un halogène, et
- un réactif de formule

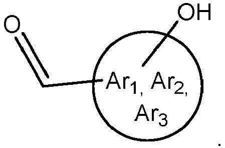

### Procédé de fabrication de l'aldéhyde W2

Le procédé de fabrication de l'aldéhyde de formule **W2** : 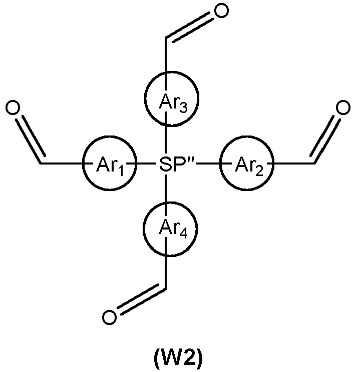 dans laquelle les noyaux Ar₁, Ar₂, Ar₃ et Ar₄ sont identiques, SP" représentant le groupe 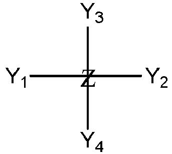 avec Y₁, Y₂, Y₃, Y₄ représentant l'oxygène et reliant directement Z et respectivement Ar₁, Ar₂, Ar₃ et Ar₄, comprend une étape durant laquelle on fait réagir :
- un réactif de formule 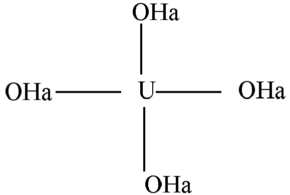 dans laquelle Ha représente un halogène, et
- un réactif de formule

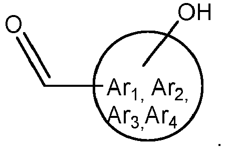

### Procédé de fabrication de l'aldéhyde de formule W4 selon l'invention

Le procédé de fabrication de l'aldéhyde de formule **W4** : 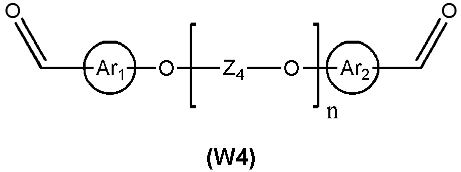 dans laquelle n est supérieur ou égal à 1 et de préférence, supérieur ou égal à 2, et dans lequel les noyaux Ar₁, Ar₂ sont identiques, comprend une étape C durant laquelle on fait réagir :
- un réactif de formule Ha-[Z₄-O]ₙ₋₁-Z₄-Ha dans laquelle Ha représente un halogène, et
- un réactif de formule

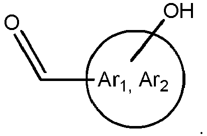

Dans un mode de réalisation, dans une étape B préalable à l'étape C, on fait réagir :
- un réactif de formule LG-[Z₄-O]ₙ₋₁-Z₄-LG, dans laquelle LG représente un groupe de formule V-SO₃- dans laquelle V représente un radical monovalent hydrocarboné ou un radical monovalent hydrocarboné substitué et
- un halogènure nucléophile.

Un halogénure nucléophile peut par exemple être un halogénure de lithium ou bien un halogénure d'hydrogène.

Dans un mode de réalisation, dans une étape A préalable à l'étape B, on fait réagir :
- un réactif de formule OH-[Z₄-O]ₙ₋₁-Z₄-OH, et
- un réactif de formule V-SO₂-Hb dans laquelle V représente un radical monovalent hydrocarboné ou un radical monovalent hydrocarboné substitué et Hb représente un halogène.

Avantageusement, V représente un radical monovalent choisi dans le groupe constitué par les radicaux alkyle, aryle, arylalkyle, alkylaryle, cycloalkyle, alcényle, de préférence V représente un radical monovalent alkyl et plus préférentiellement méthyle.

### Procédé de fabrication de l'aldéhyde de formule W5 selon l'invention

Le procédé de fabrication de l'aldéhyde de formule **W5** : 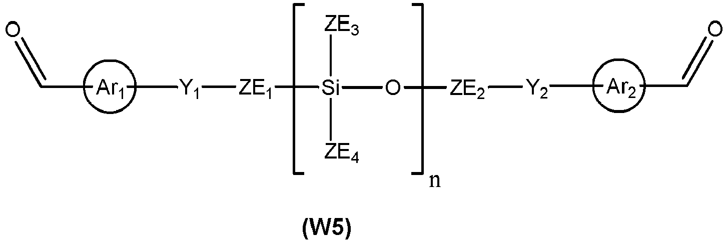 dans laquelle n est supérieur ou égal à 1 et de préférence, supérieur ou égal à 2 et dans lequel les noyaux Ar₁, Ar₂ sont identiques et Y₁, Y₂ représentant chacun l'oxygène, comprend une étape C durant laquelle on fait réagir :
- un réactif de formule Ha-ZE₁-[Si(ZE₃ZE₄)-O]ₙ-ZE₂-Ha dans laquelle Ha représente un halogène, et
- un réactif de formule

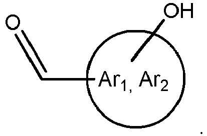

Dans un mode de réalisation, dans une étape B préalable à l'étape C, on fait réagir :
- un réactif de formule LG-ZE₁-[Si(ZE₃ZE₄)-O]ₙ-ZE₂-LG, dans laquelle LG représente un groupe de formule V-SO₃- dans laquelle V représente un radical monovalent hydrocarboné ou un radical monovalent hydrocarboné substitué et
- un halogènure nucléophile.

Un halogénure nucléophile peut par exemple être un halogénure de lithium ou bien un halogénure d'hydrogène.

Dans un mode de réalisation, dans une étape A préalable à l'étape B, on fait réagir :
- un réactif de formule HO-ZE₁-[Si(ZE₃ZE₄)-O]ₙ-ZE₂-OH, et
- un réactif de formule V-SO₂-Hb dans laquelle V représente un radical monovalent hydrocarboné ou un radical monovalent hydrocarboné substitué et Hb représente un halogène.

Avantageusement, V représente un radical monovalent choisi dans le groupe constitué par les radicaux alkyle, aryle, arylalkyle, alkylaryle, cycloalkyle, alcényle, de préférence V représente un radical monovalent alkyl et plus préférentiellement méthyle.

Dans un des modes de réalisation, l'aldéhyde A1 de formule W présente la formule **SP10** suivante :

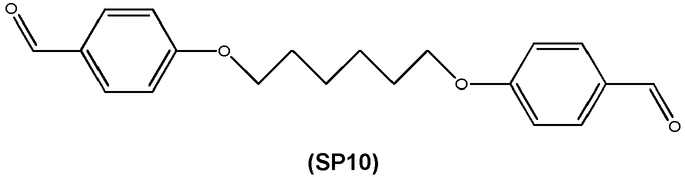

L'aldéhyde **SP10** est préparé à partir du 1,6-dibromohexane (CAS 629-03-8) et du 4-hydroxybenzaldéhyde (CAS 123-08-0) en présence d'une base minérale dans un solvant organique. Ainsi, par exemple, on introduit 30 g de 1,6 dibromohexane, 30 g de 4-hydroxybenzaldéhyde, 68 g de K₂CO₃ dans 300 mL de DMF. On agite le tout à 110°C pendant 24 heures. Puis, on filtre le mélange réactionnel et on réalise 5 extractions aqueuses suivi de 2 extractions en présence de LiBr. Le produit est alors récupéré par filtration des sels et évaporation des solvants. On obtient 33,4 g de l'aldéhyde **SP10**. (RMN ¹H (CDCl₃, 300 MHz) : 9.88 (2H, s), 7.82 (4H, d), 7.01 (4H, d), 4.07 (4H, t), 1.87 (4H, m), 1.58 (4H, m)).

Dans un autre mode de réalisation, l'aldéhyde A1 de formule **W** présente la formule **SP11** suivante (CAS 34074-28-7) :

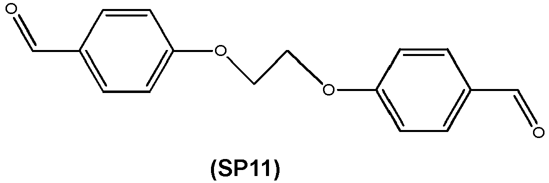

L'aldéhyde **SP11** est préparé d'une façon analogue à l'aldéhyde **SP10** à partir du 1,2-dibromoéthane (CAS 106-93-4) et du 4-hydroxybenzaldéhyde (CAS 123-08-0). (RMN ¹H (CDCl₃, 300 MHz) : 9.92 (2H, s), 7.86 (4H, m), 7.09 (4H, m), 4.46 (4H,s)).

Dans encore un autre mode de réalisation, l'aldéhyde A1 de formule **W** présente la formule **SP12** suivante (CAS 69285-82-1) :

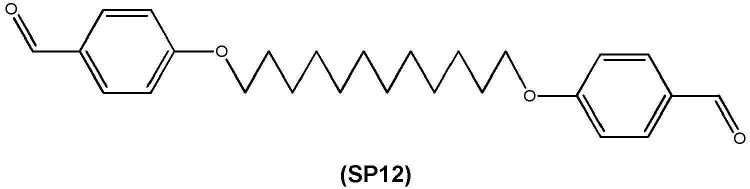

L'aldéhyde **SP12** est préparé d'une façon analogue à l'aldéhyde **SP10** à partir du 1,10-dibromodécane (CAS 4101-68-2) et du 4-hydroxybenzaldéhyde (CAS 123-08-0). (RMN ¹H (CDCl₃, 300 MHz) : 9.88 (2H, s), 7.81 (4H, d), 6.98 (4H, d), 4.04 (4H, t), 1.82 (4H, q), 1.31 (16H, m)).

Dans un autre mode de réalisation, l'aldéhyde A1 de formule **W** présente la formule **SP13** suivante (CAS 64621-41-6) :

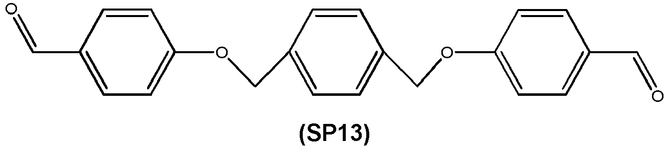

L'aldéhyde **SP13** est préparé d'une façon analogue à l'aldéhyde **SP10** à partir du 1,4-bis(bromométhyl)benzène (CAS 623-24-5) et du 4-hydroxybenzaldéhyde (CAS 123-08-0). (RMN ¹H (CDCl3, 300 MHz) : 9.91 (2H, s), 7.88 (4H, d), 7.49 (4H, s), 7.08 (4H, d), 5.19 (4H, s)).

Dans un autre mode de réalisation, l'aldéhyde A1 de formule **W** présente la formule **SP14** suivante (CAS 112116-24-2):

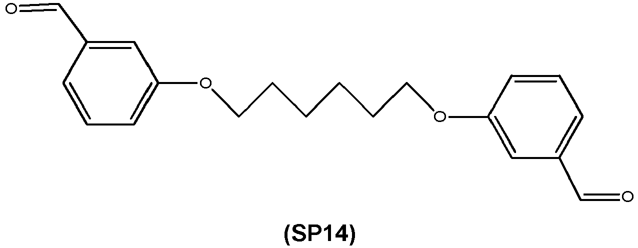

L'aldéhyde **SP14** est préparé d'une façon analogue à l'aldéhyde **SP10** à partir du 1,6-dibromohexane (CAS 629-03-8) et du 3-hydroxybenzaldéhyde (CAS 100-83-4). (RMN ¹H (CDCl3, 300 MHz): 9.98 (2H, s), 7.46 (6H, m), 7.18 (2H, m), 4.05 (4H, t), 1.87 (4H, m), 1.58 (4H, m)).

Dans encore un autre mode de réalisation, l'aldéhyde A1 de formule **W** présente la formule **SP15** suivante (CAS 64621-35-8):

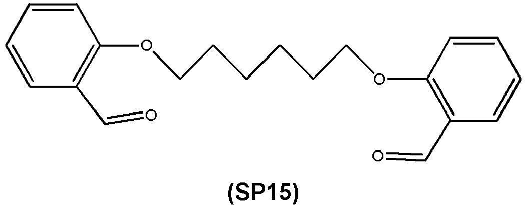

L'aldéhyde **SP15** est préparé d'une façon analogue à l'aldéhyde **SP10** à partir du 1,6-dibromohexane (CAS 629-03-8) et du 2-hydroxybenzaldéhyde (CAS 90-02-8). (RMN ¹H (CDCl3, 300 MHz) : 10.53 (2H, s), 7.83 (2H, m), 7.56 (2H,m), 7.01 (4H, m), 4.12 (4H, t), 1.90 (4H, m), 1.62 (4H, m)).

Dans un autre mode de réalisation, l'aldéhyde A1 de formule **W** présente la formule **SP16** suivante (CAS 79293-43-9):

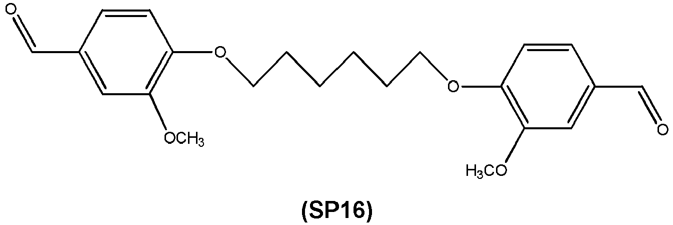

L'aldéhyde **SP16** est préparé d'une façon analogue à l'aldéhyde **SP10** à partir du 1,6-dibromohexane (CAS 629-03-8) et du 4-hydroxy-3-méthoxybenzaldéhyde (CAS 121-33-5). (RMN ¹H (CDCl3, 300 MHz) : 9.86 (2H, s), 7.42 (4H, m), 6.96 (2H, d), 4.13 (4H, t), 3.93 (6H, s), 1.94 (4H, m), 1.59 (4H, m)).

Les modes de réalisation correspondants aux aldéhydes SP10 à SP16 ont en commun le fait que chaque aldéhyde A1 de formule **W est** tel que la masse molaire de l'aldéhyde de formule **W est** inférieure ou égale à 500 g.mol⁻¹. De plus, SP sépare les groupes Ar₁ et Ar₂ par un nombre de liaisons covalentes inférieur ou égal à 20, de préférence inférieur ou égal à 15.

Chaque aldéhyde SP10 à SP16 est de formule **W3** dans laquelle Y₁-U-Y₂ représente un radical divalent avec Y₁ représentant chacun, indépendamment l'un de l'autre, un groupe choisi dans le groupe constitué par l'oxygène, un groupe CH₂, un groupe C=O, un groupe S=O et un groupe SO2, de préférence, dans le groupe constitué par l'oxygène, un groupe S=O et un groupe SO2 et plus préférentiellement Y₁ et Y₂ représentant chacun l'oxygène. U représente un radical divalent choisi dans le groupe constitué par un radical hydrocarboné et un radical hydrocarboné substitué.

En l'espèce, U représente un radical divalent choisi dans le groupe constitué par les radicaux alkylène (SP10, SP11, SP12, SP14, SP15, SP16), arylène, arylalkylène, alkylarylène, cycloalkylène, alcénylène, AL-AR-AL avec AL représentant des radicaux monovalents alkyl et AR représentant un groupe aryl (SP13), AR-AL-AR avec AR représentant des radicaux monovalents aryl et AL représentant un groupe alkyl.

Pour chaque aldéhyde SP10, SP11, SP12, SP14, SP15 et SP16, U représente un radical divalent alkylène linéaire comprenant un nombre d'atomes de carbone allant de 1 à 15, de préférence de 2 à 12 et plus préférentiellement de 2 à 8. Ce nombre d'atomes de carbone est égal à 6 pour les aldéhydes SP10, SP14, SP15, SP16. Ce nombre d'atomes de carbone est égal à 2 pour l'aldéhyde SP11. Ce nombre d'atomes de carbone est égal à 12 pour l'aldéhyde SP12.

Dans encore un autre mode de réalisation, l'aldéhyde A1 de formule **W** est de formule **W4.** Z₄ est alors un radical divalent alkylène linéaire, en l'espèce un radical butylène. L'aldéhyde A1 de formule **W** présente la formule **SP50** suivante : 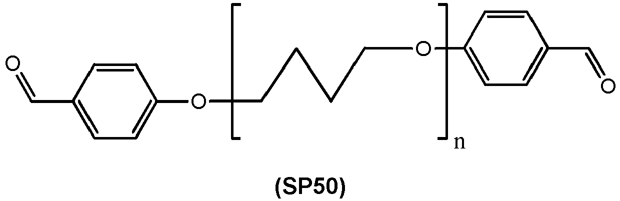 avec n compris entre 3 et 4.

L'aldéhyde **SP50** est préparé à partir du poly(tétrahydrofurane) (poly(THF)) selon la voie de synthèse suivante :

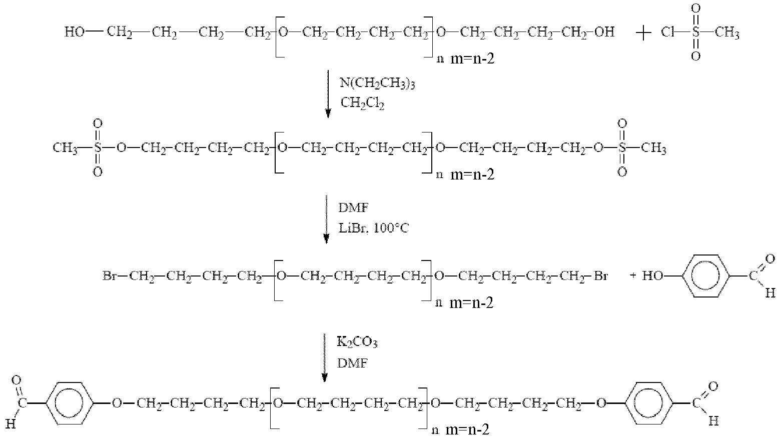

Dans une première étape, on fait réagir un poly(THF) présentant une masse molaire d'environ 250 g.mol⁻¹ (Référence Sigma-Aldrich 345261 - CAS 25190-06-1) et le chlorure de méthanesulfonyle (CAS 124-63-0) en présence d'une base organique, ici la triéthylamine dans un solvant organique, ici le dichlorométhane. Ainsi, par exemple, dans un ballon bicol sont introduits 35 g de poly(THF), 46.75 g (3.3 eq) de triéthylamine (CAS 121-44-8) dans 500 mL de dichlorométhane. On refroidit le milieu réactionnel (0°C) et on ajoute ensuite goutte à goutte 48.09 g (3 eq) de chlorure de mésyle (CAS 124-63-0). Le ballon est équipé d'un réfrigérant, puis le mélange est placé sous agitation magnétique pendant 1 heure. Une fois la synthèse terminée on ajoute 500 mL de dichlorométhane. On effectue une extraction aqueuse acide (HCI 0.5 M) pour éliminer la triéthylamine en excès puis un lavage à l'eau. On sèche sur Na₂SO₄ on filtre et on évapore. On obtient un liquide marron avec un rendement de 95%.

Puis, dans une deuxième étape, on substitue les groupements mésylates par des groupes halogènures, ici des bromures en faisant réagir le poly(THF) substitué avec du bromure de lithium (CAS 7550-35-8) dans un solvant organique. Ainsi, par exemple, dans un ballon monocol sont introduits 54.5 g de polyTHF dimésylé, 36.7 g (4 eq) de LiBr (CAS 7550-35-8), et 500 mL de N,N-diméthylformamide. Le ballon est équipé d'un réfrigérant, puis le mélange est placé sous agitation magnétique à 100°C pendant 4 heures. Après refroidissement à température ambiante, 1000 mL d'acétate d'éthyle sont ajoutés au mélange. Cinq extractions aqueuses sont alors effectuées afin d'éliminer le LiBr. La phase organique est ensuite séchée sur sulfate de sodium anhydre, puis l'acétate d'éthyle est éliminé par évaporation sous vide. Le produit final est un liquide marron obtenu avec un rendement de 86%.

Enfin, lors d'une troisième étape, on fait réagir le produit intermédiaire dibromé et le 4-hydroxybenzaldéhyde (CAS 123-08-0) en présence d'une base minérale dans un solvant organique. Ainsi, par exemple, dans un ballon monocol sont introduits 42 g de poly(THF) dibromé, 28.04 g (2.05 eq) de 4-hydroxybenzaldehyde, 63.46 g (4 eq) de carbonate de potassium et 500 mL de N,N-diméthylformamide. Le ballon est équipé d'un réfrigérant, puis le mélange est placé sous agitation magnétique à 110°C pendant 4 heures. Après refroidissement à température ambiante, 1000 mL d'acétate d'éthyle sont ajoutés au mélange. Cinq extractions aqueuses sont alors effectuées afin d'éliminer le 4-hydroxybenzaldéhyde et le carbonate de potassium en excès, ainsi que le N,N-diméthylformamide. La phase organique est ensuite séchée sur sulfate de sodium anhydre, puis l'acétate d'éthyle est éliminé par évaporation sous vide. On obtient l'aldéhyde **SP50** sous la forme d'un liquide jaune avec un rendement de 86%.

L'indice de benzaldéhyde est titré de façon connue par l'homme du métier par RMN ¹H (CDCl₃) en comparant le singulet à 6.85 ppm correspondant aux 2H de la double liaison C=C du diéthyl fumarate et le triplet dédoublé à 7.82 ppm correspondant aux 2 protons aromatiques de chaque benzaldéhyde d'une masse connue d'aldéhyde **SP50** à titrer. L'indice de benzaldéhyde de l'aldéhyde **SP50** est égal à 3,77. (RMN ¹H (CDCl3, 300 MHz) : 9.89 (2H, s), 7.85 (4H, d), 6.98 (4H, d), 4.08 (4H, t), 3.49 (4H + 4Hₙ, m), 1.65 (8H + 4Hₙ, m)).

Dans encore un autre mode de réalisation, l'aldéhyde A1 de formule **W** est également de formule **W4** et présente la formule **SP51** suivante : 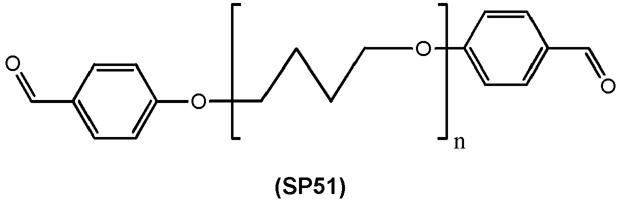 avec n compris entre 13 et 14.

L'aldéhyde **SP51** est préparé d'une façon analogue à l'aldéhyde **SP50** à partir d'un poly(THF) présentant une masse molaire d'environ 1000 g.mol⁻¹ (Référence Sigma-Aldrich 345296 - CAS 25190-06-1).

L'indice de benzaldéhyde de l'aldéhyde **SP51** est titré d'une façon analogue à celui de l'aldéhyde **SP50.** L'indice de benzaldéhyde de l'aldéhyde **SP51** est égal à 1,36. (RMN ¹H (CDCl3, 300 MHz) : 9.89 (2H, s), 7.82 (4H, d), 6.98 (4H, d), 4.08 (4H, t), 3.42 (4H + 4Hₙ, m), 1.62 (8H + 8Hₙ, m)).

Dans encore un autre mode de réalisation, l'aldéhyde A1 de formule W est de formule **W5** dans laquelle Y₁=Y₂=O, chaque radical ZE₁, ZE₂ représente un radical divalent alkylène linéaire, en l'espèce propylène, chaque radical ZE₃, ZE₄ représente un radical monovalent alkyl, en l'espèce méthyl. L'aldéhyde A1 de formule W présente la formule **SP52** suivante : 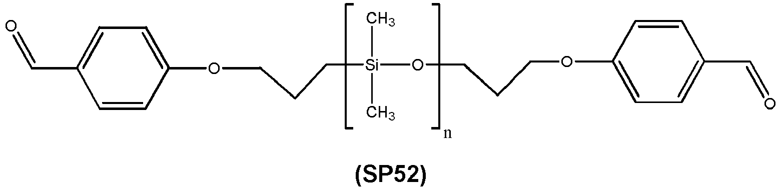 avec n compris entre 5 et 9.

L'aldéhyde **SP52** est préparé d'une façon analogue à l'aldéhyde **SP50** à partir d'un polydiméthylsiloxane diol (PDMS diol) présentant une masse molaire comprise entre 600 et 850 g.mol⁻¹ (Référence ABCR GmbH AB146673 - CAS 104780-66-7).

L'indice de benzaldéhyde de l'aldéhyde **SP52** est titré d'une façon analogue à celui de l'aldéhyde **SP50.** L'indice de benzaldéhyde de l'aldéhyde **SP52** est égal à 2,16. (RMN ¹H (CDCl3, 300 MHz) : 9.80 (2H, s), 7.73 (4H, m), 6.89 (4H, m), 3.93 (4H, m), 1.78 (4H, m), 0.56 (4H, m), 0.01 (6H + 6Hₙ, m)).

Les modes de réalisation correspondants aux aldéhydes SP50, SP51 et SP52 ont en commun le fait que chaque aldéhyde SP50, SP51 et SP52 de formule **W** est tel que SP sépare les groupes Ar₁ et Ar₂ par un nombre de liaisons covalentes strictement supérieur à 15 et SP représente un radical choisi dans le groupe constitué par les radicaux polyester, polyéther, polydiène, polyalkylène et polysilicone et les associations de ces radicaux, de préférence dans le groupe constitué par les radicaux polyéther (SP50 et SP51) et polysilicone (SP52) et les associations de ces radicaux. Ici, le radical est divalent.

Dans encore un autre mode de réalisation, l'aldéhyde A1 de formule **W est** de formule **W2** : 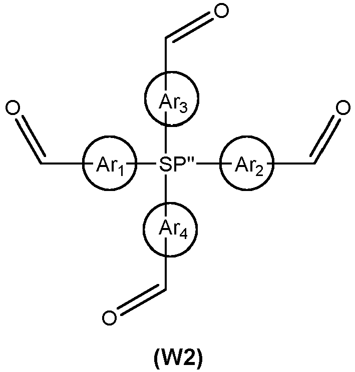 dans laquelle :
- chaque groupe Ar₁, Ar₂, Ar₃ et Ar₄ représente, indépendamment l'un de l'autre, un noyau aromatique, éventuellement substitué ;
- SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

Plus précisément, l'aldéhyde A1 de formule **W** présente la formule **SP30** suivante :

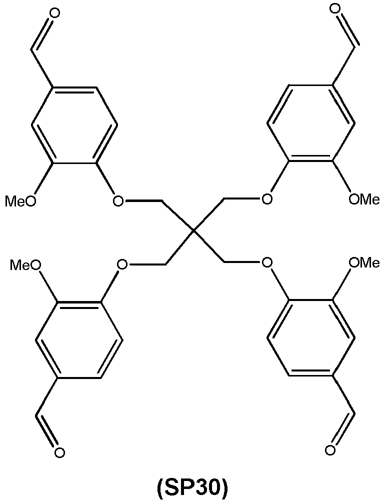

L'aldéhyde **SP30** est préparé d'une façon analogue à l'aldéhyde SP10 à partir du tétrabromure de pentaérythritol (CAS 3229-00-3) et du 4-hydroxy-3-méthoxybenzaldéhyde (CAS 121-33-5). (RMN ¹H (CDCl₃, 300 MHz) : 9.84 (4H, s), 7.08-7.44 (12H, m), 4.58 (8H, s), 3.79 (12H, s)).

. Dans les différents modes de réalisations décrits, chaque groupe SP, SP', SP", K₁, K₂, K₃ et K₄ est dépourvu de fonction réactive vis-à-vis du polyphénol aromatique A2 et de son dérivé.

Dans les différents modes de réalisations décrits, chaque groupe SP, SP', SP", K₁, K₂, K₃ et K₄ est dépourvu de fonction réactive vis-à-vis des autres constituants de la composition de caoutchouc.

Par fonction réactive, on entend ici une fonction qui réagirait dans des conditions réactionnelles nécessaires à la régénération du polyphénol aromatique et dans des conditions réactionnelles nécessaires à la réticulation de la résine.

### I.2 - Dérivé de de polyphénol aromatique A2

Le deuxième constituant essentiel de la résine et de la composition est un dérivé de polyphénol aromatique A2 comportant un ou plusieurs noyau(x) aromatique(s). Le dérivé de polyphénol aromatique comprend au moins un noyau aromatique porteur d'au moins deux groupes -O-Z en position méta l'un par rapport à l'autre, les deux positions ortho d'au moins un de ces groupes -O-Z étant non substituées.

Conformément à l'invention, le dérivé de polyphénol aromatique A2 peut être, dans un mode de réalisation, une molécule simple de dérivé de polyphénol aromatique comprenant un ou plusieurs noyaux aromatiques, au moins un de ces noyaux aromatiques, voire chaque noyau aromatique, étant porteur d'au moins deux groupes -O-Z en position méta l'un par rapport à l'autre, les deux positions ortho d'au moins un de ces groupes -O-Z étant non substituées.

De telles molécules simples ne comprennent pas de motif répétitif.

Conformément à l'invention, le dérivé de polyphénol aromatique A2 peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé comprenant au moins une fonction aldéhyde et/ou au moins un composé comprenant au moins deux fonctions hydroxyméthyle portées par un noyau aromatique,
les fonctions hydroxyles de la résine pré-condensée libres à l'issue de la condensation de la résine pré-condensée étant substituées par des groupes -O-Z.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux groupes -O-Z en position méta l'un par rapport à l'autre, les deux positions ortho d'au moins un de ces groupes -O-Z étant non substituées. Dans ce mode de réalisation, afin de former le dérivé de polyphénol aromatique A2 sous forme de résine pré-condensée, on forme la résine pré-condensée à base d'un polyphénol aromatique comprenant au moins un noyau aromatique porteur d'au moins deux fonctions hydroxyles -OH en position méta l'une par rapport à l'autre, les deux positions ortho d'au moins une des fonctions hydroxyles -OH étant non substituées, et on fait réagir cette résine pré-condensée avec un composé permettant de former le groupe -O-Z à partir de chaque fonction hydroxyle restées libres à l'issue de la condensation de la résine pré-condensée.

Dans un autre mode de réalisation, le dérivé de polyphénol aromatique A2 est un mélange d'un dérivé d'un polyphénol aromatique formant une molécule simple et d'une résine pré-condensée à base de polyphénol aromatique dans laquelle les fonctions hydroxyles de la résine pré-condensée libres à l'issue de la condensation de la résine pré-condensée sont substituées par des groupes -O-Z.

Dans les modes de réalisation particuliers qui suivent, on décrit le ou les noyaux aromatiques du dérivé de polyphénol aromatique. Par souci de clarté, on y décrit le « dérivé du polyphénol aromatique » sous sa forme de molécule simple. Le polyphénol aromatique à l'origine des dérivés correspondants pourront ensuite être condensés et définiront en partie le motif répétitif. Les caractéristiques de la résine pré-condensée sont décrites plus en détail par la suite.

Dans un mode de réalisation préféré, le noyau aromatique du dérivé du polyphénol aromatique est porteur de trois groupes -O-Z en position méta les uns par rapport aux autres.

De préférence, les deux positions ortho de chaque groupe -O-Z sont non substituées. On entend par là que les deux atomes de carbone situés de part et d'autre (en position ortho) de l'atome de carbone porteur du groupe -O-Z sont porteurs d'un simple atome d'hydrogène.

Encore plus préférentiellement, le reste du noyau aromatique du dérivé du polyphénol aromatique est non substitué. On entend par là que les autres atomes de carbone du reste du noyau aromatique (ceux autres que les atomes de carbone porteurs des groupes -O-Z) sont porteurs d'un simple atome d'hydrogène.

Dans un mode de réalisation, le dérivé du polyphénol aromatique comprend plusieurs noyaux aromatiques, au moins deux d'entre eux étant chacun porteur d'au moins deux groupes -O-Z en position méta l'un par rapport à l'autre, les deux positions ortho d'au moins un des groupes -O-Z d'au moins un noyau aromatique étant non substituées.

Dans un mode de réalisation préféré, au moins un des noyaux aromatiques du dérivé du polyphénol aromatique est porteur de trois groupes -O-Z en position méta les uns par rapport aux autres.

De préférence, les deux positions ortho de chaque groupe -O-Z d'au moins un noyau aromatique sont non substituées.

Encore plus préférentiellement, les deux positions ortho de chaque groupe -O-Z de chaque noyau aromatique sont non substituées.

Avantageusement, chaque noyau aromatique du dérivé du polyphénol aromatique est un noyau benzénique.

A titre d'exemple de dérivé de polyphénol aromatique comportant un seul noyau aromatique, on peut citer en particulier, les dérivés du résorcinol et du phloroglucinol, de formules développées (IV) et (V) :

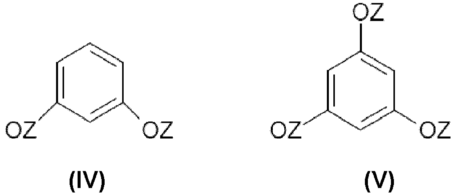

A titres d'exemples, dans le cas où le dérivé du polyphénol aromatique comporte plusieurs noyaux aromatiques, au moins deux de ces noyaux aromatiques, identiques ou différents, sont choisis parmi ceux de formules générales : 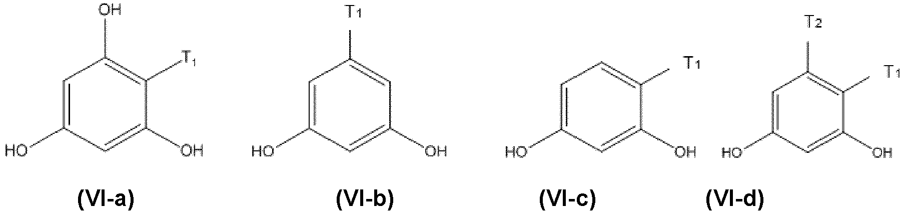 dans lesquelles les symboles T₁, T₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du dérivé du polyphénol aromatique.

Un autre exemple de dérivé de polyphénol aromatique est un dérivé du 2,2',4,4'-tétrahydroxydiphényl sulfide, dérivé ayant la formule développée suivante (VII) :

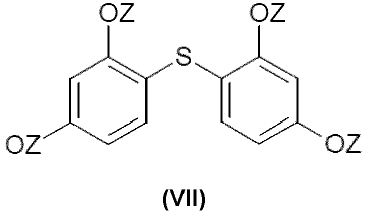

Un autre exemple de dérivé de polyphénol aromatique est un dérivé de la 2,2',4,4'-tétrahydroxydiphényl benzophénone, dérivé de formule développée suivante (VIII) :

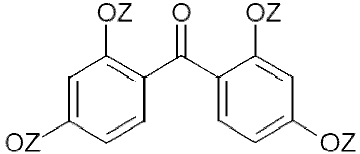

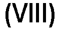

On note que chaque dérivé **VII** et **VIII** est un dérivé de polyphénol aromatique comportant deux noyaux aromatiques (de formules **VI-c**) dont chacun est porteur d'au moins deux (en l'occurrence de deux) groupes -O-Z en position méta l'un par rapport à l'autre.

On note que dans le cas d'un dérivé d'un polyphénol aromatique comportant au moins un noyau aromatique conforme à la formule **VI-b,** les deux positions ortho de chaque groupe -O-Z d'au moins un noyau aromatique sont non substituées. Dans le cas d'un dérivé d'un polyphénol aromatique comportant plusieurs noyaux aromatiques conformes à la formule **VI-b,** les deux positions ortho de chaque groupe -O-Z de chaque noyau aromatique sont non substituées.

Selon un mode de réalisation de l'invention, le dérivé du polyphénol aromatique est choisi dans le groupe constitué par un dérivé du résorcinol (**IV**), un dérivé du phloroglucinol (**V**), un dérivé du 2,2',4,4'-tétrahydroxydiphényl sulfide (**VII**), un dérivé de la 2,2',4,4'-tétrahydroxybenzophenone (**VIII**) et les mélanges de ces dérivés. Dans un mode de réalisation particulièrement avantageux, le dérivé du polyphénol aromatique est un dérivé du phloroglucinol (**V**).

Dans un mode de réalisation, le dérivé A2 comprend une résine pré-condensée à base d'un polyphénol aromatique tel que décrit dans l'un quelconque de ces modes de réalisations, les fonctions hydroxyles de la résine pré-condensée libres à l'issue de la condensation de la résine pré-condensée étant substituées par des groupes -O-Z.

Cette résine pré-condensée est avantageusement à base :
- d'au moins un polyphénol aromatique tel que défini précédemment, et préférentiellement choisi dans le groupe constitué par le résorcinol, le phloroglucinol , le 2,2',4,4'-tétrahydroxydiphényl sulfide, la 2,2',4,4'-tétrahydroxybenzophenone , et leurs mélanges ; et
- d'au moins un composé comprenant au moins une fonction aldéhyde et/ou au moins un composé comprenant au moins deux fonctions hydroxyméthyle portées par un noyau aromatique,
les fonctions hydroxyles de la résine pré-condensée libres à l'issue de la condensation de la résine pré-condensée étant substituées par des groupes -O-Z.

Le composé susceptible de réagir avec ledit polyphénol aromatique comprenant au moins une fonction aldéhyde et/ou le composé susceptible de réagir avec ledit polyphénol aromatique comprenant au moins deux fonctions hydroxyméthyle portées par un noyau aromatique et réagissant avec ledit polyphénol aromatique peut être un aldéhyde A1 tel que défini précédemment au paragraphe I.1, un composé de formule Ar-(CHO)₂, où Ar est un noyau aromatique, de préférence à 5 ou 6 chaînons, ou tout autre aldéhyde. Avantageusement, le composé susceptible de réagir avec ledit polyphénol aromatique comprenant au moins une fonction aldéhyde et/ou le composé susceptible de réagir avec ledit polyphénol aromatique comprenant au moins deux fonctions hydroxyméthyle portées par un noyau aromatique est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le benzaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé susceptible de réagir avec ledit polyphénol aromatique est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de polyphénol aromatique, le motif répétitif comprend au moins un noyau aromatique porteur d'au moins deux fonctions hydroxyle en position méta l'une par rapport à l'autre, au moins un des atomes de carbone du noyau aromatique, qui était non substitué avant la condensation de la résine pré-condensée, étant relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec un aldéhyde A1 conforme à l'invention dans une étape ultérieure.

Le dérivé de polyphénol aromatique A2 peut également comprendre un mélange d'une molécule libre de dérivé de polyphénol aromatique et d'une résine pré-condensée à base de polyphénol aromatique, les fonctions hydroxyles de la résine pré-condensée libres à l'issue de la condensation de la résine pré-condensée étant substituées par des groupes -O-Z. En particulier, le dérivé de polyphénol aromatique A2 peut également comprendre un mélange de dérivé du phloroglucinol et d'une résine pré-condensée à base de phloroglucinol, les fonctions hydroxyles de la résine pré-condensée libres à l'issue de la condensation de la résine pré-condensée étant substituées par des groupes -O-Z.

Les définitions du groupe -O-Z qui suivent s'appliquent aussi bien au dérivé de polyphénol aromatique sous sa forme de molécule simple ou de résine pré-condensée.

Avantageusement, chaque groupe -O-Z est choisi dans le groupe constitué par les groupes -O-Si(R₁R₂R₃), -O-C((=O)(R₄)) et -O-C((=O)(N(R₅R₆))). Chaque groupe R₁, R₂, R₃ et R₄ représente, indépendamment l'un de l'autre, un radical hydrocarboné ou un radical hydrocarboné substitué. Chaque groupe R₅ et R₆ représente, indépendamment l'un de l'autre, l'hydrogène, un radical hydrocarboné ou un radical hydrocarboné substitué.

Avantageusement, chaque groupe -O-Z est dépourvu de fonction réactive vis-à-vis de l'aldéhyde A1. Dans les différents modes de réalisations décrits, chaque radical R₁, R₂, R₃, R₄, R₅ et R₆ est dépourvu de fonction réactive vis-à-vis de l'aldéhyde A1. Par fonction réactive, on entend ici une fonction qui réagirait dans des conditions réactionnelles nécessaires à la régénération du polyphénol aromatique et dans des conditions réactionnelles nécessaires à la réticulation de la résine. Ainsi, chaque groupe -O-Z est dépourvu de fonction réactive vis-à-vis des fonctions aldéhyde et hydroxyméthyle. Dans les différents modes de réalisations décrits, chaque radical R₁, R₂, R₃, R₄, R₅ et R₆ est dépourvu de fonction réactive vis-à-vis des fonctions aldéhyde et hydroxyméthyle.

Avantageusement, chaque groupe -O-Z est dépourvu de fonction réactive vis-à-vis des autres constituants de la composition de caoutchouc. Dans les différents modes de réalisations décrits, chaque radical R₁, R₂, R₃, R₄, R₅ et R₆ est dépourvu de fonction réactive vis-à-vis des autres constituants de la composition de caoutchouc.

Dans un mode de réalisation, chaque groupe -O-Z représente un groupe - O-Si(R₁R₂R₃) avec R₁, R₂, R₃ représentant, indépendamment l'un de l'autre, un radical choisi dans le groupe constitué par les radicaux alkyle, aryle, arylalkyle, alkylaryle, cycloalkyle, alcényle. Préférentiellement, chaque groupe R₁, R₂, R₃ représente, indépendamment l'un de l'autre, un radical choisi dans le groupe constitué par les radicaux méthyle, éthyle, propyle, phényle, allyle, vinyle et encore plus préférentiellement un radical choisi dans le groupe constitué par les radicaux méthyle, éthyle, propyle, butyle, allyle, vinyle.

Dans le mode de réalisation dans lequel chaque groupe -O-Z représente un groupe -O-Si(R₁R₂R₃), le dérivé du polyphénol aromatique peut être tel que R₁=R₂=R₃=CH₃ et présente la formule (**1**) suivante :

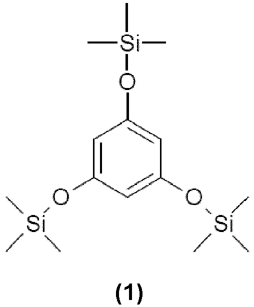

Le dérivé (1) est préparé à partir de phloroglucinol (CAS 108-73-6) et de chlorure de triméthylsilyle (CAS 75-77-4) en présence d'une base organique. Ainsi, par exemple, on dissout 40 g de phloroglucinol dans 800 mL de chloroforme. Puis, on ajoute ensuite 109 g de triéthylamine. Puis on ajoute au goutte-à-goutte 107 g de chlorure de triméthylsilyle ClSi(CH₃)₃ au milieu réactionnel à température ambiante. On laisse le tout à température ambiante sous agitation pendant 3 heures. Puis, on acidifie le mélange réactionnel avec une solution aqueuse d'acide chlorhydrique à 37%. Puis, on réalise deux lavages à l'eau. Le produit final est finalement récupéré après séchage sur sulfate de sodium anhydre, filtration et évaporation du solvant. On obtient 150 g du dérivé (1) sous la forme d'un liquide brun. (RMN ¹H (CDCl₃, 300 MHz) : 6.03 (3H, s), 0.27 (27H, s)).

Dans le mode de réalisation dans lequel chaque groupe -O-Z représente un groupe -O-Si(R₁R₂R₃), le dérivé du polyphénol aromatique peut être tel que R₁=R₂=CH₃, R₃=CH=CH₂ et présente la formule (2) suivante :

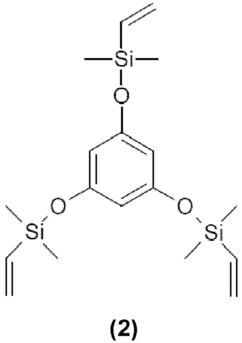

Le dérivé (**2**) est préparé d'une façon analogue au dérivé (**1**) à partir du phloroglucinol (CAS 108-73-6) et du chlorure de diméthylvinylsilyle (CAS 1719-58-0). (RMN ¹H (CDCl₃, 300 MHz): 6.15-5.60 (9H, m), 5.89 (3H, s), 0.15 (18H, s)).

Dans le mode de réalisation dans lequel chaque groupe -O-Z représente un groupe -O-Si(R₁R₂R₃), le dérivé du polyphénol aromatique peut être tel que R₁=CH₃, R₂=R₃=C₆H₆ et présente la formule (**3**) suivante :

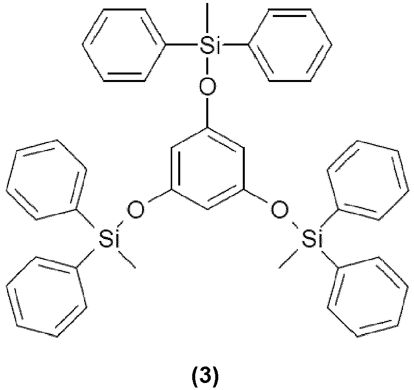

Le dérivé (**3**) est préparé d'une façon analogue au dérivé (**1**) à partir du phloroglucinol (CAS 108-73-6) et du chlorure de méthyldiphénylsilyle (CAS 144-79-6). (RMN ¹H (CDCl₃, 300 MHz) : 7.70-7.30 (30H, m), 6.03 (3H, s), 0.59 (9H, s)).

Dans un autre mode de réalisation, chaque groupe -O-Z représente un groupe -O-C((=O)(R₄)) avec R₄ représentant un radical choisi dans le groupe constitué par les radicaux alkyle, aryle, arylalkyle, alkylaryle, cycloalkyle, alcényle. Préférentiellement, R₄ représente un radical choisi dans le groupe constitué par les radicaux méthyle, éthyle, propyle, butyle, allyle, vinyle.

Dans ce mode de réalisation, le dérivé du polyphénol aromatique peut être tel que R₄=CH₃ et présente la formule (**4**) (CAS 2999-40-8) suivante :

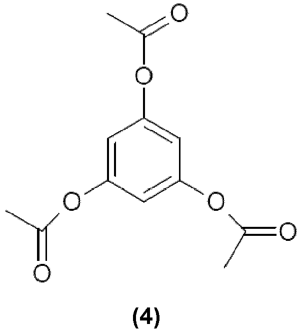

Le dérivé (**4**) est préparé à partir de phloroglucinol (CAS 108-73-6) et de chlorure d'acétyle (CAS 75-36-5) en présence d'une base organique. Ainsi, par exemple, on dissout 18 g de phloroglucinol, 64 g de triéthylamine dans 450 mL de tétrahydrofurane. Puis on ajoute au goutte-à-goutte 45 g de chlorure d'acétyle au milieu réactionnel à température ambiante. On laisse le tout à température ambiante sous agitation pendant 3 heures. Puis, le milieu réactionnel est filtré et le tétrahydrofurane évaporé. On dissout ensuite le produit dans le chloroforme et on réalise une extraction acide suivi d'une extraction à l'eau claire. Le produit final est finalement récupéré après séchage sur sulfate de sodium anhydre, filtration et évaporation du solvant. On obtient 36 g du dérivé sous la forme d'une poudre jaune. (RMN ¹H (CDCl₃, 300 MHz) : 6.85 (3H, s), 2.28 (9H, s)).

Dans ce mode de réalisation, le dérivé du polyphénol aromatique peut être tel que R₄=C₁₇H₃₅ et présente la formule (5) suivante :

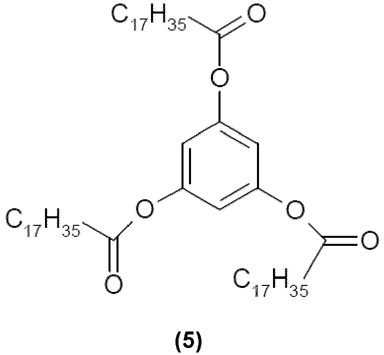

Le dérivé (**5**) est préparé d'une façon analogue au dérivé (**4**) à partir du phloroglucinol (CAS 108-73-6) et du chlorure de stearolyle (CAS 112-76-5). (RMN ¹H (CDCl₃, 300 MHz) : 6.84 (3H, s), 2.47 (6H, t), 1.87-1.16 (90H, m) 0.90 (9H, t)).

Dans ce mode de réalisation, le dérivé du polyphénol aromatique de la composition I6 est tel que R₄=C₁₁H₂₃, et présente la formule (**6**) suivante :

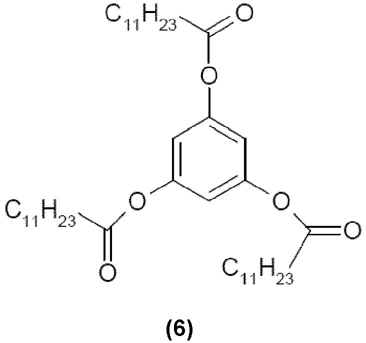

Le dérivé (**6**) est préparé d'une façon analogue au dérivé (**4**) à partir du phloroglucinol (CAS 108-73-6) et du chlorure de lauroyle (CAS 112-16-3). (RMN ¹H (CDCl₃, 300 MHz): 6.83 (3H, s), 2.54 (6H, t), 1.84-1.62 (6H, m), 1.28 (48H, m), 0.90 (9H, t)).

Dans encore un autre mode de réalisation, chaque groupe -O-Z représente un groupe -O-C((=O)(N(R₅R₆))) avec R₅, R₆ représentant, indépendamment l'un de l'autre, un radical choisi dans le groupe constitué par les radicaux alkyle, aryle, arylalkyle, alkylaryle, cycloalkyle, alcényle et l'hydrogène. Préférentiellement, chaque groupe R₅, R₆ représente, indépendamment l'un de l'autre, un radical choisi dans le groupe constitué par les radicaux méthyle, éthyle, propyle, butyle, allyle, vinyle et l'hydrogène.

Dans ce mode de réalisation, le dérivé du polyphénol aromatique peut être tel que R₅=H et R₆=C₆H₆ et présente la formule (**7**) suivante :

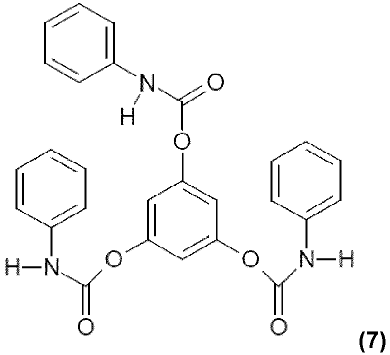

Le dérivé (**7**) est préparé à partir de phloroglucinol (CAS 108-73-6) et d'isocyanate de phényle (CAS 103-71-9). Dans un ballon bicol sont introduits 5 g (0.040 mol) de phloroglucinol et 30 ml de dioxane. Le mélange est placé sous agitation à température ambiante puis on additionne par une ampoule de coulée 14.18 g (0.119 mol.) d'isocyanate de phényle. A l'issue de l'addition, on ajoute 200 mg de dilaurate de dibutyl étain. On élève la température à 80°C pour une durée de 8 h. A l'issue de la réaction, on évapore le dioxane sous pression réduite puis on sèche le produit final dans une étuve sous vide. Le produit final est une poudre blanche obtenu avec un rendement de 94%. (RMN ¹H (DMSO-d6, 300 MHz) : 7.00-6.05 (15H, m), 6.24 (3H, s)).

Dans les modes de réalisation qui précèdent, les radicaux propyle comprennent les radicaux de formule -C₃H₇. Ces radicaux sont le n-propyl et l'isopropyl.

Dans les modes de réalisation qui précèdent, les radicaux butyle comprennent les radicaux de formule -C₄H₉. Ces radicaux sont le n-butyl, isobutyl, le sec-butyl et le tert-butyl.

Dans les modes de réalisation qui précèdent, les radicaux aryle comprennent les noyaux aromatiques dont on a éliminé un atome d'hydrogène. Par exemple, le radical aryle est le radical C₆H₅ obtenu à partir du benzène C₆H₆. Un autre exemple de radical aryle est le radical C₄H₃O obtenu à partir du furane C₄H₄O.

### Compositions de caoutchouc selon l'invention

En fonction de l'utilisation de la composition, on utilisera une quantité d'aldéhyde A1 allant de 0,1 à 25 pce. De même, on utilisera une quantité de dérivé de polyphénol aromatique A2 allant de 0,1 à 25 pce.

Dans certains modes de réalisation, le ratio molaire [aldéhyde A1] : [dérivé de polyphénol aromatique A2] varie avantageusement de 3 :1 à 1 :1, avantageusement de 3 :1 à 1,5 :1.

Selon l'utilisation que l'on fait de la composition, la composition de caoutchouc présente, à l'état cuit, un module sécant à 10% d'allongement MA10 mesuré selon la norme ASTM D 412 de 1998 (éprouvette C) supérieur ou égal à 10 MPa, de préférence à 20 MPa, préférentiellement à 30 MPa, plus préférentiellement à 40 MPa et encore plus préférentiellement à 60 MPa.

De préférence, la composition de caoutchouc comprend un élastomère diénique.

Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les compositions de caoutchouc peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

De préférence, la composition de caoutchouc comprend une charge renforçante.

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogenée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyle, nécessitant l'utilisation d'un agent de couplage pour établir la liaison entre la charge et l'élastomère.

De préférence, le taux de charge renforçante totale (noir de carbone et/ou charge inorganique renforçante telle que silice) est compris dans un domaine de 5 à 120 pce, plus préférentiellement de 5 à 100 pce et encore plus préférentiellement de 5 à 90 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

Lorsqu'une charge inorganique (par exemple de la silice) est utilisée dans la composition de caoutchouc, seule ou en coupage avec du noir de carbone, son taux est compris dans un domaine de 0 à 70 pce, préférentiellement de 0 à 50 pce, en particulier également de 5 à 70 pce, et encore plus préférentiellement cette proportion varie de 5 à 50 pce, particulièrement de 5 à 40 pce.

De préférence, la composition de caoutchouc comprend des additifs divers.

Les compositions de caoutchouc peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue ou bien encore des promoteurs d'adhésion.

De préférence, la composition de caoutchouc comprend un système de réticulation, plus préférentiellement de vulcanisation.

Le système de vulcanisation, comprend un agent donneur de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur de vulcanisation et/ou un retardateur de vulcanisation.

Le soufre ou agent donneur de soufre est utilisé à un taux préférentiel compris dans un domaine de 0,5 à 10 pce, plus préférentiellement compris dans un domaine de 0,5 à 8,0 pce. L'ensemble des accélérateurs, retardateurs et activateurs de vulcanisation est utilisé à un taux préférentiel compris dans un domaine de 0,5 à 15 pce. Le ou les activateurs de vulcanisation est ou sont utilisés à un taux préférentiel compris dans un domaine de 0,5 et 12 pce.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, divers accélérateurs secondaires ou activateurs de vulcanisation connus tels qu'oxyde de zinc, acide stéarique, dérivés guanidiques (en particulier diphenylguanidine), etc.

On peut utiliser comme accélérateur (primaire ou secondaire) tout composé susceptible d'agir comme accélérateur de vulcanisation des élastomères diéniques en présence de soufre, notamment des accélérateurs du type thiazole ainsi que leurs dérivés, des accélérateurs de type thiurame, et de type dithiocarbamate de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl- 2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Dans un mode de réalisation, la composition de caoutchouc se trouve à l'état cuit, c'est-à-dire vulcanisée. Dans d'autres modes de réalisation, la composition se trouve à l'état cru, c'est-à-dire non vulcanisée, la résine réticulée ayant été ajoutée ultérieurement à la composition non vulcanisée.

Dans certains modes de réalisation, la composition comprend un résidu obtenu à partir du radical -Z de chaque groupe -O-Z. Préalablement à la réticulation de la résine, et comme supposé par les inventeurs à l'origine de l'invention, après formation de chaque fonction hydroxyle, chaque radical Z de chaque groupe -O-Z peut permettre d'obtenir un résidu généré in-situ. Certains résidus restent définitivement dans la composition et, le cas échéant, peuvent être utilisés pour certaines de leurs propriétés.

Dans d'autres modes de réalisation, le résidu généré ne reste que temporairement dans la composition soit parce qu'il en sort spontanément dans les conditions de fabrication de la composition, par exemple sous la forme de gaz, notamment dans le cas où le résidu est volatil, soit parce qu'on met en œuvre une étape optionnelle d'extraction de ce résidu dans le procédé de fabrication de la composition.

Dans un mode de réalisation, la résine n'ayant pas encore réticulé, la composition de caoutchouc comprend :
A1) au moins un aldéhyde de formule **W** : 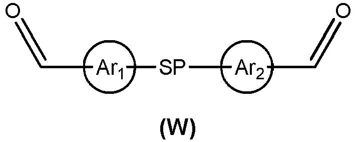 dans laquelle :
   - chaque groupe Ar₁ et Ar₂ représente, indépendamment l'un de l'autre, un noyau aromatique, éventuellement substitué,
   - SP est un groupe de liaison reliant au moins les groupes Ar₁ et Ar₂ entre eux, SP séparant les groupes Ar₁ et Ar₂ par au moins 2 liaisons covalentes ; et
A2) au moins un dérivé d'un polyphénol aromatique comprenant au moins un noyau aromatique porteur d'au moins deux groupes -O-Z en position méta l'une par rapport à l'autre, les deux positions ortho d'au moins un des groupes -O-Z étant non substituées, Z étant différent de l'hydrogène.

De façon analogue avec les aldéhydes de formule **W1**, la résine phénol aldéhyde n'ayant pas encore réticulé, la composition de caoutchouc comprend :
- au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- au moins un aldéhyde de formule **W1** : 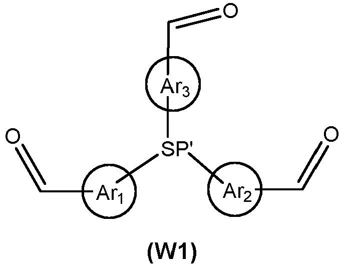 dans laquelle :
- chaque groupe Ar₁, Ar₂, Ar₃ représente un noyau aromatique, éventuellement substitué ;
- SP' relie les groupes Ar₁, Ar₂, et Ar₃ entre eux, SP' séparant deux à deux les groupes Ar₁, Ar₂, et Ar₃ par au moins 2 liaisons covalentes.

De façon analogue avec les aldéhydes de formule **W2**, la résine phénol aldéhyde n'ayant pas encore réticulé, la composition de caoutchouc comprend :
- au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- au moins un aldéhyde de formule **W2** : 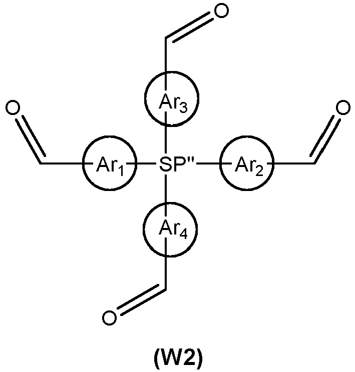 dans laquelle :
- chaque groupe Ar₁, Ar₂, Ar₃ et Ar₄ représente, indépendamment l'un de l'autre, un noyau aromatique, éventuellement substitué ;
- SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

De préférence, dans ce mode de réalisation, la composition est à l'état cru, c'est-à-dire non vulcanisée.

De préférence, la composition de caoutchouc peut être utilisée dans le pneumatique sous la forme d'une couche. Par couche, on entend tout élément tridimensionnel, de forme et d'épaisseur quelconques, notamment en feuille, bande ou autre élément de section droite quelconque, par exemple rectangulaire ou triangulaire.

Bien entendu, toutes les caractéristiques relatives au dérivé du polyphénol aromatique A2 et à l'aldéhyde A1 de la composition comprenant la résine s'appliquent également à la composition comprenant le dérivé du polyphénol aromatique A2 et à l'aldéhyde A1 non réticulés à l'état de résine.

### Composite de caoutchouc selon l'invention

Le composite de caoutchouc est renforcé d'au moins un élément de renfort noyé dans la composition de caoutchouc selon l'invention.

Ce composite de caoutchouc peut être préparé selon un procédé comportant au moins les étapes suivantes :
- au cours d'une première étape, combiner au moins un élément de renfort avec une composition de caoutchouc (ou élastomère, les deux termes sont synonymes) selon l'invention pour former un composite de caoutchouc renforcé de l'élément de renfort;
- puis, au cours d'une deuxième étape, réticuler par cuisson, par exemple par vulcanisation, de préférence sous pression, le composite ainsi formé.

Parmi les éléments de renforts, on pourra citer les éléments de renfort textiles, métalliques ou hybrides textile-métal.

Par textile, on entend, de manière bien connue de l'homme du métier, tout matériau en matière autre que métallique, qu'elle soit naturelle comme synthétique, susceptible d'être transformée en fil, fibre par tout procédé de transformation approprié. On peut citer par exemple, sans que les exemples ci-après soient limitatifs, un procédé de filage de polymère tel que par exemple filage au fondu, filage en solution ou filage de gel.

Ce matériau textile peut consister en un fil ou fibre ou également en un tissu réalisé à partir de fils ou fibres, par exemple d'un tissu tramé avec fils de chaîne et fils de trame, ou encore d'un tissu croisé avec fils croisés.

De préférence, ce matériau textile de l'invention est choisi dans le groupe constitué par les monofilaments (ou fils unitaires), les fibres multifilamentaires, les assemblages de tels fils ou fibres, et les mélanges de tels matériaux. Il s'agit plus particulièrement d'un monofilament, d'une fibre multifilamentaire ou d'un retors.

Par fil ou fibre, on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm.

Ce fil ou cette fibre peut prendre tout forme connue, il peut s'agir par exemple d'un monofilament élémentaire de diamètre important (par exemple et de préférence égal ou supérieur à 50 µm), d'une fibre multifilamentaire (constituée d'une pluralité de filaments élémentaires de faible diamètre, typiquement inférieur à 30 µm), d'un retors ou câblé textile formé de plusieurs fibres ou monofilaments textiles retordus ou câblés ensemble, ou encore d'un assemblage, un groupe, une rangée de fils ou fibres tels que par exemple une bande ou bandelette comportant plusieurs de ces monofilaments, fibres, retors ou câblés regroupés ensemble, par exemple alignés selon une direction principale, rectiligne ou pas.

Les matériaux textiles peuvent être en matière organique ou polymérique, comme en matière inorganique.

A titre d'exemples de matières inorganiques, on citera le verre, le carbone.

L'invention est préférentiellement mise en œuvre avec des matériaux en matière polymérique, du type thermoplastique comme non thermoplastique.

A titre d'exemples de matières polymériques du type non thermoplastique, on citera par exemple l'aramide (polyamide aromatique) et la cellulose, naturelle comme artificielle, telle que le coton, la rayonne, le lin, le chanvre.

A titre d'exemples de matières polymériques du type thermoplastiques, on citera préférentiellement les polyamides aliphatiques et les polyesters. Parmi les polyamides aliphatiques, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Par métallique, on entend par définition un ou des éléments filaires constitués majoritairement (c'est-à-dire pour plus de 50% de sa masse) ou intégralement (pour 100% de sa masse) d'un matériau métallique. De préférence, le matériau métallique est l'acier, plus préférentiellement en acier perlitique (ou ferrito-perlitique) au carbone comprenant avantageusement entre 0,4% et 1,2% en masse de carbone.

L'élément de renfort métallique peut être un monofilament, un câble comprenant plusieurs monofilaments métalliques ou un câble multi-torons comprenant plusieurs câbles alors appelés torons.

Dans le cas préféré où l'élément de renfort comprend plusieurs monofilaments métalliques ou plusieurs torons, les monofilaments métalliques ou les torons sont assemblés par retordage ou par câblage. On rappelle qu'il existe deux techniques possibles d'assemblage:
- soit par retordage : les monofilaments métalliques ou les torons subissent à la fois une torsion collective et une torsion individuelle autour de leur propre axe, ce qui génère un couple de détorsion sur chacun des monofilaments ou torons ;
- soit par câblage: les monofilaments métalliques ou les torons ne subissent qu'une torsion collective et ne subissent pas de torsion individuelle autour de leur propre axe.

De façon optionnelle, l'élément de renfort comprend plusieurs monofilaments et est du type gommé in situ, c'est-à-dire que l'élément de renfort est gommé de l'intérieur, pendant sa fabrication même par une gomme de remplissage. De tels éléments filaires métalliques sont connus de l'homme du métier. La composition de la gomme de remplissage peut être identique ou non à la composition de caoutchouc dans laquelle l'élément de renfort est noyé.

### Pneumatique selon l'invention

De tels pneumatiques sont par exemple ceux destinés à équiper des véhicules à moteur de type tourisme, SUV ("*Sport Utility Vehides*"), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

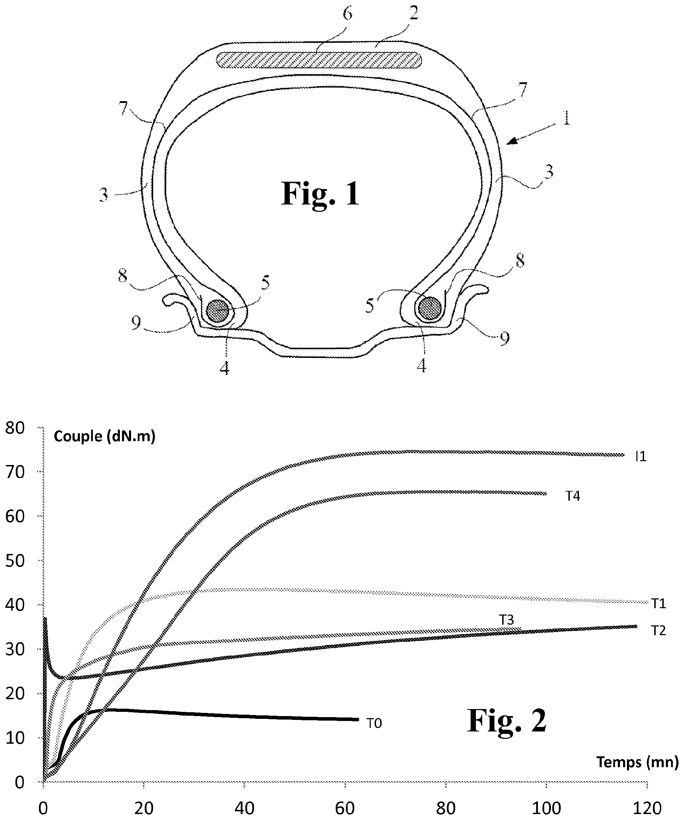

A titre d'exemple, la figure 1 annexée représente de manière très schématique (sans respect d'une échelle spécifique), une coupe radiale d'un pneumatique conforme à l'invention pour véhicule du type poids lourd.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique qu'au moins une armature de sommet 6 et/ou son armature de carcasse 7 comporte une composition de caoutchouc ou un composite selon l'invention. Bien entendu, l'invention concerne les objets précédemment décrits, à savoir le composite en caoutchouc et le pneumatique, tant à l'état cru (avant cuisson ou vulcanisation) qu'à l'état cuit (après cuisson).

### Procédés de fabrication des compositions selon l'invention

Les procédés de fabrication décrits précédemment et ci-après permettent de fabriquer les compositions selon l'invention.

Dans des modes de réalisation utilisant les aldéhydes de formule **W1** et/ou **W2**, le procédé de fabrication de la composition de caoutchouc à l'état cru comprend une étape de mélangeage :
- d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
- d'au moins un aldéhyde de formule **W1** et/ou **W2**.

Dans d'autres modes de réalisation utilisant les aldéhydes de formule **W1** et/ou **W2**, le procédé de fabrication de la composition de caoutchouc à l'état cuit comprend :
- une étape de fabrication d'une composition de caoutchouc à l'état cru comprenant une étape de mélangeage :
   - d'au moins un polyphénol aromatique comprenant au moins un noyau aromatique porteur d'au moins deux groupes -O-H en position méta l'un par rapport à l'autre, les deux positions ortho d'au moins un des groupes -O-H étant non substituées, et
   - d'au moins un aldéhyde de formule **W1** et/ou **W2**
- puis, une étape de mise en forme de la composition de caoutchouc à l'état cru,
- puis, une étape de vulcanisation de la composition de caoutchouc durant laquelle on réticule une résine phénol-aldéhyde à base du polyphénol aromatique et de l'aldéhyde.

La composition de caoutchouc peut être fabriquée dans des mélangeurs appropriés, en utilisant deux phases de préparation successives bien connues de l'homme du métier :
- une première phase de travail ou malaxage thermomécanique (phase dite "non-productive") à haute température, jusqu'à une température maximale comprise entre 110°C et 190°C, de préférence entre 130°C et 180°C,
- suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Dans un premier mode de réalisation, le procédé comporte les étapes suivantes :
- incorporer à un élastomère, au cours d'une première étape, une charge renforçante, en malaxant thermomécaniquement le tout, jusqu'à atteindre une température maximale comprise entre 110°C et 190°C ;
- refroidir l'ensemble à une température inférieure à 110°C ;
- incorporer ensuite, au cours d'une seconde étape, un système de réticulation, le dérivé de polyphénol aromatique A2 et l'aldéhyde A1;
- malaxer le tout à une température inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante,...), puis dans un deuxième temps, par exemple après une à deux minutes de malaxage, les autres additifs, éventuels agents de recouvrement de la charge ou de mise en œuvre complémentaires, à l'exception du système de réticulation, du dérivé de polyphénol aromatique A2 et de l'aldéhyde A1. La durée totale du malaxage, dans cette phase non-productive, est de préférence comprise entre 1 et 15 min.

Apres refroidissement du mélange ainsi obtenu, on incorpore alors dans un mélangeur externe tel qu'un mélangeur à cylindres, maintenu à basse température (par exemple entre 40°C et 100°C), le système de réticulation, l'aldéhyde A1 et le dérivé de polyphénol aromatique A2. L'ensemble est alors mélangé (phase productive) pendant quelques minutes, par exemple entre 2 et 15 min.

La composition ainsi obtenue à l'état cru peut ensuite être mise en forme, par exemple calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

Puis, après une éventuelle étape d'assemblage entre elles de plusieurs compositions mises en forme de nappes ou de bandes sous la forme d'un composite ou d'une ébauche crue de pneumatique, on procède à une étape de réticulation, par exemple par vulcanisation ou cuisson de la composition, du composite ou de l'ébauche durant laquelle on réticule la résine à base du dérivé de polyphénol aromatique A2 et de l'aldéhyde A1. On réalise l'étape de réticulation, ici de vulcanisation ou cuisson, à une température supérieure ou égale à 120°C, de préférence supérieure ou égale à 140°C. On obtient la composition à l'état cuit.

Dans un deuxième mode de réalisation, le procédé comporte les étapes suivantes :
- incorporer à un élastomère, au cours d'une première étape, une charge renforçante, le polyphénol aromatique A2 et l'aldéhyde A1 en malaxant thermomécaniquement le tout, jusqu'à atteindre une température maximale comprise entre 110°C et 190°C ;
- refroidir l'ensemble à une température inférieure à 110°C ;
- incorporer ensuite, au cours d'une seconde étape, un système de réticulation;
- malaxer le tout à une température inférieure à 110°C.

### Utilisations

Dans des modes de réalisations utilisant les aldéhydes de formule **W1** ou **W2**, l'utilisation d'un aldéhyde de formule **W1** et/ou **W2** dans une composition de caoutchouc comprenant une résine phénol-aldéhyde à base d'au moins un polyphénol aromatique et d'au moins l'aldéhyde permet d'augmenter la rigidité de la composition de caoutchouc.

Dans d'autres modes de réalisation indépendants ou pris en combinaison avec l'utilisation précédente, l'utilisation d'un aldéhyde de formule **W1** et/ou **W2** permet d'augmenter la fluidité à l'état cru d'une composition de caoutchouc comprenant une résine phénol-aldéhyde à base d'au moins un polyphénol aromatique et d'au moins l'aldéhyde.

Dans d'autres modes de réalisation indépendants ou pris en combinaison avec l'une ou les utilisation(s) précédente(s), l'utilisation d'un aldéhyde de formule **W1** et/ou **W2** permet de maintenir la rigidité avec l'augmentation de la température d'une composition de caoutchouc comprenant une résine phénol-aldéhyde à base d'au moins un polyphénol aromatique et d'au moins l'aldéhyde.

L'invention ainsi que ses avantages seront aisément compris à la lumière des exemples de réalisation qui suivent.

### Exemples de réalisation de l'invention et essais comparatifs

Ces essais démontrent que :
- la rigidité des compositions selon l'invention est largement augmentée par rapport à une composition dépourvue de résine renforçante et par rapport à une composition utilisant une résine renforçante classique à base d'un accepteur de méthylene avec l'HMT ou l'H3M en tant que donneur de méthylène,
- le maintien de la rigidité de la composition de caoutchouc selon l'invention aux températures élevées, en particulier pour des températures allant jusqu'à 150°C, est largement améliorée par rapport à une composition dépourvue de résine renforçante et par rapport à une composition utilisant une résine renforçante classique à base d'un accepteur de méthylene avec l'HMT ou l'H3M en tant que donneur de méthylène,
- il existe une phase retard lors de la réticulation de la résine de la composition selon l'invention permettant d'éviter la réticulation précoce de la résine par rapport à une résine réticulée directement à partir du polyphénol aromatique et de l'aldéhyde A1,
- la fluidité de la composition selon l'invention est améliorée par rapport à celle d'une composition dépourvue de résine renforçante et par rapport à une composition de utilisant une résine renforçante à base d'un polyphénol aromatique et d'un aldéhyde présentant une structure non conforme à l'invention,
- la résine de la composition utilisant l'aldéhyde A1 est dépourvue de formaldéhyde et n'en génère pas lors de sa formation.

Pour cela, plusieurs compositions de caoutchouc, notées ci-après T0 à T4, I1 ont été préparées comme indiqué précédemment et sont rassemblées dans le tableau 1 annexé ci-après.

Toutes les compositions T0 à T4 et I1 ont une partie commune dans leurs formulations (exprimées en pce, parties en poids pour cent parties d'élastomère): 100 pce de caoutchouc naturel, 75 pce de noir de carbone N326, 1,5 pce de N-1, 3-diméthylbutyl-N-phényl-para-phénylènediamine, 1,5 pce d'acide stéarique, 5 pce de ZnO, 1 pce de N-tertiarybutyl-2-benzothiazole sulfamide et 2,5 pce de soufre insoluble 20H.

La composition T0 ne comprend aucune résine renforçante ajoutée à cette partie commune.

En plus de la partie commune, la composition T1 comprend une résine renforçante à base d'hexa-méthylènetétramine (1,6 pce) et d'une résine phénolique pré-condensée (4 pce). La composition T1 représente une composition classique de l'état de la technique présentant une rigidité supérieure à celle de la composition T0.

En plus de la partie commune, la composition T2 comprend une résine à base de phloroglucinol et de 1,4-benzènedicarboxaldéhyde. La composition T2 comprend 14 pce de phloroglucinol et 14 pce de 1,4-benzènedicarboxaldéhyde.

En plus de la partie commune, la composition T3 comprend une résine à base de phloroglucinol et de l'adéhyde **SP10**. La composition T3 comprend 14 pce de phloroglucinol et 48 pce de l'adéhyde **SP10**.

En plus de la partie commune, la composition T4 comprend une résine à base du dérivé 1 du phloroglucinol et de 1,4-benzènedicarboxaldéhyde. La composition T4 comprend 18 pce du dérivé 1 du phloroglucinol et 14 pce de 1,4-benzènedicarboxaldéhyde (proportion molaire 1 (dérivé de polyphénol aromatique) / 2 (aldéhyde)).

En plus de la partie commune, la composition I1 comprend une résine à base du dérivé **1** du phloroglucinol et de l'adéhyde **SP10**. La composition I1 comprend 20 pce du dérivé **1** du phloroglucinol et 14 pce de l'adéhyde **SP10**.

Les compositions T0 à T4 ne sont pas conformes à l'invention contrairement à la composition I1 qui est conforme à l'invention.

A l'état cru, la composition de caoutchouc I1 selon l'invention comprend:
- au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène, et
- au moins un aldéhyde A1.

A l'état cuit, la composition de caoutchouc I1 selon l'invention comprend une résine à base :
- d'au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène, et
- d'au moins un aldéhyde A1.

### Essais comparatifs

Dans une première étape, on a incorporé à un élastomère la charge renforçante, en malaxant thermomécaniquement le tout, jusqu'à atteindre une température maximale comprise entre 110°C et 190°C. Puis on a refroidit l'ensemble à une température inférieure à 110°C. Ensuite, on a incorporé, au cours d'une seconde étape, le système de réticulation, le polyphénol aromatique ou le dérivé du polyphénol aromatique et le donneur de méthylène ou l'aldéhyde. A l'issue de cette seconde étape, on a chauffé le mélange à 150°C jusqu'à l'obtention du couple rhéométrique maximum afin de vulcaniser la composition et réticuler la résine. Puis, on a réalisé une caractérisation de la rigidité à 23°C de la composition lors d'un essai en traction.

### Caractérisation de la phase retard et de la rigidité à haute température - Couple rhéométrique maximum

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la vulcanisation et de la réticulation de la résine. De l'évolution du couple rhéométrique, on détermine la présence d'une phase retard lorsque l'augmentation du couple rhéométrique sur 10 minutes de la composition testée est inférieure à l'augmentation du couple rhéométrique sur 10 minutes d'une composition témoin comprenant le polyphénol aromatique correspondant et un aldéhyde comprenant un unique noyau aromatique porteur de deux fonctions aldéhydes, ici la composition T2. La présence d'une telle phase retard est indiquée dans le tableau 1. On a représenté sur la figure 2 la courbe représentant l'évolution du couple rhéométrique de la composition I1 ainsi que celles représentant l'évolution du couple rhéométrique des compositions T0 à T4.

Plus le couple rhéométrique maximum Cmax est élevé, plus la composition présente une rigidité pouvant être maintenue à haute température.

### Caractérisation de la rigidité à 23°C - Essai de traction

Ces essais permettent de déterminer les contraintes d'élasticité et les propriétés à la rupture. Sauf indication différente, ils sont effectués conformément à la norme ASTM D 412 de 1998 (éprouvette C). On mesure en seconde élongation (i.e. après un cycle d'accommodation) les modules sécants dits "nominaux" (ou contraintes apparentes, en MPa) à 10% d'allongement (noté "MA10"). Toutes ces mesures de traction sont effectuées dans les conditions normales de température et d'hygrométrie, selon la norme ASTM D 1349 de 1999 et reportées dans le tableau 1.

### Caractérisation de la fluidité - Plasticité Mooney

La plasticité Mooney est réalisée en utilisant un consistomètre selon la norme ASTM D 1646-99. La mesure de plasticité Mooney se fait selon le principe suivant : le mélange cru est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre). Cette mesure est réalisée moins de 24h après la fabrication de la composition de caoutchouc. Plus la plasticité Mooney est faible, plus la composition est fluide.

Tout d'abord, les résultats du tableau 1 montrent que la composition T2 comprenant une résine à base d'un polyphénol aromatique et d'un aldéhyde aromatique comprenant un unique noyau aromatique porteur de deux fonctions aldéhydes présente une rigidité à 23°C bien plus élevée que celle d'une composition dépourvue de résine renforçante (T0) et que celle d'une composition comprenant une résine renforçante de l'état de la technique (T1). Néanmoins, cette composition T2 ne présente pas de phase retard de sorte que la résine de la composition T2 réticule de façon précoce.

De même, la composition T3 comprenant une résine à base d'un polyphénol aromatique et d'un aldéhyde A1 conforme à l'invention présente une rigidité à 23°C bien plus élevée que celle d'une composition dépourvue de résine renforçante (T0) et que celle d'une composition comprenant une résine renforçante de l'état de la technique (T1). Néanmoins, tout comme la composition T2, cette composition T3 ne présente pas de phase retard de sorte que la résine de la composition T3 réticule de façon précoce.

La composition T4 comprenant une résine à base du dérivé 1 du phloroglucinol et d'un aldéhyde aromatique comprenant un unique noyau aromatique porteur de deux fonctions aldéhydes présente une phase retard. En outre, la composition T4 présente une tenue de la rigidité à des températures élevées (Cmax) améliorée par rapport aux tenues des compositions T0, T1, T2 et T3 tout en conservant une rigidité à 23°C relativement élevée malgré un rapport molaire (dérivé de polyphénol aromatique)/(aldéhyde) défavorable par rapport à ces mêmes compositions.

Concernant la composition I1 selon l'invention, en plus de sa phase retard, la composition selon l'invention I1 présente une rigidité à 23°C supérieure à toutes celles des compositions témoins et notamment largement supérieure à celle de la composition T4, ainsi qu'une tenue de la rigidité à des températures élevées (Cmax) largement améliorée par rapport à toutes celles des compositions témoins. De plus, à l'inverse de T1, la composition I1 ne produit pas de formaldéhyde au cours de sa cuisson, par exemple par réticulation ou vulcanisation.

Enfin, la composition selon l'invention I1 présente une fluidité relativement élevée et significativement améliorée par rapport à celle des compositions témoins T2 et T3.

On notera également que la phase retard et la rigidité à 23°C peuvent être choisies en fonctions de l'application en faisant varier les groupes -O-Z et SP.

L'invention ne se limite pas aux modes de réalisation décrits précédemment.

Dans d'autres modes de réalisation, on pourra envisager que la résine soit à base d'un ou plusieurs aldéhydes A1 et d'un ou plusieurs dérivés de polyphénol aromatique A2 conformément à l'invention et, en plus de ces constituants, à base d'un ou plusieurs aldéhydes additionnels non conformes à l'invention et/ou un ou plusieurs polyphénols aromatiques additionnels non conformes à l'invention.

Dans d'autres modes de réalisation non présents dans le tableau 1, on pourra envisager des dérivés de polyphénol aromatique comprenant plusieurs noyaux aromatiques, par exemple benzéniques, au moins deux d'entre eux étant chacun porteur d'au moins deux groupes -O-Z en position méta l'un par rapport à l'autre. Les deux positions ortho d'au moins un des groupes -O-Z de chaque noyau aromatique sont non substituées.

Dans d'autres modes de réalisation, on pourra, comme décrit ci-dessus, utiliser une résine à base d'un dérivé ou précurseur d'un polyphénol aromatique et d'un dérivé ou précurseur d'un aldéhyde de formule W.

Un tel dérivé ou précurseur de l'aldéhyde de formule W pourra par exemple être issu de la réaction entre :
- l'aldéhyde de formule W, et
- un réactif de formule B et/ou C : 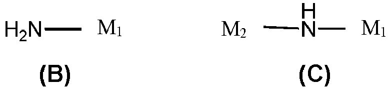
dans lesquelles chaque radical M₁, M₂ représente, indépendamment l'un de l'autre, un radical monovalent hydrocarboné ou un radical monovalent hydrocarboné substitué.

Dans un mode de réalisation, le radical M₁ représente un radical monovalent choisi dans le groupe constitué par les radicaux alkyl, aryl, AL-NH₂ avec AL représentant un radical monovalent alkyl, AR-NH₂ avec AR représentant un radical monovalent aryl, AL-NM₂H avecAL représentant un radical monovalent alkyl et AR-NM₂H avecAR représentant un radical monovalent aryl. Dans ce mode de réalisation, le réactif **B** peut donc être une amine primaire (radicaux alklyl et aryl), une diamine primaire (radicaux AL-NH₂, AR-NH₂) ou une diamine comprenant une fonction amine primaire et une fonction amine secondaire. Dans ce mode de réalisation, le réactif **C** peut donc être une amine secondaire (radicaux alklyl et aryl), une diamine secondaire (radicaux AL-NM₂H et AR-NM₂H) ou une diamine comprenant une fonction amine primaire et une fonction amine secondaire.

De préférence, le radical M₁ représente un radical monovalent choisi dans le groupe constitué par les radicaux AL-NH₂ avec AL représentant un radical monovalent alkyl, AR-NH₂ avec AR représentant un radical monovalent aryl, AL-NM₂H avec AL représentant un radical monovalent alkyl et AR-NM₂H avec AR représentant un radical monovalent aryl. L'utilisation d'une diamine primaire ou secondaire permet, lors de la régénération de l'aldéhyde à partir du composé, de générer une diamine dans la composition de caoutchouc qui peut être utilisée en tant que molécule réactive vis-à-vis d'autres molécules présentes dans la composition, par exemple vis-à-vis des molécules impliquées dans la réaction de vulcanisation afin d'accélérer le démarrage de la vulcanisation.

Plus préférentiellement, le radical monovalent alkyl AL est un radical alkyl linéaire comprenant un nombre d'atomes de carbone allant de 1 à 15, de préférence de 2 à 12 et plus préférentiellement de 2 à 8.

Dans un autre mode de réalisation, le radical M₁ présente la formule suivante : 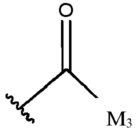 dans laquelle M₃ représente un radical monovalent hydrocarboné ou un radical monovalent hydrocarboné substitué.

Dans une première variante, M₃ représente un radical monovalent choisi dans le groupe constitué par les radicaux alkylène, arylène, arylalkylène, alkylarylène, cycloalkylène, alcénylène, de préférence dans le groupe constitué par les radicaux alkylène et arylène. Dans cette variante, le réactif **B** ou **C** peut donc être un amide primaire (réactif **B**) ou secondaire (réactif **C**).

Dans une deuxième variante, le radical M₁ est choisi dans le groupe constitué par les radicaux de formules suivantes : 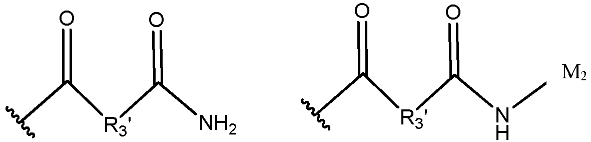 dans laquelle R₃' représente un radical divalent choisi dans le groupe constitué par les radicaux alkylène, arylène, arylalkylène, alkylarylène, cycloalkylène, alcénylène.

Plus préférentiellement, le radical divalent alkylène R₃' est un radical alkylène linéaire comprenant un nombre d'atomes de carbone allant de 1 à 15, de préférence de 2 à 12 et plus préférentiellement de 2 à 8.

Dans cette variante, le réactif **B** ou **C** peut donc être un di-amide primaire (réactif **B**) ou secondaire (réactif **C**) ou un diamide comprenant un amide primaire et un amide secondaire.

Dans encore un autre mode de réalisation, le radical M₁ présente la formule suivante : 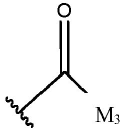 dans laquelle M₃ représente NH₂.

Dans cet autre mode de réalisation, le réactif **B** est l'urée.

Avantageusement, le radical M₂ représente un radical monovalent choisi dans le groupe constitué par les radicaux alkyl, aryl, arylalkyl, alkylaryl, cycloalkyl et alcényl.

Avantageusement, chaque radical M₁, M₂ est dépourvu de fonction réactive vis-à-vis d'un polyphénol aromatique. Par fonction réactive, on entend ici une fonction qui réagirait dans des conditions réactionnelles nécessaires à la régénération de l'aldéhyde de formule W et dans des conditions réactionnelles nécessaires à la réticulation de la résine. Très préférentiellement, chaque radical M₁, M₂ est donc, par exemple, dépourvu de fonction aldéhyde et hydroxyméthyle.

**Tableau 1**

| **Composition** | **Phénol** | **Donneur de méthylène** | **Phase retard** | **Mooney** | **MA10 (MPa)** | **Cmax (dN.m)** |
|---|---|---|---|---|---|---|
| T0 | / | / | / | <50 | 7,4 | 16 |
| T1 | Résine SRF (8) | Hexa-méthylènetétramine (9) | Non | <60 | 16,5 | 43 |

| **Composition** | **Polyphénol aromatique** | **Aldéhyde** | **Phase retard** | **Mooney** | **MA10 (MPa)** | **Cmax (dN.m)** |
|---|---|---|---|---|---|---|
| T2 | Phloroglucinol (10) | 1,4-benzènedicarboxaldéhyde (11) | Non | <90 | 40,8 | 36 |
| T3 | Phloroglucinol (10) | SP10 | Non | <75 | 31,5 | 35 |

| **Composition** | **Dérivé de polyphénol aromatique** | **Aldéhyde** | **Phase retard** | **Mooney** | **MA10 (MPa)** | **Cmax (dN.m)** |
|---|---|---|---|---|---|---|
| T4 | R₁=R₂=R₃=CH₃ (1) | 1,4-benzènedicarboxaldéhyde (11) | Oui | <75 | 24,9 | 65 |
| I1 | R₁=R₂=R₃=CH₃ (1) | SP10 | Oui | <60 | 50 | 74 |

| | | | | | | |
|---|---|---|---|---|---|---|
| (8) Hexa-méthylènetétramine (de la société Sigma-Aldrich ; de pureté ≥ 99%) ; (9) Résine précondensée SRF 1524 (de la société Schenectady ; diluée à 75%); (10) Phloroglucinol (de la société Alfa Aesar ; de pureté 99%) ; (11) 1,4-benzènedicarboxaldéhyde (de la société ABCR ; de pureté 98%) | | | | | | |

## Revendications

1. Composition de caoutchouc, **caractérisé en ce qu'**elle comprend au moins une résine à base:
A1) d'au moins un aldéhyde de formule **W** : 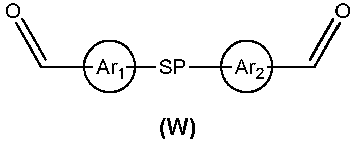 dans laquelle :
- chaque groupe Ar₁ et Ar₂ représente, indépendamment l'un de l'autre, un noyau aromatique, éventuellement substitué,
- SP est un groupe de liaison reliant au moins les groupes Ar₁ et Ar₂ entre eux, SP séparant les groupes Ar₁ et Ar₂ par au moins 2 liaisons covalentes; et
A2) d'au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène.

2. Composition selon la revendication précédente, dans laquelle SP sépare les groupes Ar₁ et Ar₂ par un nombre de liaisons covalentes inférieur ou égal à 150, de préférence inférieur ou égal à 100 et plus préférentiellement inférieur ou égal à 75.

3. Composition selon l'une quelconque des revendications précédentes, dans laquelle SP représente un radical au moins divalent choisi dans le groupe constitué par un radical hydrocarboné et un radical hydrocarboné substitué.

4. Composition selon l'une quelconque des revendications précédentes, dans laquelle SP sépare les groupes Ar₁ et Ar₂ par un nombre de liaisons covalentes supérieur ou égal à 3, de préférence supérieur ou égal à 4 et plus préférentiellement supérieur ou égal à 5.

5. Composition selon l'une quelconque des revendications 1 à 4, dans laquelle SP sépare les groupes Ar₁ et Ar₂ par un nombre de liaisons covalentes inférieur ou égal à 20, de préférence inférieur ou égal à 15.

6. Composition selon l'une quelconque des revendications 1 à 4, dans laquelle SP sépare les groupes Ar₁ et Ar₂ par un nombre de liaisons covalentes strictement supérieur à 15.

7. Composition selon l'une quelconque des revendications 1 à 6, dans laquelle le reste de chaque noyau aromatique Ar₁ et Ar₂ est non substitué.

8. Composition selon l'une quelconque des revendications 1 à 6, dans laquelle chaque noyau aromatique Ar₁ et Ar₂ est substitué respectivement par au moins un groupe K₁ et K₂ représentant, indépendamment l'un de l'autre, un radical monovalent hydrocarboné et un radical monovalent hydrocarboné substitué, de préférence chaque groupe K₁ et K₂,représentant, indépendamment l'un de l'autre, un radical monovalent alkyle ou un radical monovalent O-alkyle.

9. Composition selon l'une quelconque des revendications précédentes, dans laquelle chaque noyau aromatique Ar₁ et Ar₂ est un noyau benzénique.

10. Composition selon la revendication précédente, dans lequel le groupe SP et chaque groupe CHO sont situés en position méta l'un par rapport à l'autre sur chaque noyau aromatique Ar₁ et Ar₂.

11. Composition selon la revendication précédente, dans laquelle l'aldéhyde est de formule **W1** : 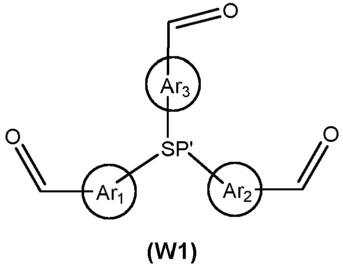 dans laquelle :
- chaque groupe Ar₁, Ar₂, Ar₃ représente un noyau aromatique, éventuellement substitué ;
- SP' relie les groupes Ar₁, Ar₂, et Ar₃ entre eux, SP' séparant deux à deux les groupes Ar₁, Ar₂, et Ar₃ par au moins 2 liaisons covalentes.

12. Composition selon la revendication précédente, dans laquelle SP' sépare deux à deux les groupes Ar₁ Ar₂ et Ar₃ par un nombre de liaisons covalentes inférieur ou égal à 150, de préférence inférieur ou égal à 100 et plus préférentiellement inférieur ou égal à 75.

13. Composition selon la revendication 11 ou 12, dans laquelle SP' représente un radical au moins trivalent choisi dans le groupe constitué par un radical hydrocarboné et un radical hydrocarboné substitué.

14. Composition selon l'une quelconque des revendications 11 à 13, dans laquelle SP' sépare deux à deux les groupes Ar₁, Ar₂ et Ar₃ par un nombre de liaisons covalentes supérieur ou égal à 3, de préférence supérieur ou égal à 4 et plus préférentiellement supérieur ou égal à 5.

15. Composition selon l'une quelconque des revendications 11 à 14, dans laquelle SP' sépare deux à deux les groupes Ar₁, Ar₂ et Ar₃ par un nombre de liaisons covalentes inférieur ou égal à 20, de préférence inférieur ou égal à 15.

16. Composition selon l'une quelconque des revendications 11 à 14, dans laquelle SP' sépare deux à deux les groupes Ar₁, Ar₂ et Ar₃ par un nombre de liaisons covalentes strictement supérieur à 15.

17. Composition selon l'une quelconque des revendications 11 à 16, dans laquelle le reste de chaque noyau aromatique Ar₁, Ar₂ et Ar₃ est non substitué.

18. Composition selon l'une quelconque des revendications 11 à 16, dans laquelle chaque noyau aromatique Ar₁, Ar₂ et Ar₃ est substitué respectivement par au moins un groupe K₁, K₂ et K₃ représentant, indépendamment l'un de l'autre, un radical monovalent hydrocarboné et un radical monovalent hydrocarboné substitué, de préférence chaque groupe K₁, K₂ et K₃ représentant, indépendamment l'un de l'autre, un radical monovalent alkyle ou un radical monovalent O-alkyle.

19. Composition selon l'une quelconque des revendications 11 à 18, dans laquelle chaque noyau aromatique Ar₁, Ar₂ et Ar₃ est un noyau benzénique.

20. Composition selon la revendication précédente, dans lequel le groupe SP' et chaque groupe CHO sont situés en position méta l'un par rapport à l'autre sur chaque noyau aromatique Ar₁, Ar₂ et Ar₃.

21. Composition selon l'une quelconque des revendications précédentes, dans laquelle l'aldéhyde est de formule **W2** : 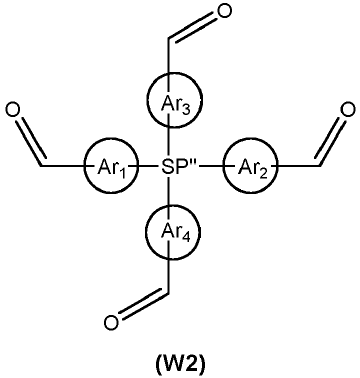 dans laquelle :
- chaque groupe Ar₁, Ar₂, Ar₃ et Ar₄ représente, indépendamment l'un de l'autre, un noyau aromatique, éventuellement substitué ;
- SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

22. Composition selon la revendication précédente, dans laquelle SP" sépare deux à deux les groupes Ar₁ Ar₂, Ar₃ et Ar₄ par un nombre de liaisons covalentes inférieur ou égal à 150, de préférence inférieur ou égal à 100 et plus préférentiellement inférieur ou égal à 75.

23. Composition selon l'une quelconque la revendication 21 ou 22, dans laquelle SP" représente un radical au moins tétravalent choisi dans le groupe constitué par un radical hydrocarboné et un radical hydrocarboné substitué.

24. Composition selon l'une quelconque des revendications 21 à 23, dans laquelle SP" sépare deux à deux les groupes Ar₁, Ar₂, Ar₃ et Ar₄ par un nombre de liaisons covalentes supérieur ou égal à 3, de préférence supérieur ou égal à 4 et plus préférentiellement supérieur ou égal à 5.

25. Composition selon l'une quelconque des revendications 21 à 24, dans laquelle SP" sépare deux à deux les groupes Ar₁, Ar₂, Ar₃ et Ar₄ par un nombre de liaisons covalentes inférieur ou égal à 20, de préférence inférieur ou égal à 15.

26. Composition selon l'une quelconque des revendications 21 à 24, dans laquelle SP" sépare deux à deux les groupes Ar₁, Ar₂, Ar₃ et Ar₄ par un nombre de liaisons covalentes strictement supérieur à 15.

27. Composition selon l'une quelconque des revendications 21 à 26, dans laquelle le reste de chaque noyau aromatique Ar₁, Ar₂, Ar₃ et Ar₄ est non substitué.

28. Composition selon l'une quelconque des revendications 21 à 26, dans laquelle chaque noyau aromatique Ar₁, Ar₂, Ar₃ et Ar₄ est substitué respectivement par au moins un groupe K₁, K₂, K₃ et K₄ représentant, indépendamment l'un de l'autre, un radical monovalent hydrocarboné et un radical monovalent hydrocarboné substitué, de préférence chaque groupe K₁, K₂, K₃ et K₄ représentant, indépendamment l'un de l'autre, un radical monovalent alkyle ou un radical monovalent O-alkyle.

29. Composition selon l'une quelconque des revendications 21 à 28, dans laquelle chaque noyau aromatique Ar₁, Ar₂, Ar₃ et Ar₄ est un noyau benzénique.

30. Composition selon la revendication précédente, dans lequel le groupe SP" et chaque groupe CHO sont situés en position méta l'un par rapport à l'autre sur chaque noyau aromatique Ar₁, Ar₂, Ar₃ et Ar₄.

31. Composition selon l'une quelconque des revendications précédentes, dans laquelle la masse molaire de l'aldéhyde de formule **W** est inférieure ou égale à 10000 g.mol⁻¹, de préférence inférieure ou égale à 5000 g.mol⁻¹, et plus préférentiellement inférieure ou égale à 2000 g.mol⁻¹ et encore plus préférentiellement à 500 g.mol⁻¹.

32. Composition selon l'une quelconque des revendications 1 à 10, dans laquelle l'aldéhyde est de formule **W3** : 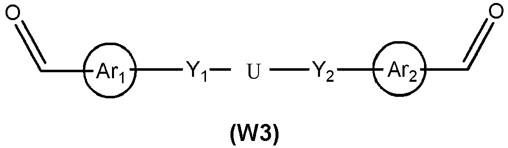 dans laquelle Y₁-U-Y₂ représente un radical divalent
- avec Y₁ et Y₂ représentant chacun, indépendamment l'un de l'autre, un groupe choisi dans le groupe constitué par l'oxygène, un groupe CH₂, un groupe C=O, un groupe S=O et un groupe SO2, de préférence, dans le groupe constitué par l'oxygène, un groupe S=O et un groupe SO2 et plus préférentiellement Y₁ et Y₂ représentant chacun l'oxygène ; et
- U représente un radical divalent choisi dans le groupe constitué par un radical hydrocarboné et un radical hydrocarboné substitué.

33. Composition selon l'une quelconque des revendications 1 à 31, dans laquelle SP représente un radical choisi dans le groupe constitué par les radicaux polyester, polyéther, polydiène, polyalkylène et polysilicone et les associations de ces radicaux, de préférence dans le groupe constitué par les radicaux polyéther et polysilicone et les associations de ces radicaux.

34. Composition selon la revendication 33, dans laquelle l'aldéhyde est de formule **W4** : 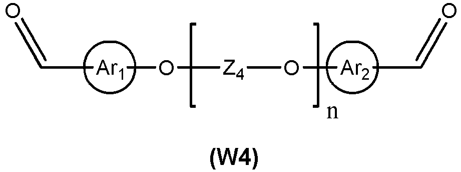 dans laquelle n est supérieur ou égal à 1 et de préférence, supérieur ou égal à 2 etZ₄ représente un radical divalent choisi dans le groupe constitué par un radical hydrocarboné et un radical hydrocarboné substitué.

35. Composition selon la revendication 33, dans laquelle l'aldéhyde est de formule **W5** : 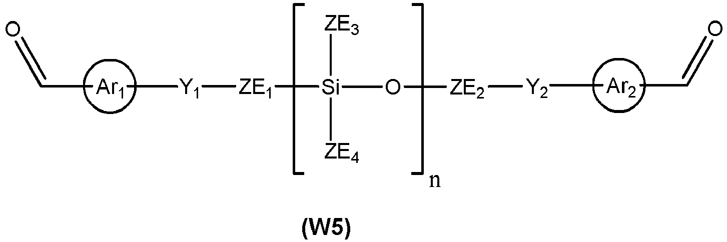 dans laquelle :
- n est supérieur ou égal à 1 et de préférence, supérieur ou égal à 2 ;
- Y₁ et Y₂ représentent chacun, indépendamment l'un de l'autre, un groupe choisi dans le groupe constitué par l'oxygène, un groupe CH₂, un groupe C=O, un groupe S=O et un groupe SO₂, de préférence, dans le groupe constitué par l'oxygène, un groupe S=O et un groupe SO₂ et plus préférentiellement Y₁ et Y₂ représentent chacun l'oxygène ;
- chaque radical ZE₁, ZE₂ représente, indépendamment l'un de l'autre, un radical divalent choisi dans le groupe constitué par un radical hydrocarboné et un radical hydrocarboné substitué ; et
- chaque radical ZE₃, ZE₄ représente, indépendamment l'un de l'autre, un radical monovalent choisi dans le groupe constitué par un radical hydrocarboné et un radical hydrocarboné substitué.

36. Composition selon la revendication précédente, dans laquelle chaque radical ZE₃, ZE₄ représente, indépendamment l'un de l'autre, un radical monovalent choisi dans le groupe constitué par les radicaux alkyle, aryle, arylalkyle, alkylaryle, cycloalkyle, alcényle, et plus préférentiellement chaque radical ZE₃, ZE₄ représente un radical monovalent alkyl.

37. Composition selon l'une quelconque des revendications précédentes, dans laquelle le noyau aromatique du dérivé du polyphénol aromatique est porteur de trois groupes -O-Z en position méta les uns par rapport aux autres.

38. Composition selon l'une quelconque des revendications précédentes, dans laquelle les deux positions ortho de chaque groupe -O-Z sont non substituées.

39. Composition selon l'une quelconque des revendications précédentes, dans laquelle le reste du noyau aromatique du dérivé du polyphénol aromatique est non substitué.

40. Composition selon l'une quelconque des revendications précédentes, dans laquelle le dérivé du polyphénol aromatique comprend plusieurs noyaux aromatiques, au moins deux d'entre eux étant chacun porteur d'au moins deux groupes -O-Z en position méta l'un par rapport à l'autre, les deux positions ortho d'au moins un des groupes -O-Z d'au moins un noyau aromatique étant non substituées.

41. Composition selon l'une quelconque des revendications précédentes, dans laquelle chaque noyau aromatique du dérivé du polyphénol aromatique est un noyau benzénique.

42. Composition selon l'une quelconque des revendications précédentes, dans laquelle le dérivé du polyphénol aromatique est choisi dans le groupe constitué par les dérivés du résorcinol, du phloroglucinol, du 2,2',4,4'-tétrahydroxydiphényl sulfide, du 2,2',4,4'-tétrahydroxybenzophénone et les mélanges de ces composés.

43. Composition selon l'une quelconque des revendications précédentes, dans laquelle chaque groupe -O-Z est choisi dans le groupe constitué par les groupes -O-Si(R₁R₂R₃), -O-C((=O)(R₄)), -O-C((=O)(N(R₅R₆))) dans lesquels chaque groupe R₁, R₂, R₃ et R₄ représente, indépendamment l'un de l'autre, un radical hydrocarboné ou un radical hydrocarboné substitué et chaque groupe R₅ et R₆ représente, indépendamment l'un de l'autre, l'hydrogène, un radical hydrocarboné ou un radical hydrocarboné substitué.

44. Composition selon l'une quelconque des revendications 1 à 43, dans laquelle chaque groupe -O-Z représente un groupe -O-Si(R₁R₂R₃) avec R₁, R₂, R₃ représentant, indépendamment l'un de l'autre, un radical choisi dans le groupe constitué par les radicaux alkyle, aryle, arylalkyle, alkylaryle, cycloalkyle, alcényle.

45. Composition selon l'une quelconque des revendications 1 à 43, dans laquelle chaque groupe -O-Z représente un groupe -O-C((=O)(R₄)) avec R₄ représentant un radical choisi dans le groupe constitué par les radicaux alkyle, aryle, arylalkyle, alkylaryle, cycloalkyle, alcényle.

46. Composition selon l'une quelconque des revendications 1 à 43, dans laquelle chaque groupe -O-Z représente un groupe -O-C((=O)(N(R₅R₆))) avec R₅, R₆ représentant, indépendamment l'un de l'autre, un radical choisi dans le groupe constitué par les radicaux alkyle, aryle, arylalkyle, alkylaryle, cycloalkyle, alcényle et l'hydrogène.

47. Composition selon l'une quelconque des revendications 1 à 46, dans laquelle le dérivé du polyphénol aromatique est choisi dans le groupe constitué par les dérivés du résorcinol, du phloroglucinol, du 2,2',4,4'-tétrahydroxydiphényl sulfide, du 2,2',4,4'-tétrahydroxybenzophénone et les mélanges de ces composés.

48. Composition selon l'une quelconque des revendications 1 à 46, -dans laquelle le dérivé de polyphénol aromatique est une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé susceptible de réagir avec ledit polyphénol aromatique comprenant au moins une fonction aldéhyde et/ou d'au moins un composé susceptible de réagir avec ledit polyphénol aromatique comprenant au moins deux fonctions hydroxyméthyle portées par un noyau aromatique,
les fonctions hydroxyles de la résine pré-condensée restées réactives à l'issue de la condensation de la résine pré-condensée étant substituées par des groupes -O-Z.

49. Composition selon l'une quelconque des revendications précédentes, comprenant un élastomère diénique choisi dans le groupe constitué par les polybutadiènes, les polyisoprènes de synthèse, le caoutchouc naturel, les copolymères de butadiène, les copolymères d'isoprène et les mélanges de ces élastomères.

50. Composition selon l'une quelconque des revendications précédentes comprenant un résidu obtenu à partir du radical Z de chaque groupe -O-Z.

51. Composition de caoutchouc, **caractérisée en ce qu'**elle comprend :
A1) au moins un aldéhyde de formule **W** : 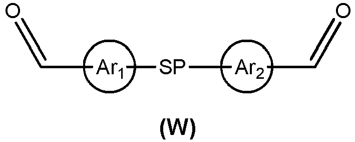 dans laquelle :
- chaque groupe Ar₁ et Ar₂ représente, indépendamment l'un de l'autre, un noyau aromatique, éventuellement substitué,
SP est un groupe de liaison reliant au moins les groupes Ar₁ et Ar₂ entre eux, SP séparant les groupes Ar₁ et Ar₂ par au moins 2 liaisons covalentes ; et
A2) au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène.

52. Composition selon la revendication précédente, dans laquelle l'aldéhyde est de formule **W1** : 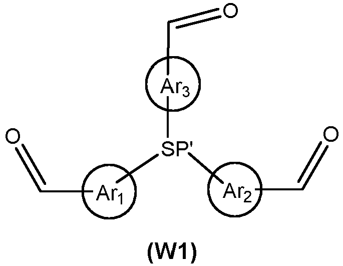 dans laquelle :
- chaque groupe Ar₁, Ar₂, Ar₃ représente un noyau aromatique, éventuellement substitué ;
- SP' relie les groupes Ar₁, Ar₂, et Ar₃ entre eux, SP' séparant deux à deux les groupes Ar₁, Ar₂, et Ar₃ par au moins 2 liaisons covalentes.

53. Composition selon la revendication 51 ou 52, dans laquelle l'aldéhyde est de formule **W2** : 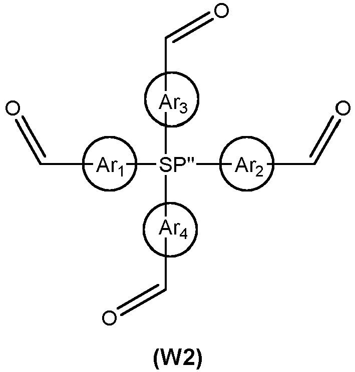 dans laquelle :
- chaque groupe Ar₁, Ar₂, Ar₃ et Ar₄ représente, indépendamment l'un de l'autre, un noyau aromatique, éventuellement substitué ;
- SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

54. Procédé de fabrication d'une composition de caoutchouc à l'état cru, **caractérisé en ce qu'**il comprend une étape de mélangeage :
A1) d'au moins un aldéhyde de formule **W** : 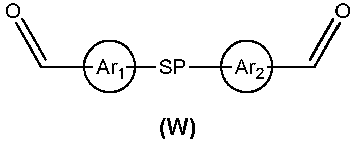 dans laquelle :
- chaque groupe Ar₁ et Ar₂ représente, indépendamment l'un de l'autre, un noyau aromatique, éventuellement substitué,
- SP est un groupe de liaison reliant au moins les groupes Ar₁ et Ar₂ entre eux, SP séparant les groupes Ar₁ et Ar₂ par au moins 2 liaisons covalentes ; et
A2) d'au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène.

55. Procédé selon la revendication précédente, dans lequel l'aldéhyde est de formule **W1** : 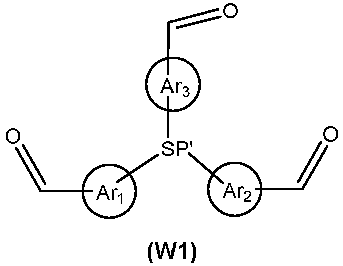 dans laquelle :
- chaque groupe Ar₁, Ar₂, Ar₃ représente un noyau aromatique, éventuellement substitué ;
- SP' relie les groupes Ar₁, Ar₂, et Ar₃ entre eux, SP' séparant deux à deux les groupes Ar₁, Ar₂, et Ar₃ par au moins 2 liaisons covalentes.

56. Procédé selon la revendication 54 ou 55, dans lequel l'aldéhyde est de formule **W2** : 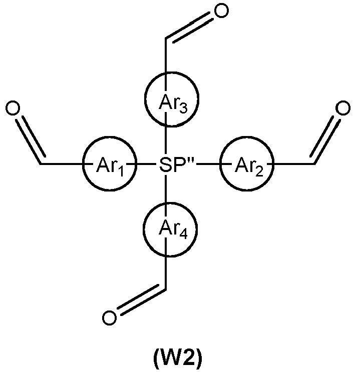 dans laquelle :
- chaque groupe Ar₁, Ar₂, Ar₃ et Ar₄ représente, indépendamment l'un de l'autre, un noyau aromatique, éventuellement substitué ;
- SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

57. Procédé de fabrication d'une composition de caoutchouc à l'état cuit, **caractérisé en ce qu'**il comprend :
- une étape de fabrication d'une composition de caoutchouc à l'état cru comprenant une étape de mélangeage :
A1) d'au moins un aldéhyde de formule **W** : 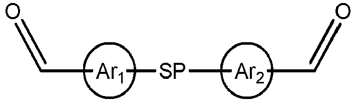 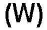 dans laquelle :
∘ chaque groupe Ar₁ et Ar₂ représente, indépendamment l'un de l'autre, un noyau aromatique, éventuellement substitué,
∘ SP est un groupe de liaison reliant au moins les groupes Ar₁ et Ar₂ entre eux, SP séparant les groupes Ar₁ et Ar₂ par au moins 2 liaisons covalentes ; et
A2) d'au moins un dérivé d'un polyphénol aromatique comprenant au moins un noyau aromatique porteur d'au moins deux groupes -O-Z en position méta l'un par rapport à l'autre, les deux positions ortho d'au moins un des groupes -O-Z étant non substituées, Z étant différent de l'hydrogène,
- puis, une étape de mise en forme de la composition de caoutchouc à l'état cru,
- puis, puis, une étape de réticulation de la composition de caoutchouc durant laquelle on réticule une résine à base du dérivé de polyphénol aromatique A2 et de l'aldéhyde A1.

58. Procédé selon la revendication précédente, dans lequel l'aldéhyde est de formule **W1** : 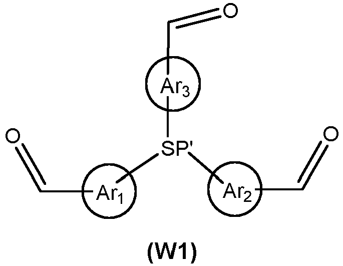 dans laquelle :
∘ chaque groupe Ar₁, Ar₂, Ar₃ représente un noyau aromatique, éventuellement substitué ;
∘ SP' relie les groupes Ar₁, Ar₂, et Ar₃ entre eux, SP' séparant deux à deux les groupes Ar₁, Ar₂, et Ar₃ par au moins 2 liaisons covalentes.

59. Procédé selon la revendication 57 ou 58, dans lequel l'aldéhyde est de formule **W2** : 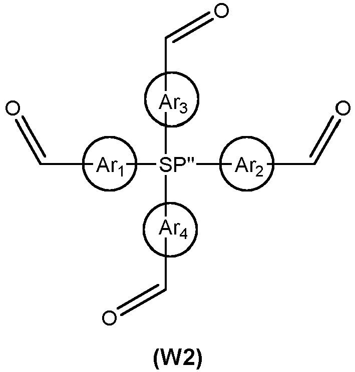 dans laquelle :
∘ chaque groupe Ar₁, Ar₂, Ar₃ et Ar₄ représente, indépendamment l'un de l'autre, un noyau aromatique, éventuellement substitué ;
∘ SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

60. Utilisation d'un aldéhyde de formule **W** : 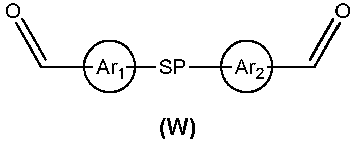 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes,
dans une composition de caoutchouc comprenant une résine phénol-aldéhyde à base d'au moins un polyphénol aromatique A2) tel que défini dans la revendication 1 et d'au moins l'aldéhyde pour augmenter la rigidité de la composition de caoutchouc.

61. Utilisation selon la revendication précédente, dans laquelle l'aldéhyde est de formule **W1** : 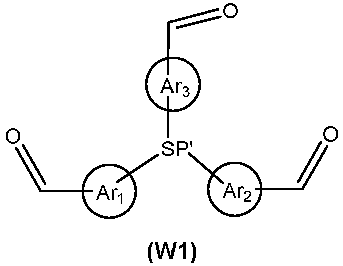 dans laquelle :
- chaque groupe Ar₁, Ar₂, Ar₃ représente un noyau aromatique, éventuellement substitué ;
- SP' relie les groupes Ar₁, Ar₂, et Ar₃ entre eux, SP' séparant deux à deux les groupes Ar₁, Ar₂, et Ar₃ par au moins 2 liaisons covalentes.

62. Utilisation selon la revendication 60 ou 61, dans laquelle l'aldéhyde est de formule **W2** : 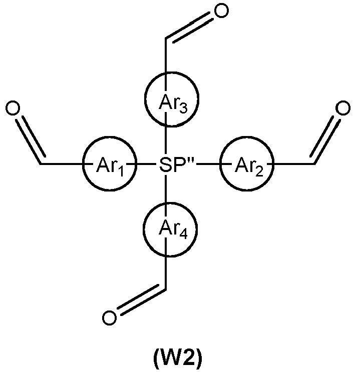 dans laquelle :
- chaque groupe Ar₁, Ar₂, Ar₃ et Ar₄ représente, indépendamment l'un de l'autre, un noyau aromatique, éventuellement substitué ;
- SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

63. Utilisation de l'aldéhyde de formule **W** : 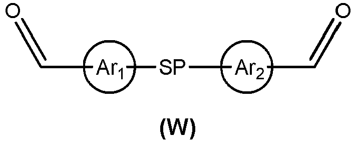 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes,
pour augmenter la fluidité à l'état cru d'une composition de caoutchouc comprenant une résine phénol-aldéhyde à base d'au moins un polyphénol aromatique A2) tel que défini dans la revendication 1 et d'au moins l'aldéhyde.

64. Utilisation selon la revendication précédente, dans laquelle l'aldéhyde est de formule **W1** : 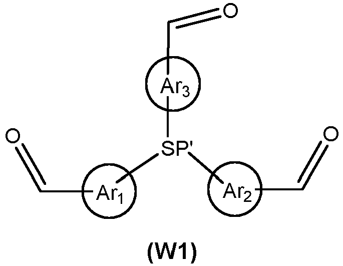 dans laquelle :
- chaque groupe Ar₁, Ar₂, Ar₃ représente un noyau aromatique, éventuellement substitué ;
- SP' relie les groupes Ar₁, Ar₂, et Ar₃ entre eux, SP' séparant deux à deux les groupes Ar₁, Ar₂, et Ar₃ par au moins 2 liaisons covalentes.

65. Utilisation selon la revendication 63 ou 64, dans laquelle l'aldéhyde est de formule **W2** : 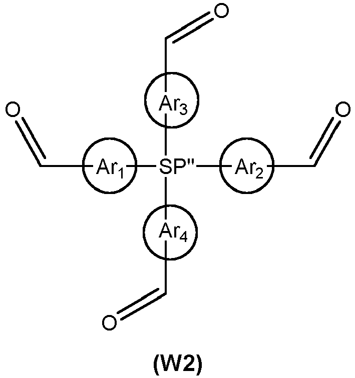 dans laquelle :
- chaque groupe Ar₁, Ar₂, Ar₃ et Ar₄ représente, indépendamment l'un de l'autre, un noyau aromatique, éventuellement substitué ;
- SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

66. Utilisation de l'aldéhyde de formule **W** : 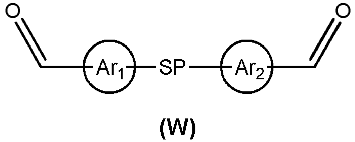 dans laquelle :
- chaque groupe Ar₁ et Ar₂ représente, indépendamment l'un de l'autre, un noyau aromatique, éventuellement substitué; et
- SP est un groupe de liaison reliant au moins les groupes Ar₁ et Ar₂ entre eux, SP séparant les groupes Ar₁ et Ar₂ par au moins 2 liaisons covalentes
pour maintenir la rigidité avec l'augmentation de la température d'une composition de caoutchouc comprenant une résine phénol-aldéhyde à base d'au moins un polyphénol aromatique A2) tel que défini dans la revendication 1 et d'au moins l'aldéhyde.

67. Utilisation selon la revendication précédente, dans laquelle l'aldéhyde est de formule **W1** : 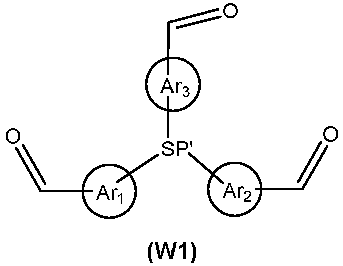 dans laquelle :
- chaque groupe Ar₁, Ar₂, Ar₃ représente un noyau aromatique, éventuellement substitué ;
- SP' relie les groupes Ar₁, Ar₂, et Ar₃ entre eux, SP' séparant deux à deux les groupes Ar₁, Ar₂, et Ar₃ par au moins 2 liaisons covalentes.

68. Utilisation selon la revendication 66 ou 67, dans laquelle l'aldéhyde est de formule **W2** : 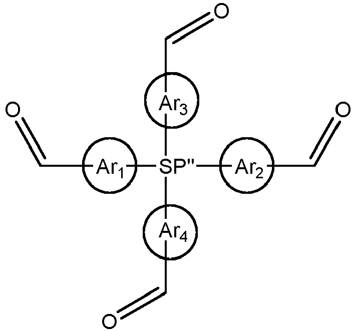 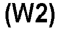 dans laquelle :
- chaque groupe Ar₁, Ar₂, Ar₃ et Ar₄ représente, indépendamment l'un de l'autre, un noyau aromatique, éventuellement substitué ;
- SP" relie les groupes Ar₁, Ar₂, Ar₃ et Ar₄ entre eux, SP" séparant deux à deux les groupes Ar₁, Ar₂, Ar₃ et Ar₄ par au moins 2 liaisons covalentes.

69. Composite de caoutchouc renforcé d'au moins un élément de renfort noyé dans une composition de caoutchouc, **caractérisé en ce que** la composition de caoutchouc est selon l'une quelconque des revendications 1 à 53.

70. Pneumatique (1), **caractérisé en ce qu'**il comprend une composition de caoutchouc selon l'une quelconque des revendications 1 à 53 ou un composite de caoutchouc selon la revendication précédente.

## Patentansprüche

1. Kautschukzusammensetzung, **dadurch gekennzeichnet, dass** sie mindestens ein Harz auf Basis von:
A1) mindestens einem Aldehyd der Formel **W**: 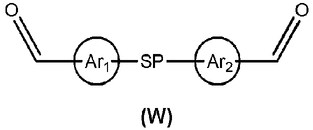 in der:
- jede Gruppe Ar₁ und Ar₂ unabhängig voneinander für einen gegebenenfalls substituierten aromatischen Kern steht,
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt; und
A2) mindestens einem Derivat eines aromatischen Polyphenols mit mindestens einem aromatischen Kern, der mindestens zwei -O-Z-Gruppen in meta-Position zueinander trägt, wobei die beiden ortho-Positionen mindestens einer der -O-Z-Gruppen unsubstituiert sind, wobei Z von Wasserstoff verschieden ist,
umfasst.

2. Zusammensetzung nach dem vorhergehenden Anspruch, wobei SP die Gruppen Ar₁ und Ar₂ durch eine Zahl von kovalenten Bindungen kleiner oder gleich 150, vorzugsweise kleiner oder gleich 100 und weiter bevorzugt kleiner oder gleich 75 trennt.

3. Zusammensetzung nach einem der vorhergehenden Ansprüche, wobei SP für einen mindestens zweiwertigen Rest steht, der aus der Gruppe bestehend aus einem Kohlenwasserstoffrest und einem substituierten Kohlenwasserstoffrest ausgewählt ist.

4. Zusammensetzung nach einem der vorhergehenden Ansprüche, wobei SP die Gruppen Ar₁ und Ar₂ durch eine Zahl von kovalenten Bindungen größer oder gleich 3, vorzugsweise größer oder gleich 4 und weiter bevorzugt größer oder gleich 5 trennt.

5. Zusammensetzung nach einem der Ansprüche 1 bis 4, wobei SP die Gruppen Ar₁ und Ar₂ durch eine Zahl von kovalenten Bindungen kleiner oder gleich 20, vorzugsweise kleiner oder gleich 15, trennt.

6. Zusammensetzung nach einem der Ansprüche 1 bis 4, wobei SP die Gruppen Ar₁ und Ar₂ durch eine Zahl von kovalenten Bindungen streng größer 15 trennt.

7. Zusammensetzung nach einem der Ansprüche 1 bis 6, wobei jeder aromatische Kern Ar₁ und Ar₂ unsubstituiert ist.

8. Zusammensetzung nach einem der Ansprüche 1 bis 6, wobei jeder aromatische Kern Ar₁ und Ar₂ jeweils durch mindestens eine Gruppe K₁ und K₂ substituiert ist, die jeweils unabhängig voneinander für einen einwertigen Kohlenwasserstoffrest und einen substituierten einwertigen Kohlenwasserstoffrest stehen, wobei vorzugsweise jede Gruppe K₁ und K₂ unabhängig voneinander für einen einwertigen Alkylrest oder einen einwertigen O-Alkylrest stehen.

9. Zusammensetzung nach einem der vorhergehenden Ansprüche, wobei jeder aromatische Kern Ar₁ und Ar₂ ein Benzolkern ist.

10. Zusammensetzung nach dem vorhergehenden Anspruch, wobei an jedem aromatischen Kern Ar₁ und Ar₂ die Gruppe SP und jede CHO-Gruppe in meta-Position zueinander stehen.

11. Zusammensetzung nach dem vorhergehenden Anspruch, wobei der Aldehyd die Formel **W1** aufweist: 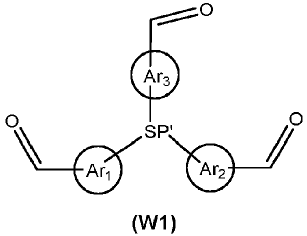 in der:
- jede Gruppe Ar₁, Ar₂, Ar₃ für einen gegebenenfalls substituierten aromatischen Kern steht;
- SP' die Gruppen Ar₁, Ar₂ und Ar₃ miteinander verbindet, wobei SP' die Gruppen Ar₁, Ar₂ und Ar₃ paarweise um mindestens 2 kovalente Bindungen trennt.

12. Zusammensetzung nach dem vorhergehenden Anspruch, wobei SP' die Gruppen Ar₁, Ar₂ und Ar₃ paarweise durch eine Zahl von kovalenten Bindungen kleiner oder gleich 150, vorzugsweise kleiner oder gleich 100 und weiter bevorzugt kleiner oder gleich 75 trennt.

13. Zusammensetzung nach Anspruch 11 oder 12, wobei SP' für einen mindestens dreiwertigen Rest steht, der aus der Gruppe bestehend aus einem Kohlenwasserstoffrest und einem substituierten Kohlenwasserstoffrest ausgewählt ist.

14. Zusammensetzung nach einem der Ansprüche 11 bis 13, wobei SP' die Gruppen Ar₁, Ar₂ und Ar₃ paarweise durch eine Zahl von kovalenten Bindungen größer oder gleich 3, vorzugsweise größer oder gleich 4 und weiter bevorzugt größer oder gleich 5 trennt.

15. Zusammensetzung nach einem der Ansprüche 11 bis 14, wobei SP' die Gruppen Ar₁, Ar₂ und Ar₃ paarweise durch eine Zahl von kovalenten Bindungen kleiner oder gleich 20, vorzugsweise kleiner oder gleich 15, trennt.

16. Zusammensetzung nach einem der Ansprüche 11 bis 14, wobei SP' die Gruppen Ar₁, Ar₂ und Ar₃ paarweise durch eine Zahl von kovalenten Bindungen streng größer 15 trennt.

17. Zusammensetzung nach einem der Ansprüche 11 bis 16, wobei der Rest jedes aromatischen Kerns Ar₁, Ar₂ und Ar₃ unsubstituiert ist.

18. Zusammensetzung nach einem der Ansprüche 11 bis 16, wobei jeder aromatische Kern Ar₁, Ar₂ und Ar₃ jeweils durch mindestens eine Gruppe K₁, K₂ und K₃ substituiert sind, die jeweils unabhängig voneinander für einen einwertigen Kohlenwasserstoffrest und einen substituierten einwertigen Kohlenwasserstoffrest stehen, wobei vorzugsweise jede Gruppe K₁, K₂ und K₃ unabhängig voneinander für einen einwertigen Alkylrest oder einen einwertigen O-Alkylrest stehen.

19. Zusammensetzung nach einem der Ansprüche 11 bis 18, wobei jeder aromatische Kern Ar₁, Ar₂ und Ar₃ ein Benzolkern ist.

20. Zusammensetzung nach dem vorhergehenden Anspruch, wobei an jedem aromatischen Kern Ar₁, Ar₂ und Ar₃ die Gruppe SP' und jede CHO-Gruppe in meta-Position zueinander stehen.

21. Zusammensetzung nach einem der vorhergehenden Ansprüche, wobei der Aldehyd die Formel **W2** aufweist: 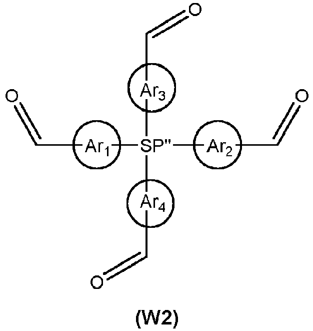 in der:
- jede Gruppe Ar₁, Ar₂, Ar₃ und Ar₄ für einen gegebenenfalls substituierten aromatischen Kern steht;
- SP'' die Gruppen Ar₁, Ar₂, Ar₃ und Ar₄ miteinander verbindet, wobei SP'' die Gruppen Ar₁, Ar₂, Ar₃ und Ar₄ paarweise um mindestens 2 kovalente Bindungen trennt.

22. Zusammensetzung nach dem vorhergehenden Anspruch, wobei SP'' die Gruppen Ar₁, Ar₂, Ar₃ und Ar₄ paarweise durch eine Zahl von kovalenten Bindungen kleiner oder gleich 150, vorzugsweise kleiner oder gleich 100 und weiter bevorzugt kleiner oder gleich 75 trennt.

23. Zusammensetzung nach Anspruch 21 oder 22, wobei SP'' für einen mindestens vierwertigen Rest steht, der aus der Gruppe bestehend aus einem Kohlenwasserstoffrest und einem substituierten Kohlenwasserstoffrest ausgewählt ist.

24. Zusammensetzung nach einem der Ansprüche 21 bis 23, wobei SP'' die Gruppen Ar₁, Ar₂, Ar₃ und Ar₄ paarweise durch eine Zahl von kovalenten Bindungen größer oder gleich 3, vorzugsweise größer oder gleich 4 und weiter bevorzugt größer oder gleich 5 trennt.

25. Zusammensetzung nach einem der Ansprüche 21 bis 24, wobei SP'' die Gruppen Ar₁, Ar₂, Ar₃ und Ar₄ paarweise durch eine Zahl von kovalenten Bindungen kleiner oder gleich 20, vorzugsweise kleiner oder gleich 15, trennt.

26. Zusammensetzung nach einem der Ansprüche 21 bis 24, wobei SP'' die Gruppen Ar₁, Ar₂, Ar₃ und Ar₄ paarweise durch eine Zahl von kovalenten Bindungen streng größer 15 trennt.

27. Zusammensetzung nach einem der Ansprüche 21 bis 26, wobei der Rest jedes aromatischen Kerns Ar₁, Ar₂, Ar₃ und Ar₄ unsubstituiert ist.

28. Zusammensetzung nach einem der Ansprüche 21 bis 26, wobei jeder aromatische Kern Ar₁, Ar₂, Ar₃ und Ar₄ jeweils durch mindestens eine Gruppe K₁, K₂, K₃ und K₄ substituiert sind, die jeweils unabhängig voneinander für einen einwertigen Kohlenwasserstoffrest und einen substituierten einwertigen Kohlenwasserstoffrest stehen, wobei vorzugsweise jede Gruppe K₁, K₂, K₃ und K₄ unabhängig voneinander für einen einwertigen Alkylrest oder einen einwertigen O-Alkylrest stehen.

29. Zusammensetzung nach einem der Ansprüche 21 bis 28, wobei jeder aromatische Kern Ar₁, Ar₂, Ar₃ und Ar₄ ein Benzolkern ist.

30. Zusammensetzung nach dem vorhergehenden Anspruch, wobei an jedem aromatischen Kern Ar₁, Ar₂, Ar₃ und Ar₄ die Gruppe SP'' und jede CHO-Gruppe in meta-Position zueinander stehen.

31. Zusammensetzung nach einem der vorhergehenden Ansprüche, wobei die Molmasse des Aldehyds der Formel **W** kleiner oder gleich 10.000 g.mol⁻¹, vorzugsweise kleiner oder gleich 5000 g.mol⁻¹ und weiter bevorzugt kleiner oder gleich 2000 g.mol⁻¹ und noch weiter bevorzugt kleiner oder gleich 500 g.mol⁻¹ ist.

32. Zusammensetzung nach einem der Ansprüche 1 bis 10, wobei der Aldehyd die Formel **W3** aufweist: 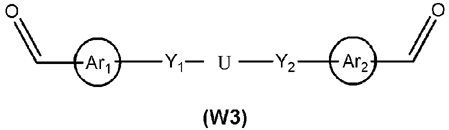 in der Y₁-U-Y₂ für einen zweiwertigen Rest steht,
- wobei Y₁ und Y₂ jeweils unabhängig voneinander für eine Gruppe stehen, die aus der Gruppe bestehend aus Wasserstoff, einer CH₂-Gruppe, einer C=O-Gruppe, einer S=O-Gruppe und einer SO₂-Gruppe, vorzugsweise aus der Gruppe bestehend aus Sauerstoff, einer S=O-Gruppe und einer SO₂-Gruppe, ausgewählt ist und weiter bevorzugt Y₁ und Y₂ jeweils für Sauerstoff stehen und
- U für einen zweiwertigen Rest steht, der aus der Gruppe bestehend aus einem Kohlenwasserstoffrest und einem substituierten Kohlenwasserstoffrest ausgewählt ist.

33. Zusammensetzung nach einem der Ansprüche 1 bis 31, wobei SP für einen Rest steht, der aus der Gruppe bestehend aus Polyester-, Polyether-, Polydien-, Polyalkylen- und Polysilikonresten und Kombinationen dieser Reste, vorzugsweise aus der Gruppe bestehend aus Polyether- und Polysilikonresten und Kombinationen dieser Reste, ausgewählt ist.

34. Zusammensetzung nach Anspruch 33, wobei der Aldehyd die Formel **W4** aufweist: 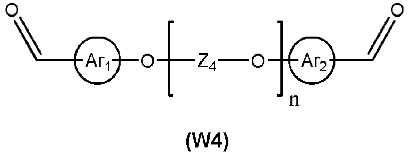 in der n größer oder gleich 1 und vorzugsweise größer oder gleich 2 ist und Z₄ für einen zweiwertigen Rest steht, der aus der Gruppe bestehend aus einem Kohlenwasserstoffrest und einem substituierten Kohlenwasserstoffrest ausgewählt ist.

35. Zusammensetzung nach Anspruch 33, wobei der Aldehyd die Formel **W5** aufweist: 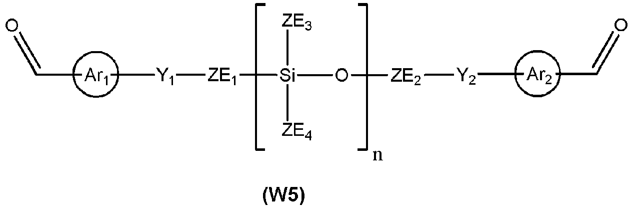 in der:
- n größer oder gleich 1 und vorzugsweise größer oder gleich 2 ist;
- Y₁ und Y₂ jeweils unabhängig voneinander für eine Gruppe stehen, die aus der Gruppe bestehend aus Wasserstoff, einer CH₂-Gruppe, einer C=O-Gruppe, einer S=O-Gruppe und einer SO₂-Gruppe, vorzugsweise aus der Gruppe bestehend aus Sauerstoff, einer S=O-Gruppe und einer SO₂-Gruppe, ausgewählt ist und weiter bevorzugt Y₁ und Y₂ jeweils für Sauerstoff stehen;
- jeder Rest ZE₁, ZE₂ unabhängig voneinander für einen zweiwertigen Rest steht, der aus der Gruppe bestehend aus einem Kohlenwasserstoffrest und einem substituierten Kohlenwasserstoffrest ausgewählt ist; und
- jeder Rest ZE₃, ZE₄ unabhängig voneinander für einen einwertigen Rest steht, der aus der Gruppe bestehend aus einem Kohlenwasserstoffrest und einem substituierten Kohlenwasserstoffrest ausgewählt ist.

36. Zusammensetzung nach dem vorhergehenden Anspruch, wobei jeder Rest ZE₃, ZE₄ unabhängig voneinander für einen einwertigen Rest steht, der aus der Gruppe bestehend aus Alkyl-, Aryl-, Arylalkyl-, Alkylaryl-, Cycloalkyl- und Alkenylresten ausgewählt ist, und weiter bevorzugt jeder Rest ZE₃, ZE₄ für einen einwertigen Alkylrest steht.

37. Zusammensetzung nach einem der vorhergehenden Ansprüche, wobei der aromatische Kern des Derivats des aromatischen Polyphenols drei -O-Z-Gruppen in meta-Position zueinander trägt.

38. Zusammensetzung nach einem der vorhergehenden Ansprüche, wobei die beiden ortho-Positionen jeder -O-Z-Gruppe unsubstituiert sind.

39. Zusammensetzung nach einem der vorhergehenden Ansprüche, wobei der Rest des aromatischen Kerns des Derivats des aromatischen Polyphenols unsubstituiert ist.

40. Zusammensetzung nach einem der vorhergehenden Ansprüche, wobei das aromatische Polyphenol mehrere aromatische Kerne umfasst, von denen mindestens zwei jeweils mindestens zwei -O-Z-Gruppen in meta-Position zueinander tragen, wobei die beiden ortho-Positionen mindestens einer der -O-Z-Gruppen mindestens eines aromatischen Kerns unsubstituiert sind.

41. Zusammensetzung nach einem der vorhergehenden Ansprüche, wobei jeder aromatische Kern des Derivats des aromatischen Polyphenols ein Benzolkern ist.

42. Zusammensetzung nach einem der vorhergehenden Ansprüche, wobei das Derivat des aromatischen Polyphenols aus der Gruppe bestehend aus Derivaten von Resorcinol, Phloroglucinol, 2,2',4,4'-Tetrahydroxydiphenylsulfid, 2,2',4,4'-Tetrahydroxybenzophenon und Mischungen dieser Verbindungen ausgewählt ist.

43. Zusammensetzung nach einem der vorhergehenden Ansprüche, wobei jede -O-Z-Gruppe aus der Gruppe bestehend aus den Gruppen -O-Si (R₁R₂R₃), -O-C((=O)(R₄)) und -O-C((=O)(N(R₅R₆))) ausgewählt ist, wobei jede Gruppe R₁, R₂, R₃ und R₄ unabhängig voneinander für ein Kohlenwasserstoffrest oder einen substituierten Kohlenwasserstoffrest steht und jede Gruppe R₅ und R₆ unabhängig voneinander für Wasserstoff, einen Kohlenwasserstoffrest oder einen substituierten Kohlenwasserstoffrest steht.

44. Zusammensetzung nach einem der Ansprüche 1 bis 43, wobei jede -O-Z-Gruppe für eine Gruppe -O-Si(R₁R₂R₃) steht, wobei R₁, R₂, R₃ unabhängig voneinander für einen Rest aus der Gruppe bestehend aus Alkyl-, Aryl-, Arylalkyl-, Alkylaryl-, Cycloalkyl- und Alkenylresten stehen.

45. Zusammensetzung nach einem der Ansprüche 1 bis 43, wobei jede -O-Z-Gruppe für eine Gruppe -O-C((=O)(R₄)) steht, wobei R₄ für einen Rest aus der Gruppe bestehend aus Alkyl-, Aryl-, Arylalkyl-, Alkylaryl-, Cycloalkyl- und Alkenylresten steht.

46. Zusammensetzung nach einem der Ansprüche 1 bis 43, wobei jede -O-Z-Gruppe für eine Gruppe -O-C((=O)(N(R₅R₆))) steht, wobei R₅ und R₆ unabhängig voneinander für einen Rest aus der Gruppe bestehend aus Alkyl-, Aryl-, Arylalkyl-, Alkylaryl-, Cycloalkyl- und Alkenylresten stehen.

47. Zusammensetzung nach einem der Ansprüche 1 bis 46, wobei das Derivat des aromatischen Polyphenols aus der Gruppe bestehend aus Derivaten von Resorcinol, Phloroglucinol, 2,2',4,4'-Tetrahydroxydiphenylsulfid, 2,2',4,4'-Tetrahydroxybenzophenon und Mischungen dieser Verbindungen ausgewählt ist.

48. Zusammensetzung nach einem der Ansprüche 1 bis 46, wobei es sich bei dem Derivat des aromatischen Polyphenols um ein vorkondensiertes Harz auf Basis von
- mindestens einem aromatischen Polyphenol mit mindestens einem aromatischen Kern, der mindestens zwei Hydroxylfunktionen in meta-Position zueinander trägt, wobei die beiden ortho-Positionen mindestens einer der Hydroxylfunktionen unsubstituiert sind; und
- mindestens einer gegenüber dem aromatischen Polyphenol reaktionsfähigen Verbindung mit mindestens einer Aldehydfunktion und/oder mindestens einer gegenüber dem aromatischen Polyphenol reaktionsfähigen Verbindung mit mindestens zwei Hydroxylmethylfunktionen an einem aromatischen Kern
handelt, wobei die am Ende der Kondensation des vorkondensierten Harzes reaktiv gebliebenen Hydroxylfunktionen des vorkondensierten Harzes durch -O-Z-Gruppen ersetzt sind.

49. Zusammensetzung nach einem der vorhergehenden Ansprüche, umfassend ein Dienelastomer aus der Gruppe bestehend aus Polybutadienen, synthetischen Polyisoprenen, Naturkautschuk, Butadien-Copolymeren, Isopren-Copolymeren und Mischungen dieser Elastomere.

50. Zusammensetzung nach einem der vorhergehenden Ansprüche, umfassend einen aus dem Rest Z jeder -O-Z-Gruppe erhaltenen Rest.

51. Kautschukzusammensetzung, **dadurch gekennzeichnet, dass** sie Folgendes umfasst:
A1) mindestens einen Aldehyd der Formel **W**: 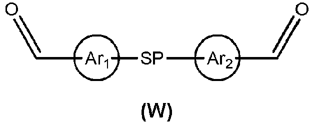 in der:
- jede Gruppe Ar₁ und Ar₂ unabhängig voneinander für einen gegebenenfalls substituierten aromatischen Kern steht,
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt; und
A2) mindestens ein Derivat eines aromatischen Polyphenols mit mindestens einem aromatischen Kern, der mindestens zwei -O-Z-Gruppen in meta-Position zueinander trägt, wobei die beiden ortho-Positionen mindestens einer der -O-Z-Gruppen unsubstituiert sind, wobei Z von Wasserstoff verschieden ist.

52. Zusammensetzung nach dem vorhergehenden Anspruch, wobei der Aldehyd die Formel **W1** aufweist: 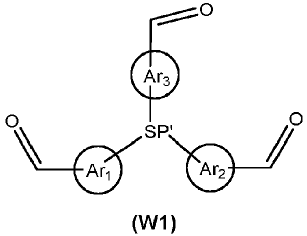 in der:
- jede Gruppe Ar₁, Ar₂, Ar₃ für einen gegebenenfalls substituierten aromatischen Kern steht;
- SP' die Gruppen Ar₁, Ar₂ und Ar₃ miteinander verbindet, wobei SP' die Gruppen Ar₁, Ar₂ und Ar₃ paarweise um mindestens 2 kovalente Bindungen trennt.

53. Zusammensetzung nach Anspruch 51 oder 52, wobei der Aldehyd die Formel W2 aufweist: 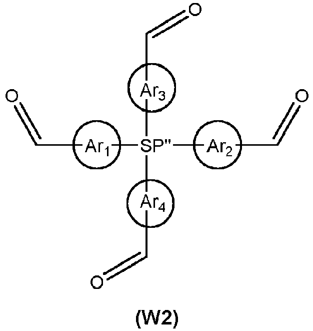 in der:
- jede Gruppe Ar₁, Ar₂, Ar₃ und Ar₄ für einen gegebenenfalls substituierten aromatischen Kern steht;
- SP" die Gruppen Ar₁, Ar₂, Ar₃ und Ar₄ miteinander verbindet, wobei SP'' die Gruppen Ar₁, Ar₂, Ar₃ und Ar₄ paarweise um mindestens 2 kovalente Bindungen trennt.

54. Verfahren zur Herstellung einer Kautschukzusammensetzung in rohem Zustand, **dadurch gekennzeichnet, dass** es einen Schritt des Mischens von
A1) mindestens einem Aldehyd der Formel W: 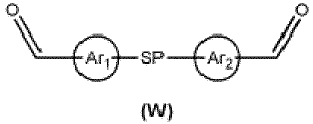 in der:
- jede Gruppe Ar₁ und Ar₂ unabhängig voneinander für einen gegebenenfalls substituierten aromatischen Kern steht,
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt; und
A2) mindestens einem Derivat eines aromatischen Polyphenols mit mindestens einem aromatischen Kern, der mindestens zwei -O-Z-Gruppen in meta-Position zueinander trägt, wobei die beiden ortho-Positionen mindestens einer der -O-Z-Gruppen unsubstituiert sind, wobei Z von Wasserstoff verschieden ist,
umfasst.

55. Verfahren nach dem vorhergehenden Anspruch, wobei der Aldehyd die Formel **W1** aufweist: 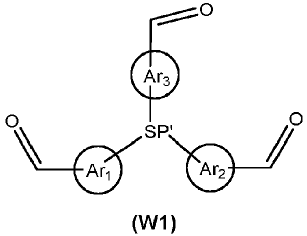 in der:
- jede Gruppe Ar₁, Ar₂, Ar₃ für einen gegebenenfalls substituierten aromatischen Kern steht;
- SP' die Gruppen Ar₁, Ar₂ und Ar₃ miteinander verbindet, wobei SP' die Gruppen Ar₁, Ar₂ und Ar₃ paarweise um mindestens 2 kovalente Bindungen trennt.

56. Verfahren nach Anspruch 54 oder 55, wobei der Aldehyd die Formel **W2** aufweist: 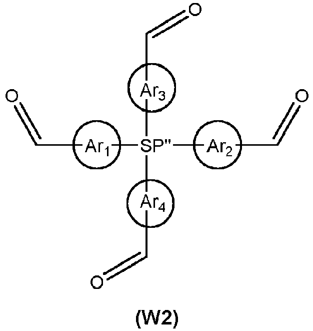 in der:
- jede Gruppe Ar₁, Ar₂, Ar₃ und Ar₄ für einen gegebenenfalls substituierten aromatischen Kern steht;
- SP" die Gruppen Ar₁, Ar₂, Ar₃ und Ar₄ miteinander verbindet, wobei SP" die Gruppen Ar₁, Ar₂, Ar₃ und Ar₄ paarweise um mindestens 2 kovalente Bindungen trennt.

57. Verfahren zur Herstellung einer Kautschukzusammensetzung in gehärtetem Zustand, **dadurch gekennzeichnet, dass** es Folgendes umfasst:
- einen Schritt des Herstellens einer Kautschukzusammensetzung in rohem Zustand, der einen Schritt des Mischens von
A1) mindestens einem Aldehyd der Formel **W:** 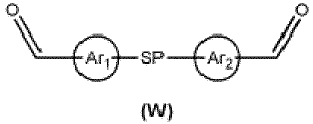 in der:
∘ jede Gruppe Ar₁ und Ar₂ unabhängig voneinander für einen gegebenenfalls substituierten aromatischen Kern steht,
o SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt; und
A2) mindestens einem Derivat eines aromatischen Polyphenols mit mindestens einem aromatischen Kern, der mindestens zwei -O-Z-Gruppen in meta-Position zueinander trägt, wobei die beiden ortho-Positionen mindestens einer der -O-Z-Gruppen unsubstituiert sind, wobei Z von Wasserstoff verschieden ist,
umfasst,
- dann einen Schritt des Formens der Kautschukzusammensetzung in rohem Zustand,
- dann einen Schritt des Vernetzens der Kautschukzusammensetzung, bei dem ein Harz auf Basis des Derivats eines aromatischen Polyphenols A2 und des Aldehyds A1 vernetzt wird.

58. Verfahren nach dem vorhergehenden Anspruch, wobei der Aldehyd die Formel **W1** aufweist: 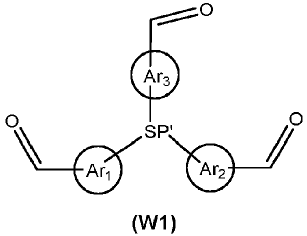 in der:
∘ jede Gruppe Ar₁, Ar₂, Ar₃ für einen gegebenenfalls substituierten aromatischen Kern steht;
∘ SP' die Gruppen Ar₁, Ar₂ und Ar₃ miteinander verbindet, wobei SP' die Gruppen Ar₁, Ar₂ und Ar₃ paarweise um mindestens 2 kovalente Bindungen trennt.

59. Verfahren nach Anspruch 57 oder 58, wobei der Aldehyd die Formel **W2** aufweist: 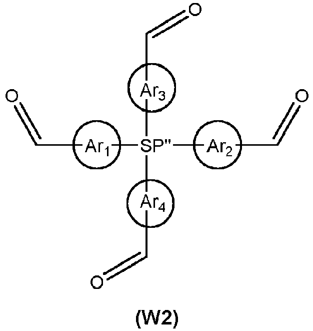 in der:
∘ jede Gruppe Ar₁, Ar₂, Ar₃ und Ar₄ für einen gegebenenfalls substituierten aromatischen Kern steht;
∘ SP" die Gruppen Ar₁, Ar₂, Ar₃ und Ar₄ miteinander verbindet, wobei SP" die Gruppen Ar₁, Ar₂, Ar₃ und Ar₄ paarweise um mindestens 2 kovalente Bindungen trennt.

60. Verwendung eines Aldehyds der Formel **W:** 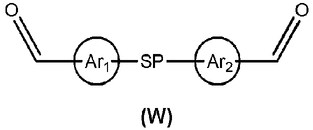 in der:
- jede Gruppe Ar₁ und Ar₂ unabhängig voneinander für einen gegebenenfalls substituierten aromatischen Kern steht,
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt,
in einer Kautschukzusammensetzung, die mindestens ein Phenol-Aldehyd-Harz auf Basis von mindestens einem aromatischen Polyphenol A2) gemäß Anspruch 1 und mindestens einem Aldehyd umfasst, zur Erhöhung der Steifigkeit der Kautschukzusammensetzung.

61. Verwendung nach dem vorhergehenden Anspruch, wobei der Aldehyd die Formel **W1** aufweist: 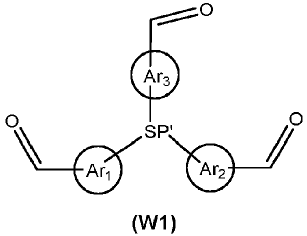 in der:
- jede Gruppe Ar₁, Ar₂, Ar₃ für einen gegebenenfalls substituierten aromatischen Kern steht;
- SP' die Gruppen Ar₁, Ar₂ und Ar₃ miteinander verbindet, wobei SP' die Gruppen Ar₁, Ar₂ und Ar₃ paarweise um mindestens 2 kovalente Bindungen trennt.

62. Verwendung nach Anspruch 60 oder 61, wobei der Aldehyd die Formel **W2** aufweist: 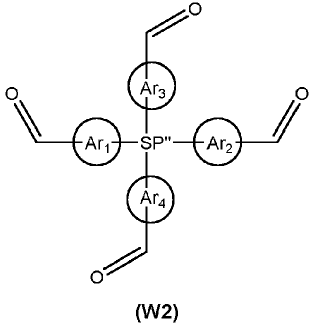 in der:
- jede Gruppe Ar₁, Ar₂, Ar₃ und Ar₄ für einen gegebenenfalls substituierten aromatischen Kern steht;
- SP" die Gruppen Ar₁, Ar₂, Ar₃ und Ar₄ miteinander verbindet, wobei SP" die Gruppen Ar₁, Ar₂, Ar₃ und Ar₄ paarweise um mindestens 2 kovalente Bindungen trennt.

63. Verwendung eines Aldehyds der Formel **W:** 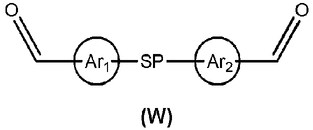 in der:
- jede Gruppe Ar₁ und Ar₂ unabhängig voneinander für einen gegebenenfalls substituierten aromatischen Kern steht,
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt,
zur Erhöhung der Fließfähigkeit einer Kautschukzusammensetzung, die mindestens ein Phenol-Aldehyd-Harz auf Basis von mindestens einem aromatischen Polyphenol A2) gemäß Anspruch 1 und mindestens einem Aldehyd umfasst.

64. Verwendung nach dem vorhergehenden Anspruch, wobei der Aldehyd die Formel **W1** aufweist: 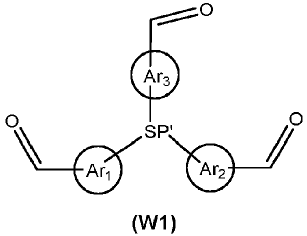 in der:
- jede Gruppe Ar₁, Ar₂, Ar₃ für einen gegebenenfalls substituierten aromatischen Kern steht;
- SP' die Gruppen Ar₁, Ar₂ und Ar₃ miteinander verbindet, wobei SP' die Gruppen Ar₁, Ar₂ und Ar₃ paarweise um mindestens 2 kovalente Bindungen trennt.

65. Verwendung nach Anspruch 63 oder 64, wobei der Aldehyd die Formel **W2** aufweist: 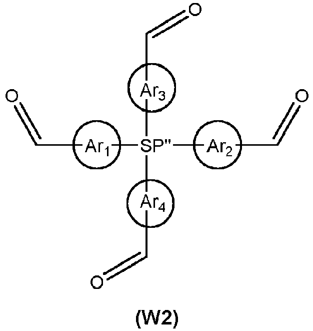 in der:
- jede Gruppe Ar₁, Ar₂, Ar₃ und Ar₄ für einen gegebenenfalls substituierten aromatischen Kern steht;
- SP" die Gruppen Ar₁, Ar₂, Ar₃ und Ar₄ miteinander verbindet, wobei SP" die Gruppen Ar₁, Ar₂, Ar₃ und Ar₄ paarweise um mindestens 2 kovalente Bindungen trennt.

66. Verwendung eines Aldehyds der Formel **W:** 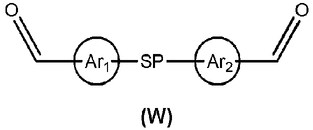 in der:
- jede Gruppe Ar₁ und Ar₂ unabhängig voneinander für einen gegebenenfalls substituierten aromatischen Kern steht,
- SP für eine Verbindungsgruppe steht, die mindestens die Gruppen Ar₁ und Ar₂ miteinander verbindet, wobei SP die Gruppen Ar₁ und Ar₂ durch mindestens 2 kovalente Bindungen trennt,
zur Aufrechterhaltung der Steifigkeit bei Erhöhung der Temperatur einer Kautschukzusammensetzung, die mindestens ein Phenol-Aldehyd-Harz auf Basis von mindestens einem aromatischen Polyphenol A2) gemäß Anspruch 1 und mindestens einem Aldehyd umfasst.

67. Verwendung nach dem vorhergehenden Anspruch, wobei der Aldehyd die Formel **W1** aufweist: 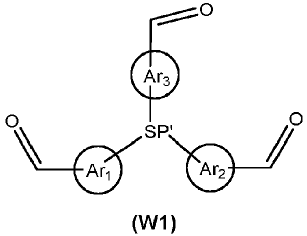 in der:
- jede Gruppe Ar₁, Ar₂, Ar₃ für einen gegebenenfalls substituierten aromatischen Kern steht;
- SP' die Gruppen Ar₁, Ar₂ und Ar₃ miteinander verbindet, wobei SP' die Gruppen Ar₁, Ar₂ und Ar₃ paarweise um mindestens 2 kovalente Bindungen trennt.

68. Verwendung nach Anspruch 66 oder 67, wobei der Aldehyd die Formel **W2** aufweist: 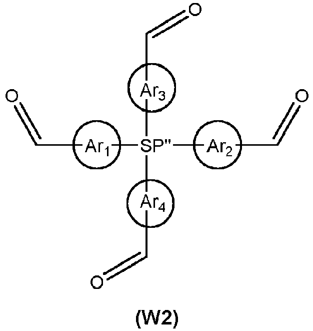 in der:
- jede Gruppe Ar₁, Ar₂, Ar₃ und Ar₄ für einen gegebenenfalls substituierten aromatischen Kern steht;
- SP" die Gruppen Ar₁, Ar₂, Ar₃ und Ar₄ miteinander verbindet, wobei SP" die Gruppen Ar₁, Ar₂, Ar₃ und Ar₄ paarweise um mindestens 2 kovalente Bindungen trennt.

69. Kautschukverbundwerkstoff, der mit mindestens einem in einer Kautschukzusammensetzung eingebetteten Verstärkungselement verstärkt ist, **dadurch gekennzeichnet, dass** die Kautschukzusammensetzung einem der Ansprüche 1 bis 53 entspricht.

70. Reifen (1), **dadurch gekennzeichnet, dass** er eine Kautschukzusammensetzung nach einem der Ansprüche 1 bis 53 oder einen Kautschukverbundwerkstoff nach dem vorhergehenden Anspruch umfasst.

## Claims

1. Rubber composition, **characterized in that** it comprises at least one resin based:
A1) on at least one aldehyde of formula W: 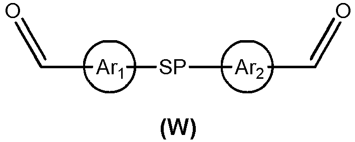 in which:
- each Ar₁ and Ar₂ group represents, independently of one another, an optionally substituted aromatic nucleus;
- SP is a connecting group which connects together at least the Ar₁ and Ar₂ groups, SP separating the Ar₁ and Ar₂ groups by at least 2 covalent bonds; and
A2) on at least one derivative of an aromatic polyphenol comprising at least one aromatic nucleus bearing at least two -O-Z groups in the meta position with respect to one another, the two positions ortho to at least one of the -O-Z groups being unsubstituted, Z being other than hydrogen.

2. Composition according to the preceding claim, in which SP separates the Ar₁ and Ar₂ groups by a number of covalent bonds of less than or equal to 150, preferably of less than or equal to 100 and more preferably of less than or equal to 75.

3. Composition according to either one of the preceding claims, in which SP represents an at least divalent radical selected from the group consisting of a hydrocarbon radical and a substituted hydrocarbon radical.

4. Composition according to any one of the preceding claims, in which SP separates the Ar₁ and Ar₂ groups by a number of covalent bonds of greater than or equal to 3, preferably of greater than or equal to 4 and more preferably of greater than or equal to 5.

5. Composition according to any one of Claims 1 to 4, in which SP separates the Ar₁ and Ar₂ groups by a number of covalent bonds of less than or equal to 20, preferably of less than or equal to 15.

6. Composition according to any one of Claims 1 to 4, in which SP separates the Ar₁ and Ar₂ groups by a number of covalent bonds strictly of greater than 15.

7. Composition according to any one of Claims 1 to 6, in which the remainder of each aromatic nucleus Ar₁ and Ar₂ is unsubstituted.

8. Composition according to any one of Claims 1 to 6, in which each aromatic nucleus Ar₁ and Ar₂ is substituted respectively by at least one K₁ and K₂ group representing, independently of one another, a monovalent hydrocarbon radical and a substituted monovalent hydrocarbon radical, preferably each K₁ and K₂ group representing, independently of one another, a monovalent alkyl radical or a monovalent O-alkyl radical.

9. Composition according to any one of the preceding claims, in which each aromatic nucleus Ar₁ and Ar₂ is a benzene nucleus.

10. Composition according to the preceding claim, in which the SP group and each CHO group are located in the meta position with respect to one another on each aromatic nucleus Ar₁ and Ar₂.

11. Composition according to the preceding claim, in which the aldehyde is of formula **W1:** 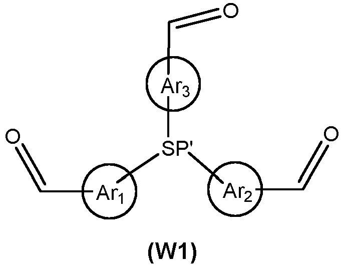 in which:
- each Ar₁, Ar₂ and Ar₃ group represents an optionally substituted aromatic nucleus;
- SP' connects the Ar₁, Ar₂ and Ar₃ groups together, SP' separating, in pairs, the Ar₁, Ar₂ and Ar₃ groups by at least 2 covalent bonds.

12. Composition according to the preceding claim, in which SP' separates, in pairs, the Ar₁, Ar₂ and Ar₃ groups by a number of covalent bonds of less than or equal to 150, preferably of less than or equal to 100 and more preferably of less than or equal to 75.

13. Composition according to Claim 11 or 12, in which SP' represents an at least trivalent radical selected from the group consisting of a hydrocarbon radical and a substituted hydrocarbon radical.

14. Composition according to any one of Claims 11 to 13, in which SP' separates, in pairs, the Ar₁, Ar₂ and Ar₃ groups by a number of covalent bonds of greater than or equal to 3, preferably of greater than or equal to 4 and more preferably of greater than or equal to 5.

15. Composition according to any one of Claims 11 to 14, in which SP' separates, in pairs, the Ar₁, Ar₂ and Ar₃ groups by a number of covalent bonds of less than or equal to 20, preferably of less than or equal to 15.

16. Composition according to any one of Claims 11 to 14, in which SP' separates, in pairs, the Ar₁, Ar₂ and Ar₃ groups by a number of covalent bonds strictly of greater than 15.

17. Composition according to any one of Claims 11 to 16, in which the remainder of each aromatic nucleus Ar₁, Ar₂ and Ar₃ is unsubstituted.

18. Composition according to any one of Claims 11 to 16, in which each aromatic nucleus Ar₁, Ar₂ and Ar₃ is substituted respectively by at least one K₁, K₂ and K₃ group representing, independently of one another, a monovalent hydrocarbon radical and a substituted monovalent hydrocarbon radical, preferably each K₁, K₂ and K₃ group representing, independently of one another, a monovalent alkyl radical or a monovalent O-alkyl radical.

19. Composition according to any one of Claims 11 to 18, in which each aromatic nucleus Ar₁, Ar₂ and Ar₃ is a benzene nucleus.

20. Composition according to the preceding claim, in which the SP' group and each CHO group are located in the meta position with respect to one another on each aromatic nucleus Ar₁, Ar₂ and Ar₃.

21. Composition according to any one of the preceding claims, in which the aldehyde is of formula **W2:** 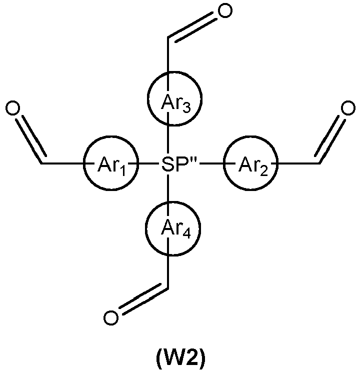 in which:
- each Ar₁, Ar₂, Ar₃ and Ar₄ group represents, independently of one another, an optionally substituted aromatic nucleus;
- SP" connects the Ar₁, Ar₂, Ar₃ and Ar₄ groups together, SP" separating, in pairs, the Ar₁, Ar₂, Ar₃ and Ar₄ groups by at least 2 covalent bonds.

22. Composition according to the preceding claim, in which SP" separates, in pairs, the Ar₁, Ar₂, Ar₃ and Ar₄ groups by a number of covalent bonds of less than or equal to 150, preferably of less than or equal to 100 and more preferably of less than or equal to 75.

23. Composition according to either one of Claims 21 and 22, in which SP" represents an at least tetravalent radical selected from the group consisting of a hydrocarbon radical and a substituted hydrocarbon radical.

24. Composition according to any one of Claims 21 to 23, in which SP" separates, in pairs, the Ar₁, Ar₂, Ar₃ and Ar₄ groups by a number of covalent bonds of greater than or equal to 3, preferably of greater than or equal to 4 and more preferably of greater than or equal to 5.

25. Composition according to any one of Claims 21 to 24, in which SP" separates, in pairs, the Ar₁, Ar₂, Ar₃ and Ar₄ groups by a number of covalent bonds of less than or equal to 20, preferably of less than or equal to 15.

26. Composition according to any one of Claims 21 to 24, in which SP" separates, in pairs, the Ar₁, Ar₂, Ar₃ and Ar₄ groups by a number of covalent bonds strictly of greater than 15.

27. Composition according to any one of Claims 21 to 26, in which the remainder of each aromatic nucleus Ar₁, Ar₂, Ar₃ and Ar₄ is unsubstituted.

28. Composition according to any one of Claims 21 to 26, in which each aromatic nucleus Ar₁, Ar₂, Ar₃ and Ar₄ is substituted respectively by at least one K₁, K₂, K₃ and K₄ group representing, independently one another, a monovalent hydrocarbon radical and a substituted monovalent hydrocarbon radical, preferably each K₁, K₂, K₃ and K₄ group representing, independently of one another, a monovalent alkyl radical or a monovalent O-alkyl radical.

29. Composition according to any one of Claims 21 to 28, in which each aromatic nucleus Ar₁, Ar₂, Ar₃ and Ar₄ is a benzene nucleus.

30. Composition according to the preceding claim, in which the SP" group and each CHO group are located in the meta position with respect to one another on each aromatic nucleus Ar₁, Ar₂, Ar₃ and Ar₄.

31. Composition according to any one of the preceding claims, in which the molar mass of the aldehyde of formula **W** is less than or equal to 10 000 g.mol⁻¹, preferably less than or equal to 5000 g.mol⁻¹, more preferably less than or equal to 2000 g.mol⁻¹ and more preferably still less than or equal to 500 g.mol⁻¹.

32. Composition according to any one of Claims 1 to 10, in which the aldehyde is of formula **W3:** 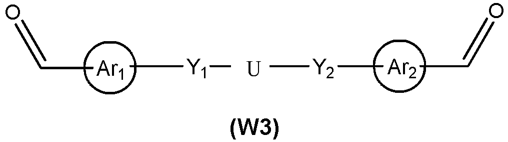 in which Y₁-U-Y₂ represents a divalent radical:
- with Y₁ and Y₂ each representing, independently of one another, a group selected from the group consisting of oxygen, a CH₂ group, a C=O group, an S=O group and an SO₂ group, preferably from the group consisting of oxygen, an S=O group and an SO₂ group, and more preferably Y₁ and Y₂ each representing oxygen; and
- U represents a divalent radical selected from the group consisting of a hydrocarbon radical and a substituted hydrocarbon radical.

33. Composition according to any one of Claims 1 to 31, in which SP represents a radical selected from the group consisting of polyester, polyether, polydiene, polyalkylene and polysilicone radicals and the combinations of these radicals, preferably from the group consisting of polyether and polysilicone radicals and the combinations of these radicals.

34. Composition according to Claim 33, in which the aldehyde is of formula **W4:** 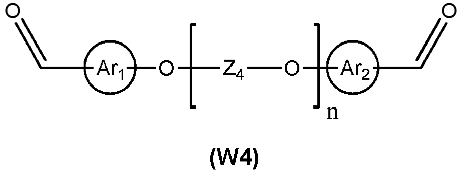 in which n is greater than or equal to 1 and preferably greater than or equal to 2 and Z₄ represents a divalent radical selected from the group consisting of a hydrocarbon radical and a substituted hydrocarbon radical.

35. Composition according to Claim 33, in which the aldehyde is of formula **W5:** 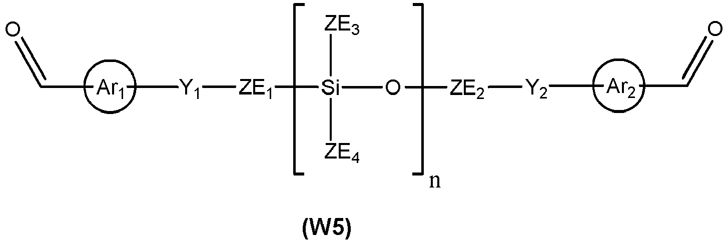 in which:
- n is greater than or equal to 1 and preferably greater than or equal to 2;
- Y₁ and Y₂ each represent, independently of one another, a group selected from the group consisting of oxygen, a CH₂ group, a C=O group, an S=O group and an SO₂ group, preferably from the group consisting of oxygen, an S=O group and an SO₂ group, and more preferably Y₁ and Y₂ each represent oxygen;
- each ZE₁ and ZE₂ radical represents, independently of one another, a divalent radical selected from the group consisting of a hydrocarbon radical and a substituted hydrocarbon radical; and
- each ZE₃ and ZE₄ radical represents, independently of one another, a monovalent radical selected from the group consisting of a hydrocarbon radical and a substituted hydrocarbon radical.

36. Composition according to the preceding claim, in which each ZE₃ and ZE₄ radical represents, independently of one another, a monovalent radical selected from the group consisting of alkyl, aryl, arylalkyl, alkylaryl, cycloalkyl and alkenyl radicals, and more preferably each ZE₃ and ZE₄ radical represents a monovalent alkyl radical.

37. Composition according to any one of the preceding claims, in which the aromatic nucleus of the derivative of the aromatic polyphenol bears three -O-Z groups in the meta position with respect to one another.

38. Composition according to any one of the preceding claims, in which the two positions ortho to each -O-Z group are unsubstituted.

39. Composition according to any one of the preceding claims, in which the remainder of the aromatic nucleus of the derivative of the aromatic polyphenol is unsubstituted.

40. Composition according to any one of the preceding claims, in which the derivative of the aromatic polyphenol comprises several aromatic nuclei, at least two of them each bearing at least two -O-Z groups in the meta position with respect to one another, the two positions ortho to at least one of the -O-Z groups of at least one aromatic nucleus being unsubstituted.

41. Composition according to any one of the preceding claims, in which each aromatic nucleus of the derivative of the aromatic polyphenol is a benzene nucleus.

42. Composition according to any one of the preceding claims, in which the derivative of the aromatic polyphenol is selected from the group consisting of derivatives of resorcinol, of phloroglucinol, of 2,2',4,4'-tetrahydroxydiphenyl sulfide, of 2,2',4,4'-tetrahydroxybenzophenone and the mixtures of these compounds.

43. Composition according to any one of the preceding claims, in which each -O-Z group is selected from the group consisting of the -O-Si(R₁R₂R₃), -O-C((=O)(R₄)) and -O-C((=O)(N(R₅R₆))) groups in which each R₁, R₂, R₃ and R₄ group represents, independently of one another, a hydrocarbon radical or a substituted hydrocarbon radical and each R₅ and R₆ group represents, independently of one another, hydrogen, a hydrocarbon radical or a substituted hydrocarbon radical.

44. Composition according to any one of Claims 1 to 43, in which each -O-Z group represents an -O-Si(R₁R₂R₃) group with R₁, R₂ and R₃ representing, independently of one another, a radical selected from the group consisting of alkyl, aryl, arylalkyl, alkylaryl, cycloalkyl and alkenyl radicals.

45. Composition according to any one of Claims 1 to 43, in which each -O-Z group represents an -O-C((=O)(R₄)) group with R₄ representing a radical selected from the group consisting of alkyl, aryl, arylalkyl, alkylaryl, cycloalkyl and alkenyl radicals.

46. Composition according to any one of Claims 1 to 43, in which each -O-Z group represents an -O-C((=O)(N(R₅R₆))) group with R₅ and R₆ representing, independently of one another, a radical selected from the group consisting of alkyl, aryl, arylalkyl, alkylaryl, cycloalkyl and alkenyl radicals and hydrogen.

47. Composition according to any one of Claims 1 to 46, in which the derivative of the aromatic polyphenol is selected from the group consisting of derivatives of resorcinol, of phloroglucinol, of 2,2',4,4'-tetrahydroxydiphenyl sulfide, of 2,2',4,4'-tetrahydroxybenzophenone and the mixtures of these compounds.

48. Composition according to any one of Claims 1 to 46, in which the derivative of aromatic polyphenol is a pre-condensed resin based:
- on at least one aromatic polyphenol comprising at least one aromatic nucleus bearing at least two hydroxyl functional groups in the meta position with respect to one another, the two positions ortho to at least one of the hydroxyl functional groups being unsubstituted; and
- on at least one compound capable of reacting with the said aromatic polyphenol comprising at least one aldehyde functional group and/or on at least one compound capable of reacting with the said aromatic polyphenol comprising at least two hydroxymethyl functional groups borne by an aromatic nucleus,
the hydroxyl functional groups of the pre-condensed resin which have remained reactive on conclusion of the condensation of the pre-condensed resin being substituted by -O-Z groups.

49. Composition according to any one of the preceding claims, comprising a diene elastomer selected from the group consisting of polybutadienes, synthetic polyisoprenes, natural rubber, butadiene copolymers, isoprene copolymers and the mixtures of these elastomers.

50. Composition according to any one of the preceding claims, comprising a residue obtained from the Z radical of each -O-Z group.

51. Rubber composition, **characterized in that** it comprises:
A1) at least one aldehyde of formula **W:** 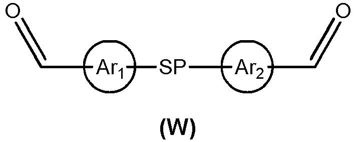 in which:
- each Ar₁ and Ar₂ group represents, independently of one another, an optionally substituted aromatic nucleus;
SP is a connecting group which connects together at least the Ar₁ and Ar₂ groups, SP separating the Ar₁ and Ar₂ groups by at least 2 covalent bonds; and
A2) at least one derivative of an aromatic polyphenol comprising at least one aromatic nucleus bearing at least two -O-Z groups in the meta position with respect to one another, the two positions ortho to at least one of the -O-Z groups being unsubstituted, Z being other than hydrogen.

52. Composition according to the preceding claim, in which the aldehyde is of formula **W1:** 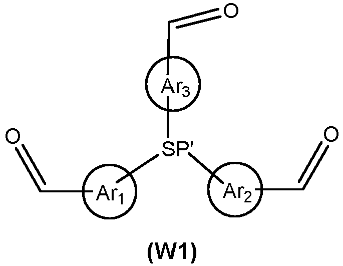 in which:
- each Ar₁, Ar₂ and Ar₃ group represents an optionally substituted aromatic nucleus;
- SP' connects the Ar₁, Ar₂ and Ar₃ groups together, SP' separating, in pairs, the Ar₁, Ar₂ and Ar₃ groups by at least 2 covalent bonds.

53. Composition according to Claim 51 or 52, in which the aldehyde is of formula **W2:** 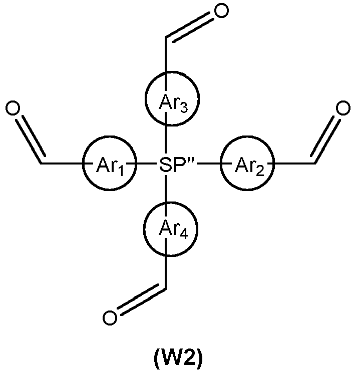 in which:
- each Ar₁, Ar₂, Ar₃ and Ar₄ group represents, independently of one another, an optionally substituted aromatic nucleus;
- SP" connects the Ar₁, Ar₂, Ar₃ and Ar₄ groups together, SP" separating, in pairs, the Ar₁, Ar₂, Ar₃ and Ar₄ groups by at least 2 covalent bonds.

54. Process for the manufacture of a rubber composition in the raw state, **characterized in that** it comprises a stage of mixing:
A1) at least one aldehyde of formula **W:** 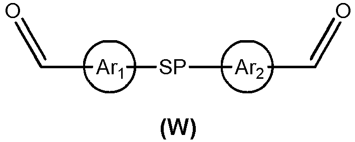 in which:
- each Ar₁ and Ar₂ group represents, independently of one another, an optionally substituted aromatic nucleus;
- SP is a connecting group which connects together at least the Ar₁ and Ar₂ groups, SP separating the Ar₁ and Ar₂ groups by at least 2 covalent bonds; and
A2) at least one derivative of an aromatic polyphenol comprising at least one aromatic nucleus bearing at least two -O-Z groups in the meta position with respect to one another, the two positions ortho to at least one of the -O-Z groups being unsubstituted, Z being other than hydrogen.

55. Process according to the preceding claim, in which the aldehyde is of formula **W1:** 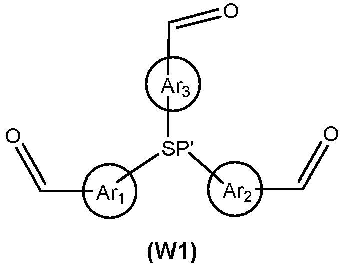 in which:
- each Ar₁, Ar₂ and Ar₃ group represents an optionally substituted aromatic nucleus;
- SP' connects the Ar₁, Ar₂ and Ar₃ groups together, SP' separating, in pairs, the Ar₁, Ar₂ and Ar₃ groups by at least 2 covalent bonds.

56. Process according to Claim 54 or 55, in which the aldehyde is of formula **W2:** 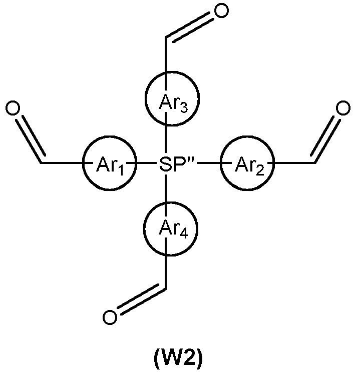 in which:
- each Ar₁, Ar₂, Ar₃ and Ar₄ group represents, independently of one another, an optionally substituted aromatic nucleus;
- SP" connects the Ar₁, Ar₂, Ar₃ and Ar₄ groups together, SP" separating, in pairs, the Ar₁, Ar₂, Ar₃ and Ar₄ groups by at least 2 covalent bonds.

57. Process for the manufacture of a rubber composition in the cured state, **characterized in that** it comprises:
- a stage of manufacture of a rubber composition in the raw state comprising a stage of mixing:
A1) at least one aldehyde of formula **W:** 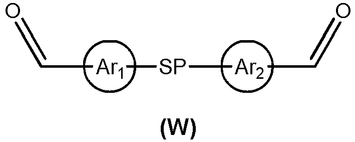 in which:
o each Ar₁ and Ar₂ group represents, independently of one another, an optionally substituted aromatic nucleus;
o SP is a connecting group which connects together at least the Ar₁ and Ar₂ groups, SP separating the Ar₁ and Ar₂ groups by at least 2 covalent bonds; and
A2) at least one derivative of an aromatic polyphenol comprising at least one aromatic nucleus bearing at least two -O-Z groups in the meta position with respect to one another, the two positions ortho to at least one of the -O-Z groups being unsubstituted, Z being other than hydrogen,
- then, a stage of shaping the rubber composition in the raw state,
- then, a stage of crosslinking the rubber composition during which a resin based on the derivative of aromatic polyphenol A2 and on the aldehyde A1 is crosslinked.

58. Process according to the preceding claim, in which the aldehyde is of formula W1: 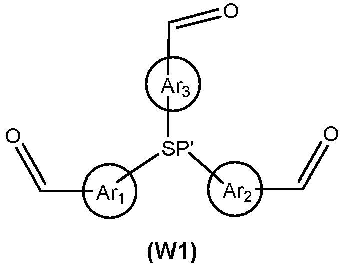 in which:
o each Ar₁, Ar₂ and Ar₃ group represents an optionally substituted aromatic nucleus;
o SP' connects the Ar₁, Ar₂ and Ar₃ groups together, SP' separating, in pairs, the Ar₁, Ar₂ and Ar₃ groups by at least 2 covalent bonds.

59. Process according to Claim 57 or 58, in which the aldehyde is of formula W2: 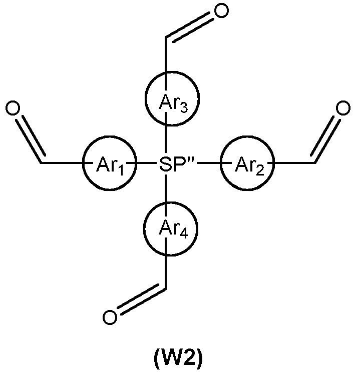 in which:
o each Ar₁, Ar₂, Ar₃ and Ar₄ group represents, independently of one another, an optionally substituted aromatic nucleus;
o SP" connects the Ar₁, Ar₂, Ar₃ and Ar₄ groups together, SP" separating, in pairs, the Ar₁, Ar₂, Ar₃ and Ar₄ groups by at least 2 covalent bonds.

60. Use of an aldehyde of formula W: 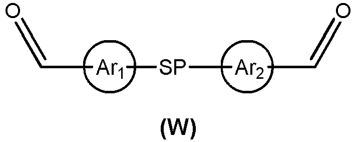 in which:
- each Ar₁ and Ar₂ group represents, independently of one another, an optionally substituted aromatic nucleus; and
- SP is a connecting group which connects together at least the Ar₁ and Ar₂ groups, SP separating the Ar₁ and Ar₂ groups by at least 2 covalent bonds,
in a rubber composition comprising a phenol-aldehyde resin based on at least one aromatic polyphenol A2) as defined in claim 1 and on at least the aldehyde for increasing the stiffness of the rubber composition.

61. Use according to the preceding claim, in which the aldehyde is of formula **W1:** 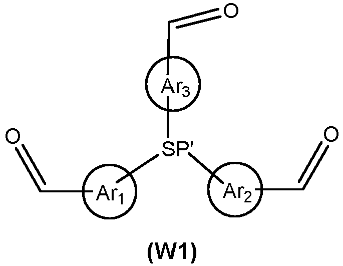 in which:
- each Ar₁, Ar₂ and Ar₃ group represents an optionally substituted aromatic nucleus;
- SP' connects the Ar₁, Ar₂ and Ar₃ groups together, SP' separating, in pairs, the Ar₁, Ar₂ and Ar₃ groups by at least 2 covalent bonds.

62. Use according to Claim 60 or 61, in which the aldehyde is of formula **W2:** 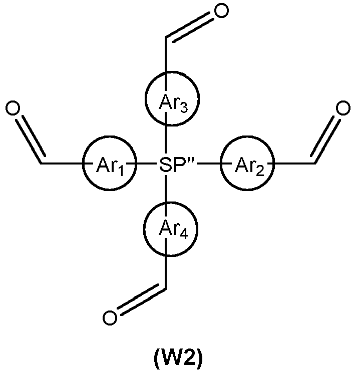 in which:
- each Ar₁, Ar₂, Ar₃ and Ar₄ group represents, independently of one another, an optionally substituted aromatic nucleus;
- SP" connects the Ar₁, Ar₂, Ar₃ and Ar₄ groups together, SP" separating, in pairs, the Ar₁, Ar₂, Ar₃ and Ar₄ groups by at least 2 covalent bonds.

63. Use of the aldehyde of formula **W:** 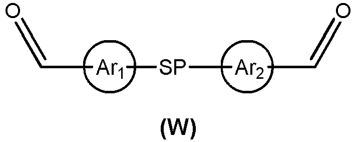 in which:
- each Ar₁ and Ar₂ group represents, independently of one another, an optionally substituted aromatic nucleus; and
- SP is a connecting group which connects together at least the Ar₁ and Ar₂ groups, SP separating the Ar₁ and Ar₂ groups by at least 2 covalent bonds,
for increasing the fluidity in the raw state of a rubber composition comprising a phenol-aldehyde resin based on at least one aromatic polyphenol A2) as defined in claim 1 and on at least the aldehyde.

64. Use according to the preceding claim, in which the aldehyde is of formula **W1:** 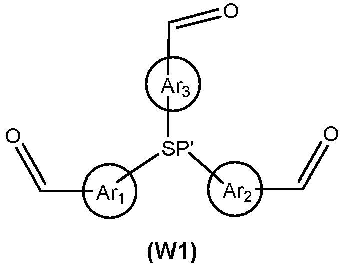 in which:
- each Ar₁, Ar₂ and Ar₃ group represents an optionally substituted aromatic nucleus;
- SP' connects the Ar₁, Ar₂ and Ar₃ groups together, SP' separating, in pairs, the Ar₁, Ar₂ and Ar₃ groups by at least 2 covalent bonds.

65. Use according to Claim 63 or 64, in which the aldehyde is of formula **W2:** 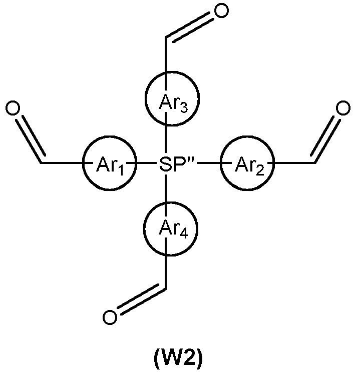 in which:
- each Ar₁, Ar₂, Ar₃ and Ar₄ group represents, independently of one another, an optionally substituted aromatic nucleus;
- SP" connects the Ar₁, Ar₂, Ar₃ and Ar₄ groups together, SP" separating, in pairs, the Ar₁, Ar₂, Ar₃ and Ar₄ groups by at least 2 covalent bonds.

66. Use of the aldehyde of formula **W:** 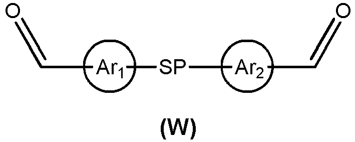 in which:
- each Ar₁ and Ar₂ group represents, independently of one another, an optionally substituted aromatic nucleus; and
- SP is a connecting group which connects together at least the Ar₁ and Ar₂ groups, SP separating the Ar₁ and Ar₂ groups by at least 2 covalent bonds,
for maintaining the stiffness with the increase in temperature of a rubber composition comprising a phenol-aldehyde resin based on at least one aromatic polyphenol A2) as defined in claim 1 and on at least the aldehyde.

67. Use according to the preceding claim, in which the aldehyde is of formula **W1:** 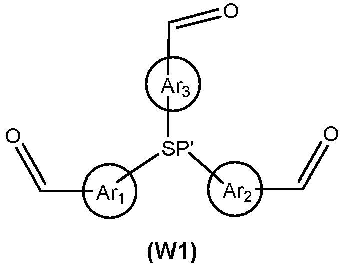 in which:
- each Ar₁, Ar₂ and Ar₃ group represents an optionally substituted aromatic nucleus;
- SP' connects the Ar₁, Ar₂ and Ar₃ groups together, SP' separating, in pairs, the Ar₁, Ar₂ and Ar₃ groups by at least 2 covalent bonds.

68. Use according to Claim 66 or 67, in which the aldehyde is of formula **W2:** 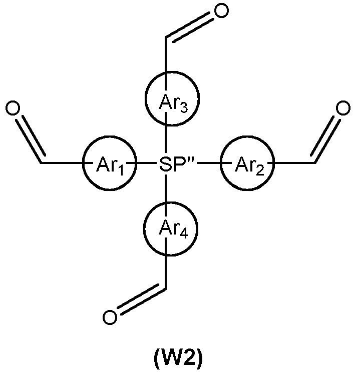 in which:
- each Ar₁, Ar₂, Ar₃ and Ar₄ group represents, independently of one another, an optionally substituted aromatic nucleus;
- SP" connects the Ar₁, Ar₂, Ar₃ and Ar₄ groups together, SP" separating, in pairs, the Ar₁, Ar₂, Ar₃ and Ar₄ groups by at least 2 covalent bonds.

69. Rubber composite reinforced with at least one reinforcing element embedded in a rubber composition, **characterized in that** the rubber composition is according to any one of Claims 1 to 53.

70. Tyre (1), **characterized in that** it comprises a rubber composition according to any one of Claims 1 to 53 or a rubber composite according to the preceding claim.
